(19) Europäisches Patentamt
European Patent Office
Office européen des brevets

(11) **EP 4 729 936 A1**

(12) **EUROPEAN PATENT APPLICATION**
published in accordance with Art. 153(4) EPC

(43) Date of publication:
**22.04.2026 Bulletin 2026/17**

(21) Application number: **24823475.9**

(22) Date of filing: **14.06.2024**

(51) International Patent Classification (IPC):
***G01N 30/26*** *(2006.01)* ***B01J 20/281*** *(2006.01)*
***B01J 20/283*** *(2006.01)* ***B01J 20/29*** *(2006.01)*
***G01N 30/88*** *(2006.01)*

(52) Cooperative Patent Classification (CPC):
**B01J 20/281; B01J 20/283; B01J 20/29;
G01N 30/26; G01N 30/88**

(86) International application number:
**PCT/JP2024/021733**

(87) International publication number:
**WO 2024/257862 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.06.2023 JP 2023097913**

(71) Applicant: **Daicel Corporation**
**Osaka-shi, Osaka 530-0011 (JP)**

(72) Inventors:
- **SHIBATA, Toru**
  **Tokyo 108-8230 (JP)**
- **SHINKURA, Satoshi**
  **Tokyo 108-8230 (JP)**
- **KAWAHARA, Nobuhiro**
  **Tokyo 108-8230 (JP)**
- **FUJIOKA, Yuichi**
  **Tokyo 108-8230 (JP)**
- **YAMAMOTO, Akari**
  **Tokyo 108-8230 (JP)**

(74) Representative: **Grünecker Patent- und Rechtsanwälte**
**PartG mbB**
**Leopoldstraße 4**
**80802 München (DE)**

# (54) AMINE SEPARATION METHOD

(57) The amine separation method comprises a separation step for separating amine by chromatography using a stationary phase that contains at least any of an oligosaccharide, a polysaccharide, and derivatives thereof, and using a mobile phase that contains a solvent, at least one base, and at least one prescribed acid selected from the group consisting of oxalic acid, acetic acid, formic acid, and trifluoroacetic acid. SB/SA in this amine separation method is at least 0.05 and not more than 0.95, where A is the value calculated using formula (1) for each prescribed acid present in the mobile phase, SA is the total value of the individual As calculated for the individual prescribed acids, B is the value calculated using formula (2) for the base present in the mobile phase, and SB is the total value of the individual Bs calculated for the individual bases. Formula (1): A = valence of the prescribed acid × molar concentration of the prescribed acid (mol/L); Formula (2): B = valence of the base × molar concentration of the base (mol/L)

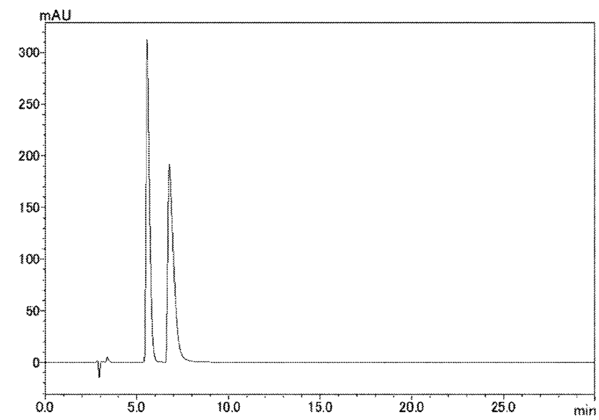


FIG. 1

EP 4 729 936 A1

## Description

### Technical Field

The present disclosure relates to a method for separating an amine.

### Background Art

It is known that a separating agent containing a polysaccharide derivative as a chiral selector (hereinafter also referred to as "polysaccharide-based CSP") is extremely effective for separating many enantiomers and substances that are difficult to separate by a general separating agent due to their similar structures, such as structural isomers. Since the adsorbent of such a polysaccharide-based CSP is generally a neutral molecule, when a sample that is ionic under analysis conditions is analyzed, the intended analysis cannot be performed in many cases because the adsorbent is hardly retained or gives a peak having a significantly wide or deformed shape for some reason, for example, because the affinity with the separating agent is low due to the solvation of the sample ion, because the adsorption of the ionic molecule causes electrostatic repulsion to reduce the load amount, or because an ionic or polar atomic group (silanol originating from silica gel used as a carrier is regarded as a problem in many cases) mixed in a very small amount in the separating agent interacts extremely strongly.

Non-Patent Literature 1 discloses a method for solving the above problem by adding an appropriate salt to a mobile phase. Specifically, it is believed to be so-called ion pair chromatography, in which a sample cation is retained on a stationary phase simultaneously with an appropriate anion.

### Citation List

### Non-Patent Literature

Non-Patent Literature 1: A. Ishikawa, T. Shibata, "Cellulosic Chiral Stationary Phase Under Reversed-Phase Condition", Journal of Liquid Chromatography, 1993, Vol. 16, 859-878

### Summary of Invention

### Technical Problem

However, in the separation operation using a mobile phase as disclosed in Non-Patent Literature 1, the separation performance of a separation target substance is not sufficient, and there is room for improvement.

An object of the present disclosure is to provide a method for separating an amine, the method having excellent separation performance.

### Solution to Problem

As a result of intensive studies, the present inventors have found that the above problems can be solved by using a stationary phase containing at least one of an oligosaccharide derivative and a polysaccharide derivative and a mobile phase containing an acid and an amine at specific concentrations, and have completed the invention according to the present disclosure. That is, the gist of the present disclosure is as described below.

[1] A method for separating an amine, the method comprising:

a separating step of separating the amine by chromatography using
a stationary phase containing at least one of an oligosaccharide, a polysaccharide, or a derivative thereof, and
a mobile phase containing: one or more specific acids selected from the group consisting of oxalic acid, acetic acid, formic acid, and trifluoroacetic acid; one or more bases; and a solvent; wherein
SB/SA is 0.05 or more and 0.95 or less, where A represents a value calculated by Formula (1) described below for each of the specific acids contained in the mobile phase, SA represents a total value of each A calculated for the specific acids, B represents a value calculated by Formula (2) described below for each of the bases contained in the mobile phase, and SB represents a total value of each B calculated for the bases;

A = valence of specific acid $\times$ molar concentration of specific acid (mol/L), Formula (1):

and

$$\text{Formula (2): B = valence of base} \times \text{molar concentration of base (mol/L).}$$

[2] The method for separating the amine according to [1], further comprising an analyzing step of analyzing the amine separated in the separating step, wherein
in the analyzing step, analysis using at least a mass spectrometer is performed.
[3] The method for separating the amine according to [1] or [2], wherein the base is one or more selected from the group consisting of ammonia, a primary amine, a secondary amine, and a tertiary amine.
[4] The method for separating the amine according to [3], wherein the base is one or more selected from the group consisting of ammonia, ethylamine, n-propylamine, 2-propylamine, dimethylamine, diethylamine, trimethylamine, triethylamine, pyrrolidine, and piperidine.
[5] The method for separating the amine according to any of [1] to [4], wherein the mobile phase contains at least oxalic acid as the specific acid.
[6] The method for separating the amine according to any of [1] to [5], wherein the at least one of the oligosaccharide, the polysaccharide, or the derivative thereof has an optically active site.
[7] The method for separating the amine according to any of [1] to [6], wherein the solvent is one or more selected from the group consisting of water, acetonitrile, ethanol, methanol, 2-propanol, hexane, heptane, THF, and liquid carbon dioxide.

Advantageous Effects of Invention

According to the present disclosure, it is possible to provide a method for separating an amine having excellent separation performance.

Brief Description of Drawings

FIG. 1 is a liquid chromatogram obtained by analysis of an amine in Example 1.
FIG. 2 is a liquid chromatogram obtained by analysis of an amine in Comparative Example 1.
FIG. 3 is a liquid chromatogram obtained by analysis of an amine in Comparative Example 2.
FIG. 4 is a liquid chromatogram obtained by analysis of an amine in Comparative Example 3.
FIG. 5 is a liquid chromatogram obtained by analysis of an amine in Example 2.
FIG. 6 is a liquid chromatogram obtained by analysis of an amine in Comparative Example 4.
FIG. 7 is a liquid chromatogram obtained by analysis of an amine in Example 3.
FIG. 8 is a liquid chromatogram obtained by analysis of an amine in Comparative Example 5.
FIG. 9 is a liquid chromatogram obtained by analysis of an amine in Example 4.
FIG. 10 is a liquid chromatogram obtained by analysis of an amine in Comparative Example 6.
FIG. 11 is a liquid chromatogram obtained by analysis of an amine in Example 5.
FIG. 12 is a liquid chromatogram obtained by analysis of an amine in Comparative Example 7.
FIG. 13 is a liquid chromatogram obtained by analysis of an amine in Example 6.
FIG. 14 is a liquid chromatogram obtained by analysis of an amine in Comparative Example 8.
FIG. 15 is a liquid chromatogram obtained by analysis of an amine in Comparative Example 9.
FIG. 16 is a liquid chromatogram obtained by analysis of an amine in Example 7.
FIG. 17 is a liquid chromatogram obtained by analysis of an amine in Comparative Example 10.
FIG. 18 is a liquid chromatogram obtained by analysis of an amine in Example 8.
FIG. 19 is a liquid chromatogram obtained by analysis of an amine in Comparative Example 11.
FIG. 20 is a liquid chromatogram obtained by analysis of an amine in Example 9.
FIG. 21 is a liquid chromatogram obtained by analysis of an amine in Example 10.
FIG. 22 is a liquid chromatogram obtained by analysis of an amine in Example 11.
FIG. 23 is a liquid chromatogram obtained by analysis of an amine in Example 12.
FIG. 24 is a liquid chromatogram obtained by analysis of an amine in Example 13.
FIG. 25 is a liquid chromatogram obtained by analysis of an amine in Example 14.
FIG. 26 is a liquid chromatogram obtained by analysis of an amine in Comparative Example 12.
FIG. 27 is a liquid chromatogram obtained by analysis of an amine in Example 15.
FIG. 28 is a liquid chromatogram obtained by analysis of an amine in Comparative Example 13.

FIG. 29 is a liquid chromatogram obtained by analysis of an amine in Example 16.
FIG. 30 is a liquid chromatogram obtained by analysis of an amine in Comparative Example 14.
FIG. 31 is a liquid chromatogram obtained by analysis of an amine in Example 17.
FIG. 32 is a liquid chromatogram obtained by analysis of an amine in Example 18.
FIG. 33 is a liquid chromatogram obtained by analysis of an amine in Example 19.
FIG. 34 shows a mass spectrum obtained by mass spectrometry of an amine in Example 20.
FIG. 35 shows a mass spectrum obtained by mass spectrometry of an amine in Example 21.
FIG. 36 shows a mass spectrum obtained by mass spectrometry of an amine in Example 22.
FIG. 37 shows a mass spectrum obtained by mass spectrometry of an amine in Example 23.
FIG. 38 shows a mass spectrum obtained by mass spectrometry of an amine in Example 24.

## Description of Embodiments

The present disclosure will be described in detail below with reference to specific embodiments. However, the configurations in embodiments, combinations thereof, and the like are merely examples, and addition, omission, substitution, and other changes of the configurations may be made as appropriate within a scope that does not depart from the spirit of the present disclosure. The present disclosure is not limited by the embodiments and is limited only by the claims.

Also, aspects disclosed in the present disclosure can be combined with any other feature disclosed herein.

In the present disclosure, when lower limit values and upper limit values of a numerical range are separately indicated, the numerical range can be a combination of any lower limit value and any upper limit value among those lower and upper limit values. In the present disclosure, when a range of numerical values or physical property values is expressed with "to" between the values, the values before and after the "to" are intended to be included in the range. In the case where a numerical range represented by "A to B", or "A or more and B or less" is described stepwise (e.g., in a preferred order), the upper limit and the lower limit of each numerical range can be freely combined.

In the present disclosure, the expression "A or B" can be read as "at least one selected from the group consisting of A and B".

## Amine Separation Method

A method for separating an amine according to one embodiment of the present disclosure (hereinafter also referred to simply as "amine separation method") includes a separation step of separating the amine by chromatography using

a stationary phase containing at least one of an oligosaccharide, a polysaccharide, or a derivative thereof, and
a mobile phase containing: one or more specific acids selected from the group consisting of oxalic acid, acetic acid, formic acid, and trifluoroacetic acid; one or more bases; and a solvent; wherein
SB/SA is 0.05 or more and 0.95 or less, where A represents a value calculated by Formula (1) described below for each of the specific acids contained in the mobile phase, SA represents the total value of each A calculated for the specific acids, B represents a value calculated by Formula (2) described below for each of the bases contained in the mobile phase, and SB represents the total value of each B calculated for the bases.

A = valence of specific acid × molar concentration of specific acid (mol/L) Formula (1):

Formula (2): B = valence of base × molar concentration of base (mol/L)

The above-mentioned amine separation method may include, in addition to the above-mentioned separation step, an analysis step of analyzing (for example, identifying) the separated amine, a quantification step of quantifying the separated amine, a step of estimating the structure of the separated amine, or a recovery step of recovering the separated amine, or the like.

The mobile phase according to the above embodiment is a mobile phase before containing an amine to be separated, and the "amine content of the mobile phase" is the amine content of the mobile phase before containing the amine to be separated.

In the present disclosure, the oligosaccharide is a sugar having 5 or more sugar residues.

In the present disclosure, the oligosaccharide and the polysaccharide can be distinguished by molecular weight, and those having a molecular weight of 3000 or less are defined as oligosaccharides, and those having a molecular weight

of more than 3000 are defined as polysaccharides.

In the present embodiment, the specific acid includes both a free acid and an acid anion, and the base includes both a free base and a cation. The acid anion and the cation may form a salt with each other or with other ions.

The present inventors have found that the separation performance of an amine is improved by using a stationary phase containing at least one of an oligosaccharide, a polysaccharide, or a derivative thereof (hereinafter, these are also collectively referred to as "oligosaccharide·polysaccharide derivative"), and a mobile phase containing one or more specific acids selected from the group consisting of oxalic acid, acetic acid, formic acid, and trifluoroacetic acid, one or more bases, and a solvent, and by further adjusting the contents of these acids and bases. With regard to the reason for this, the present inventors presume as follows.

In an environment where the mobile phase is in an acid excess state (an environment where the amount of an acid is larger than that of a base), an acid anion is generated, and the analysis target (amine) is protonated to generate an ammonium cation, and an ion pair is formed by the acid anion and the ammonium cation. Since the ion pair has weak polarity, the ion pair is adsorbed to the oligosaccharide·polysaccharide derivative having weak polarity, thereby enabling separation of the analysis target.

As a result of intensive studies, the present inventors have discovered that, by adding a base to the mobile phase at a molar concentration (content) lower than that of the acid and neutralizing a portion of the acid to convert it into a salt, the concentration of counter anions in the mobile phase can be adjusted to a desirable level, even when the acid is a weak acid.

Furthermore, the present inventors have repeatedly studied the type of acid, the contents of the acid and the amine, and the like on the basis of the above-mentioned mechanism found by the present inventors, and as a result, have found that the separation performance of the amine can be improved, specifically, the retention time of the analysis target in chromatography can be made sufficient by the configuration according to the present embodiment.

According to further intensive studies by the present inventors, in the case where the stationary phase has acidity and this causes non-specific adsorption of the sample amine, for example, in the case where the stationary phase contains silica gel as a carrier, a phenomenon called peak tailing, which is considered to be caused by the silanol group, often occurs. In such a case, according to the aspect of the present embodiment described above, it has been found that the separation performance of the amine can be improved, specifically, the peak of the chromatogram obtained by the analysis can be sharpened.

In a case where an ionic interaction occurs between the cation described above and the conjugate anion of the dissociated silanol, the peak of the chromatogram obtained by the analysis becomes broad, but the present inventors presume that in the aspect according to the present embodiment, the dissociation of the silanol is suppressed due to the presence of an excessive amount of acid, and the ionic interaction is suppressed.

In addition, in the related art, there is also a method of setting the pH of the mobile phase to be high and holding the sample amine as a neutral molecule on the nonionic stationary phase. However, when the stationary phase contains silica gel, the silica gel is dissolved under such conditions and the column is likely to deteriorate, and therefore, to prevent the pH from rising too high, a salt having a buffering action such as ammonium hydrogen carbonate is added, and a guard column that can be replaced at a lower cost than the main column is inserted before the main column, and the mobile phase flowing through the main column is saturated with the silica component, thereby taking measures to suppress elution of silica from the main column.

Meanwhile, in the aspect according to the present embodiment, since the pH is lowered by an excessive acid, it is also a great advantage that it is not necessary to take the above-mentioned measures.

In the separation of an amine, when the separation operation using the mobile phase disclosed in Non-Patent Literature 1 is applied, a nonvolatile salt having a high boiling point is added to the mobile phase, and therefore, the salt is likely to remain after the solvent in the mobile phase is evaporated, and thus, the separation performance of the amine is deteriorated.

Meanwhile, in the mobile phase in the above-mentioned present embodiment, in a case where an amine is employed as the base, a salt containing an anion of one or more specific acids selected from the group consisting of oxalic acid, acetic acid, formic acid, and trifluoroacetic acid and a cation of the amine is generated in the mobile phase, but such a salt is easily volatilized or thermally decomposed, and thus, a nonvolatile salt having a high boiling point is unlikely to remain even when the solvent is evaporated.

[Amine]

According to the separation method of the present embodiment, a mixture of a plurality of amines can be separated into individual amines, and an amine can be separated from a mixture containing the amine and a non-amine. In particular, the ability to separate amine enantiomers is of great scientific importance.

The amine to be separated is not particularly limited as long as it is a compound containing an amino group, and may be any of a primary amine, a secondary amine, and a tertiary amine. Examples of specific amines include amino acids such as alanine, cysteine, glutamic acid, methionine, leucine, tyrosine, and tryptophan; amino acid derivatives such as

esters and amides of the above amino acids; amino alcohols such as dimethylaminoethanol, propanolamine, methioninol, and norephedrine; phenylethylamine; cyclic amines such as 1-phenyl-1,2,3,4-tetrahydroisoquinoline; or other basic pharmaceuticals containing an amino group, particularly enantiomers thereof.

According to the separation method of the present embodiment, a high separation performance capable of distinguishing between molecular shapes can be achieved, and therefore a mixture of amines that are difficult to separate due to their mutually similar structures can be separated into individual amines. Examples of mixtures of amines having mutually similar structures include a mixture of chain isomers, a mixture of regioisomers, a mixture of geometric isomers, and a mixture of analogs. Furthermore, a principal feature is that a mixture of enantiomers can be separated into individual enantiomers by using, as the stationary phase, a chiral stationary phase containing an oligosaccharide·polysaccharide derivative having an optically active site.

[Stationary Phase]

The stationary phase may contain at least one of an oligosaccharide, a polysaccharide, or a derivative thereof (hereinafter, these are also collectively referred to as "oligosaccharide·polysaccharide derivative") as an adsorbent (also referred to as "separating agent"), and the aspect containing the oligosaccharide·polysaccharide derivative is not particularly limited. For example, the adsorbent to be used may be a solidified product of an oligosaccharide·polysaccharide derivative or a mixture of an oligosaccharide·polysaccharide derivative and an additional component, or an oligosaccharide·polysaccharide derivative or a mixture of an oligosaccharide·polysaccharide derivative and an additional component supported on a carrier. In the supporting, a polysaccharide or oligosaccharide derivative insolubilized by a method of providing a chemical bond with a carrier, providing a chemical bond between oligosaccharide-polysaccharide derivatives, or providing a polymer-impermeable layer on the surface of an oligosaccharide·polysaccharide derivative is particularly useful.

The shape of the stationary phase is not particularly limited, and may be, for example, a crushed amorphous shape, but is preferably a spherical shape. In this case, particles can be used for column chromatography in which the particles are packed in a column. The oligosaccharide·polysaccharide derivative itself may be granulated, but it is preferably supported on a carrier such as porous silica gel from the viewpoint of excellent efficiency, pressure resistance, and ease of use. In the case of a porous material, only the surface may be made porous, and the oligosaccharide·polysaccharide derivative may be distributed near the surface when supported (this may be referred to as "core-shell", "surface porous", "peripheral", or the like).

When the shape of the stationary phase is spherical, the diameter thereof is not particularly limited, but is preferably 0.5 to 100 μm, more preferably 0.5 to 50 μm, and further preferably 1 to 20 μm (from the viewpoint of being convenient in a current chromatography apparatus). The diameter is preferably smaller from the viewpoint of separation of an amine, but is preferably larger to reduce the flow resistance when the column is used in a large apparatus for preparative separation. In the present disclosure, the term "spherical" also includes a substantially spherical shape.

The type of the oligosaccharide·polysaccharide derivative is not particularly limited, and may be, for example, an oligosaccharide·or polysaccharide (hereinafter, these are also collectively referred to as "oligosaccharide·polysaccharide") in which a part or all of the hydroxyl groups or amino groups are substituted with a substituent. The polysaccharide derivative is obtained by, for example, reacting a part or all of the hydroxyl groups or amino groups of an oligosaccharide polysaccharide with another compound, and an example thereof is an ester of an aliphatic carboxylic acid, benzoic acid, or phenylcarbamic acid, which may further contain one or more substituents, with a part or all of hydroxyl groups of an oligosaccharide·polysaccharide. Among these, from the viewpoint of separation performance, an oligosaccharide·polysaccharide in which at least one hydrogen atom contained in a benzene ring is each independently substituted with a methyl group or a halogen atom and which is an ester of benzoic acid or phenylcarbamic acid is preferable.

One type of the oligosaccharide·polysaccharide derivative may be used alone, or two or more types thereof may be used in any combination.

The type of oligosaccharide·polysaccharide as a base of the oligosaccharide·polysaccharide derivative is not particularly limited.

The number of sugar residues of the oligosaccharide·polysaccharide is not particularly limited as long as it is 5 or more, and may be, for example, 10 or more, 20 or more, less than 1000, 500 or less, 100 or less, 75 or less, or 50 or less.

The type of monosaccharide constituting the oligosaccharide·polysaccharide is not particularly limited, and examples thereof include aldotetroses such as erythrose and threose; aldopentoses such as ribose, lyxose, xylose, and arabinose; aldohexoses such as allose, talose, gulose, glucose, altrose, mannose, galactose, and idose; ketotetroses such as erythrulose; ketopentoses such as xylose and ribulose; and ketohexoses such as psicose, fructose, sorbose, and tagatose. Among these, glucose, fructose, and glucosamine are preferable as materials that are highly pure and easily available.

One type of these monosaccharides may be used alone, or two or more types thereof may be used in combination.

More specifically, examples of the polysaccharide include amylose, amylopectin, glycogen, cellulose, curdlan, paramylon, chitin, chitosan, dextran, nigeran, agarose, carrageenan, heparin, alginic acid, hyaluronic acid, pectin, xyloglucan, xylan, glucomannan, and levan. Among these, cellulose, amylose, chitin, chitosan, curdlan, schizophyllan, agarose, and the like are preferable from the viewpoint of excellent separation performance and high purity and easy availability. Amylose and amylopectin may be used alone or in a form containing both amylose and amylopectin, such as starch.

As described above, an oligosaccharide·polysaccharide derivative having an optically active site is preferred from the viewpoint of being able to separate a mixture of enantiomers into individual enantiomers.

The amount of the oligosaccharide·polysaccharide derivative in the stationary phase is not particularly limited, and can be appropriately set with reference to a known method in which the oligosaccharide-polysaccharide derivative is used as a separating agent for the stationary phase. For example, the content of the oligosaccharide·polysaccharide derivative in the stationary phase may be 100 mass%, and when the above-mentioned carrier or the like is used, the content is preferably 5 mass% or more and 50 mass% or less, more preferably 5 mass% or more and 30 mass% or less, and further preferably 10 mass% or more and 30 mass% or less.

As described above, the aspect containing the oligosaccharide·polysaccharide derivative is not particularly limited, and the oligosaccharide·polysaccharide derivative may be used, or the oligosaccharide·polysaccharide derivative itself may be formed into particles, porous particles, or a porous monolith as necessary. Alternatively, a solidified product of the oligosaccharide·polysaccharide derivative or a mixture of the oligosaccharide·polysaccharide derivative and an additional component may be used, or a product obtained by supporting the oligosaccharide·polysaccharide derivative or a mixture of the oligosaccharide·polysaccharide derivative and an additional component on a carrier may be used. However, a product obtained by supporting the oligosaccharide·polysaccharide derivative or a mixture of the oligosaccharide·polysaccharide derivative and an additional component on a carrier is preferable, and a product obtained by supporting the oligosaccharide·polysaccharide derivative on a carrier is more preferable.

As the supporting method, a known method can be used, and physical supporting or chemical supporting may be used. As a preferred method of chemical supporting, the oligosaccharide·polysaccharide derivative can be supported on a carrier via a chemical bond, such as a covalent bond. A specific example thereof is a method in which a reactive group is introduced into the oligosaccharide·polysaccharide derivative, a raw material of the oligosaccharide·polysaccharide derivative, or an intermediate of the oligosaccharide·polysaccharide derivative, and this substituent is reacted with a reactive group present on the carrier surface. In this case, a treatment for providing a chemical bond between the oligosaccharide·polysaccharide derivatives may be performed. The reactive group present on the surface of the carrier may be a group present on the surface of the untreated carrier, or may be a group introduced to the surface of the carrier by subjecting the carrier to a surface treatment using a surface treatment agent, for example, a silane coupling agent such as 3-aminopropyltriethoxysilane or 3-glycidyloxypropyltrimethoxysilane. In another method, a pair of so-called click reaction partners are bonded to the stationary phase and the oligosaccharide·polysaccharide derivative, respectively, and reacted with each other. Alternatively, an insolubilized layer can be formed on the surface of the carrier not only by a method of forming a bond between the oligosaccharide·polysaccharide derivative and the carrier, but also by forming a so-called crosslinking bond between atomic groups including the oligosaccharide·polysaccharide derivative. Further, in the physical supporting, the oligosaccharide·polysaccharide derivative may be supported on the carrier by a method of physically adsorbing (e.g., coating) the oligosaccharide·polysaccharide derivative on the carrier by impregnating silica gel with an oligosaccharide·polysaccharide derivative solution and evaporating the solvent.

Among these methods, from the viewpoint of suppressing the dissolution of the oligosaccharide·polysaccharide derivative in the solvent, it is preferable to perform the insolubilization by a method of forming some chemical bond between the silica gel and the oligosaccharide·polysaccharide derivative skeleton, or a method of forming some chemical bond between the oligosaccharide·polysaccharide derivatives on the carrier. In order to suppress the dissolution of the oligosaccharide·polysaccharide derivative in the solvent, it is preferable to provide a chemical bond between the oligosaccharide·polysaccharide derivatives even when a carrier is not used.

The carrier is not particularly limited as long as the oligosaccharide·polysaccharide derivative can be fixed to the carrier. The carrier may be an inorganic carrier or an organic carrier, but is preferably an inorganic carrier. Examples of the inorganic carrier include silica gel, alumina, magnesia, glass, kaolin, titanium oxide, silicate, zirconia, or hydroxyapatite. Examples of the organic carrier include crosslinked polystyrene, crosslinked poly(meth)acrylamide, crosslinked poly(meth)acrylate, or polysaccharides. Hybrid silica gel obtained by copolymerizing a polyfunctional silane coupling agent can also be used for formation of silica gel. Such an organic carrier is preferably insolubilized by crosslinking using a crosslinking agent.

The form of the carrier is not particularly limited, and examples thereof include particles and a porous cylindrical body (monolith) that is housed in a column tube with a liquid-tight seal. Another example of the carrier is an inner wall of a capillary. When the separation factor is sufficiently large, a membrane-type carrier may be used and inflated in a thickness direction, or may be inflated in a plane direction for thin-layer chromatography.

In the present embodiment, the carrier is preferably silica gel. This is because silica gel excels in the above-mentioned property, i.e., separation performance, and is also hard and strong. The silica gel to be used may be a fully porous silica gel, a so-called core-shell type silica gel, or a silica gel having a chemically modified surface.

Mobile Phase

The mobile phase contains one or more specific acids selected from the group consisting of oxalic acid, acetic acid, formic acid, and trifluoroacetic acid, one or more bases, and a solvent.

The mobile phase may contain a component other than the aforementioned components as long as the separation performance is not impaired. The mobile phase is preferably a homogeneous system (single-phase system) at least under the conditions in which analysis is performed.

In the present disclosure, the term "mobile phase" means a liquid which, in chromatography such as liquid chromatography or supercritical fluid chromatography, is poured into the stationary phase together with a separation target, moves together with the separation target, and then elutes a separated substance from the stationary phase.

The content of the salt contained in the mobile phase is not particularly limited, but is preferably 0.5 mmol/L or more and 1000 mmol/L or less, more preferably 1 mmol/L or more and 200 mmol/L or less, further preferably 1 mmol/L or more and 50 mmol/L or less, and particularly preferably 1 mmol/L or more and 20 mmol/L or less, from the viewpoint of securing the desired separation performance. As described above, when mass spectrometry (MS) is employed, the content of the salt having a high boiling point is preferably low. Examples of the salt having a high boiling point include salts containing a metal ion as a cation, and salts containing a quaternary ammonium ion. Specifically, the content of the salt is preferably 5 mM or less, and it is more preferable that substantially no salt is contained (less than the detection limit).

Specific Acid

The mobile phase contains one or more specific acids selected from the group consisting of oxalic acid, acetic acid, formic acid, and trifluoroacetic acid. Among these, it is preferable that at least one or more acids selected from the group consisting of oxalic acid and trifluoroacetic acid are contained because the acids have relatively high acidity. Furthermore, in contrast to trifluoroacetic acid, which is likely to cause contamination in another analysis due to adsorption to a member of liquid chromatography or the like and requires attention to prevent fluorine contamination to the environment after disposal, it is particularly preferable that oxalic acid, which does not have such a tendency, is unlikely to adversely affect MS analysis since it is easily decomposed into carbon monoxide, carbon dioxide, and water, which have a low molecular weight, at the temperature of an MS detector, and is inexpensively obtained as a dihydrate crystal that is easy to handle without hygroscopicity or the like is at least contained as the specific acid. One type of these acids may be used alone, or a combination of any two or more types thereof may be used in any proportions. The mobile phase may contain an additional acid as long as the effects of the present disclosure are achieved.

Oxalic acid also has an advantage that it can be precipitated and separated using calcium ions when the eluate is fractionated.

It is preferable that the specific acid contained in the mobile phase is partially converted into a salt to supply a counter ion that promotes the retention of the sample ammonium on the stationary phase in ion pair chromatography, and is partially present as an acid to reliably convert the sample amine into an ammonium ion. Since the sample amine is dilute in the chromatographic conditions, it is likely to exist as an ammonium ion even when the mobile phase is nearly neutral, but this can be ensured by an excess of acid.

The content of the specific acid contained in the mobile phase (the total content in the case of using two or more types of specific acids in combination) is preferably 1 mmol/L or more, and is preferably 1000 mmol/L or less, more preferably 200 mmol/L or less, even more preferably 50 mmol/L or less, and particularly preferably 20 mmol/L or less, from the viewpoint of improving the amine separation performance.

When the content is equal to or more than the lower limit of the above range, an effect of holding the sample is substantially obtained (although a small or large effect is obtained even if the content is small, a certain concentration is required to obtain a practical effect). When the content is equal to or less than the upper limit of the above range, there is no adverse effect on detection, particularly detection by MS. That is, the content of the specific acid in the mobile phase is preferably in a range of, for example, 1 to 1000 mmol/L, 1 to 200 mmol/L, 1 to 50 mmol/L, or 1 to 20 mmol/L.

Examples of the acid other than the specific acid include methanesulfonic acid, nitric acid, phosphoric acid, and glycolic acid. From the viewpoint of hardly forming a nonvolatile salt having a high boiling point, nitric acid or an organic acid such as glycolic acid is preferable, and from the viewpoint of less corrosion of the apparatus, sulfonic acids, phosphoric acid, and organic acids are preferable. One type of these acids other than the specific acid may be used alone, or a combination of any two or more types thereof may be used in any proportions.

Base

The mobile phase contains a base. In order to ensure retention of the specific acid in ion pair chromatography in which a part of the specific acid is a conjugate anion, a base having a molar concentration lower than that of the specific acid is added to neutralize a part of the specific acid. Examples of the base include a metal, a hydroxide of quaternary ammonium, and a carbonate. The salt may be a salt of an acid weaker than the specific acid, and is preferably an amine. In the case of an amine, the compound is dissociated into a specific acid and an amine by heat and volatilized, and thus does not inhibit detection by mass spectrometry (MS). Since the mobile phase is in an acid excess environment, the base is basically present as a salt in the mobile phase.

Regarding the content of the base contained in the mobile phase (total content in a case where two or more types of bases are used in combination), from the viewpoint of improving the amine separation performance, the base is contained to satisfy a condition that SB/SA is 0.05 or more and 0.95 or less, where A represents a value calculated by Formula (1) described below for each of the specific acids contained in the mobile phase, SA represents the total value of each A calculated for the specific acids, B represents a value calculated by Formula (2) described below for each of the bases contained in the mobile phase, and SB represents the total value of each B calculated for the bases.

$$A = \text{valence of specific acid} \times \text{molar concentration of specific acid (mol/L)} \qquad \text{Formula (1):}$$

$$\text{Formula (2): } B = \text{valence of base} \times \text{molar concentration of base (mol/L)}$$

The valence of acetic acid is 1, the valence of formic acid is 1, and the valence of trifluoroacetic acid is 1. The valence of oxalic acid can be 1 or 2, but since there is a difference of 10 to the third power between the dissociation constants of the first stage and the second stage, under the conditions of the present disclosure in which the amount of the base is smaller than the number of moles of the acid (< 0.095), the second stage dissociation is estimated to occur only to a negligible extent, and thus the valence is treated as 1 in the present disclosure.

As described above, since the valence of each specific acid is 1, Formula (1) can be represented by Formula (1)' described below.

$$\text{Formula (1)': } A = \text{molar concentration of specific acid (mol/L)}$$

The SB/SA is not particularly limited as long as it is 0.05 or more and 0.95 or less, but is preferably 0.1 or more, more preferably 0.2 or more, and even more preferably 0.4 or more, from the viewpoint of being able to improve the amine separation performance, and is preferably 0.9 or less, and more preferably 0.7 or less, from the viewpoint of the acidity of the system decreasing and the possibility of not being able to completely ionize the sample amine occurring. That is, the preferable range of the content contained in the mobile phase is a range of 0.1 to 0.9, 0.2 to 0.7, or 0.4 to 0.7, for example, in the case of a monovalent acid.

For example, when the mobile phase contains $X_1$ mol/L of acetic acid (valence: 1) as the specific acid and $Y_1$ mol/L of triethylamine (valence: 1) as the base, A calculated by Formula (1) is $X_1$ mol/L (= $1 \times X_1$), and B calculated by Formula (2) is $Y_1$ mol/L (= $1 \times Y_1$). Since there is one type of acid and one type of base, SA = $X_1$ and SB = $Y_1$, and thus SB/SA = $Y_1/X_1$.

An acid having a lower degree of dissociation than the specific acid may be contained at any concentration. However, when an acid having a higher degree of dissociation than the specific acid is contained, this acid preferentially consumes the "base", and therefore, the SB/SA may be calculated by regarding (the above SB) - (valence of acid having higher degree of dissociation than specific acid contained in mobile phase) × (concentration (mol/L) of acid having higher degree of dissociation than specific acid contained in mobile phase) as SB. In the case of performing this calculation, when an acid having a higher degree of dissociation than the specific acid is a polyvalent acid, the second term is multiplied by the number of valences up to the stage where the degree of dissociation is higher than that of the "specific acid".

The degree of dissociation is the degree of dissociation in water at 25°C. This degree of dissociation is described, for example, in "pKa Data Compiled by R. Williams" published by the American Chemical Society.

Another embodiment of the present disclosure is an aspect in which the SB/SA is set in consideration of only the concentrations of the specific acid and the base. In this aspect, Formulae (1) and (2) are replaced with the following Formulae (1)" and (2)", respectively. Except for the replacement of the formulae, the conditions of the above-mentioned embodiments can be applied in the same manner.

$$\text{Formula (1)'': } A = \text{molar concentration of specific acid (mol/L)}$$

Formula (2)": B = molar concentration of base (mol/L)

Still another embodiment of the present disclosure is an aspect in which the valence of oxalic acid is treated as 1 or 2. In this aspect, the valence is 1 when oxalic acid is present as a monovalent acid, and the valence is 2 when oxalic acid is present as a divalent acid. Except for this point, the conditions of the above-mentioned embodiment can be applied in the same manner.

These two other embodiments are different from the above-mentioned embodiment in terms of the valences of the acid and/or the base, but can achieve the same effects as the effects obtained by the above-mentioned embodiment.

Hereinafter, the amine which is a preferable aspect of the base will be described in detail.

The type of amine is not particularly limited, and examples thereof include ammonia, a primary amine, a secondary amine, and a tertiary amine, and one or more selected from the group consisting of ammonia, a primary amine, a secondary amine, and a tertiary amine are preferable. One type of amine may be used alone, or a combination of any two or more types thereof may be used in any proportions.

Examples of the primary amine include primary amines having an alkyl group. Among these, a monoalkylamine such as methylamine, ethylamine, n-propylamine, 2-propylamine, or butylamine is preferably exemplified.

Examples of the secondary amine include secondary amines having two alkyl groups independently. Among these, an acyclic dialkylamine such as dimethylamine, diethylamine, diisopropylamine, or dibutylamine; or a cyclic amine such as N-unsubstituted pyrrolidine or N-unsubstituted piperidine is preferably exemplified.

Examples of the tertiary amine include tertiary amines having three alkyl groups independently. Among these, preferred examples include an acyclic trialkylamine such as trimethylamine, triethylamine, diisopropylethylamine, or tributylamine; or a cyclic trialkylamine such as N-substituted pyrrolidine, N-substituted piperidine, or 1,4-diazabicyclo [2.2.2]octane.

The number of carbons of the alkyl group bonded to each of the amines is not particularly limited, but may be 1 or more, 2 or more, or 3 or more, and may be 10 or less, 8 or less, or 6 or less, particularly preferably 1 to 4, and more preferably 1 to 2, because an amine having a small molecular weight causes a problem of high volatility and difficulty in handling, and an amine having a large molecular weight is likely to cause noise in MS detection. Such a primary to tertiary ammonium ion having a small number of carbons in the alkyl group has a low molecular weight. Therefore, when chromatography is carried out by LC-MS, ions having a mass close to that of the amine to be separated are less likely to be generated, resulting in lower noise. However, in the analysis of a sample having a molecular weight exceeding 200, triethylamine is convenient in consideration of ease of handling. Meanwhile, when ammonia is used as the base, an amine having an alkyl substituent may be advantageous because the solubility of the salt in an organic solvent is generally low.

The substituents bonded to the N-substituted pyrrolidine, N-substituted piperidine, N,N-disubstituted pyrrolidine, and N,N-disubstituted piperidine are not particularly limited, but are each preferably an alkyl group, and the conditions for the alkyl group can be the same as those for the alkyl group shown for the alkyl group bonded to each amine described above. This is because, the molecular weight of the ammonium ion is preferably small in LC-MS as described above.

The amine is preferably one or more selected from the group consisting of ammonia, ethylamine, n-propylamine, 2-propylamine, dimethylamine, diethylamine, trimethylamine, triethylamine, pyrrolidine, and piperidine, and more preferably one or more selected from the group consisting of ammonia, diethylamine, triethylamine, and 2-propylamine, for reasons such as low boiling point, easy availability, applicability to UV detection, volatility, small molecular weight, and difficulty in interfering with MS detection.

It is sometimes difficult to add a low-boiling-point amine such as ammonia quantitatively because of its high vapor pressure. In such a case, a carbonate or a hydrogen carbonate of such an amine is used and reacted with an acid contained in the salt in a small amount of water to generate carbon dioxide, whereby an additive substantially the same as that obtained by adding ammonia alone can be obtained.

When a metal is used as the base, for example, an alkali metal such as lithium, sodium, or potassium, or another metal can be used.

The method of using a specific acid and a base that partially neutralizes the acid is the simplest method of preparing the mobile phase according to the present embodiment, but an equivalent mobile phase can be obtained by adding a salt of the specific acid and the acid, and the preparation method is not limited to this method. The specific acid added here is not necessarily a specific acid corresponding to the salt, and may be any of one or more selected from the group consisting of oxalic acid, acetic acid, formic acid, and trifluoroacetic acid.

Solvent

The solvent contained in the mobile phase in the present embodiment is not particularly limited as long as it can dissolve various components such as the amine to be separated and the specific acid, and water, or a liquid other than water (hereinafter may be referred to as a "non-aqueous solvent") or the like can be used.

Examples of the non-aqueous solvent include an organic solvent (water content: 0 vol.%), or subcritical or supercritical carbon dioxide.

Examples of the solvent contained in the mobile phase include water alone; a non-aqueous solvent alone; a mixed solvent of water and a non-aqueous solvent; and a mixed solvent containing pressurized carbon dioxide and a non-aqueous solvent, and optionally a small amount of water. When the solvent contained in the mobile phase is a mixed solvent containing two or more solvents, the two or more solvents are preferably a combination of solvents that do not cause phase separation under the amine separation conditions. Specifically, for example, a solvent having low polarity, a so-called normal phase solvent, can be used, and a solvent obtained by mixing a hydrocarbon such as hexane or heptane with an alcohol, an ester, an ether, a nitrile, a halogenated hydrocarbon, or the like having higher polarity, or a solvent obtained by further mixing water with the hydrocarbon in a range in which the solvent is uniformly dissolved is preferably used. More specifically, for example, a solvent having a highly polar composition based on an organic solvent, which is based on acetonitrile and contains a small amount (1 to 20 vol.%) of water, a solvent which is based on water and further contains a small amount (usually 1 to 40 vol.%) of acetonitrile or methanol as a highly polar reverse phase solvent, or pressurized carbon dioxide generally used in supercritical fluid chromatography, which is called subcritical or supercritical carbon dioxide, can be used as the solvent.

In the present technical field, "supercritical" is not usually limited to a state where the solvent is strictly in a supercritical state at all compositions and temperatures, and the term "supercritical" is often used when a solvent mainly containing carbon dioxide is used. The term "supercritical" is treated similarly in the present disclosure.

The organic solvent is not particularly limited, but is preferably an organic solvent that can dissolve the amine to be separated. Examples of preferred organic solvents include acetonitrile, acetone, tetrahydrofuran (THF), tert-butyl methyl ether, methanol, ethanol, n-propanol, 2-propanol, dimethyl sulfoxide (DMSO), dimethylformamide (DMF), or dimethylacetamide (DMAc). As long as various components such as the amine to be separated and one or more specific acids selected from the group consisting of oxalic acid, acetic acid, formic acid, and trifluoroacetic acid can be dissolved, the organic solvent may contain a hydrocarbon such as hexane, or hexane, or heptane, or a halogenated hydrocarbon such as dichloromethane. Among these, from the viewpoint of high chemical stability, the organic solvent preferably contains one or more selected from the group consisting of acetonitrile, acetone, methanol, ethanol, 2-propanol, hexane, heptane, THF, and tert-butyl methyl ether, and is more preferably acetonitrile. Particularly preferably, the solvent contained in the mobile phase contains acetonitrile in an amount of 70 vol.% or more. One type of the organic solvent may be used alone, or a combination of any two or more types thereof may be used in any proportions.

The organic solvent may be a mixed liquid generally used in chromatography, such as a mixed liquid of a hydrocarbon having 5 or more and 8 or less carbons and an alcohol. Examples of such a mixed liquid include a hexane/ethanol mixed liquid that is compatible with water. When an organic solvent such as a hexane/ethanol mixture at a ratio of, for example, 100/100 (v/v) is used, it is possible to prepare a mixed solvent having a water content of about 10 vol.%. Although the addition of water slightly decreases retention, it increases the theoretical plate number of peaks and improves the time efficiency of the analysis. Hexane/ethanol/methanol also provides a good theoretical plate number of peaks in a compatible range.

The mixed liquid of a hydrocarbon having 5 or more and 8 or less carbons and an alcohol has a low viscosity, and therefore a high flow rate can be realized at a low pressure in chromatography. In addition, the ultraviolet absorption is small, and therefore detection of an amine by the ultraviolet absorption can be realized.

When the non-aqueous solvent contains subcritical or supercritical carbon dioxide, chromatography is carried out by a supercritical fluid chromatograph. In this case, preferably, a mixed solvent of water and an organic solvent, or an organic solvent (water content of 0 vol.%) is used as an auxiliary solvent in combination with subcritical or supercritical carbon dioxide, so that the target component can be dissolved in the mobile phase at the desired concentration. The term "organic solvent" used herein has the same meaning as the organic solvent exemplified as a non-aqueous solvent. Preferable examples of the organic solvent and the mixed solvent of water and an organic solvent as the auxiliary solvent are methanol or a mixed solvent of water and methanol, respectively.

When the solvent contained in the mobile phase contains subcritical or supercritical carbon dioxide, the volume thereof is, for convenience, calculated based on the density of liquid carbon dioxide at -20°C, i.e., 1.030 g/mL.

Although the type of the solvent has been described, one or more selected from the group consisting of water, acetonitrile, ethanol, methanol, 2-propanol, hexane, heptane, THF, and liquid carbon dioxide are preferable from the viewpoint of low viscosity, transparency to ultraviolet rays (in the case of ultraviolet detection which is most commonly used), no strong toxicity or danger, low cost, and tendency of a chiral stationary phase formed of a polysaccharide derivative to provide good separation.

The content of the solvent in the mobile phase (the total content when two or more solvents are contained) is not particularly limited and can be appropriately set depending on the application, and may be, for example, 90 mass% or more, 95 mass% or more, 98 mass% or more, or 99 mass% or more, and may be less than 100 mass%, 99.9 mass% or less, or 99.5 mass% or less. The mobile phase may contain the remaining components other than the specific acid and base described above. Examples of the mixing proportions of components in the case where the solvent is a three

component mixture are described below. Examples of the reverse phase solvent include a mixture of acetonitrile, an alcohol, and THF containing 50 vol.% or more of water, and the water content is preferably 70 vol.% or more in order to provide good separation. Examples of the normal phase solvent include a mixture containing 40 vol.% or more of hexane and/or heptane and containing, as the remainder, 2-propanol or ethanol and a small amount of water.

Additional component

The mobile phase may contain a component other than the components described above (additional component) as long as the effects of the present disclosure are achieved. However, when detection is performed by mass spectrometry (MS), a component that gives a nonvolatile salt is not preferred.

Preparation Method for Mobile Phase

The mobile phase can be prepared by a known solution preparation method or a method equivalent to a known solution preparation method. For example, a method of mixing the above components may be used.

Known methods include a method for forming a salt from an acid and a base and using the salt to prepare the mobile phase. In the present embodiment, the expression "containing an acid and a base" is used, but both may be dissolved in a mobile phase solvent in appropriate amounts. Meanwhile, even when the acid and the salt formed from the acid and the base are dissolved in a mobile phase solvent, substantially the same mobile phase can be obtained. This technique of preparing the mobile phase by bringing an acid and a base into contact with each other in a solvent in this manner rather than directly bringing the acid and the base into contact with each other is suitable in that the technique is simple, and problems caused by the heat of neutralization such as vaporization of some of the components can be avoided. When a highly volatile amine such as ammonia is used as the base, a solvent such as water may be used, and the composition of the mobile phase solvent may be corrected as necessary. It is also possible to use, as a precursor, a salt of a weak acid such as a carbonate or a hydrogen carbonate, as described above. The weak acid by-produced here does not greatly affect the retention even if it remains in the mobile phase as it is or is gasified and volatilized.

When a salt of a cation and an acid anion is commercially available or can be easily procured, the mobile phase can be prepared by dissolving the commercially available product in a solvent and, as necessary, mixing with an acid for adjusting the acidity. Acidity adjustment is required when the retention of the sample amine is insufficient or the peak shape is unfavorable.

[Chromatography]

The chromatography used in the present embodiment is not particularly limited, and examples thereof include liquid chromatography or supercritical fluid chromatography. In addition, the form of chromatography is not particularly limited, and a known form can be employed, and not only column chromatography, but also thin layer chromatography, chromatography provided with a layer formed by depositing a fibrous adsorbent, or chromatography using a capillary or a micro flow path provided with a thin layer of an adsorbent layer in any form on the inner wall of a narrow tube can be employed.

The chromatography can be carried out using a commercially available chromatograph such as a liquid chromatograph or a supercritical fluid chromatograph. The various conditions such as the column equilibration conditions and flow rate can be appropriately determined depending on, for example, the column size, the sample volume, or the type of mobile phase.

The amine separation method according to the present embodiment may further include an analysis step of analyzing the amine separated in the separation step.

The method for detecting an amine in chromatography is not particularly limited, and examples of the method according to the present embodiment include a method using a mass spectrometer. In the present embodiment, it is a great advantage that the mass spectrometer can be applied as the analyzer, since the formation of a volatile salt can be promoted by appropriately selecting the additive.

The separation and analysis of an amine may be performed with the same apparatus or may be performed with different apparatuses. For example, when liquid chromatography is employed as the chromatography method, amine separation and mass spectrometry of the separated amine may be sequentially performed by liquid chromatography-mass spectrometry (LC-MS) in which liquid chromatography is combined with mass spectrometry (MS). The mass spectrometry of an amine may be quantitative analysis or qualitative analysis of the separated amine. A UV detector may be used alone, and more information can be obtained by a mass spectrometer in combination.

A known mass spectrometry method used in LC-MS can be employed for the mass spectrometry. Examples of ionization methods in mass spectrometry include atmospheric pressure chemical ionization (APCI), atmospheric pressure photoionization (APPI), electrospray ionization (ESI), fast atom bombardment (FAB), or thermospray ionization

(TSP), and the ionization method can be appropriately selected depending on, for example, the type of salt, the type of acid, the type of amine, and the purpose of analysis. The mass detector to be used can be appropriately selected from a quadrupole mass spectrometer (Q-MS), an ion trap mass spectrometer (IT-MS), or a time-of-flight mass spectrometer (TOF-MS), or the like depending on, for example, the required sensitivity and resolution.

Examples

Hereinafter, the present disclosure will be described more specifically with reference to Examples, but the present disclosure is not limited to the following Examples as long as there is no deviation from the gist of the present disclosure.

Experiment I-1

Example 1

Preparation of Mobile Phase

1260 mg of oxalic acid dihydrate was weighed and transferred to a 1000 mL volumetric flask. To this volumetric flask was added about 20 mL of a mixed solvent obtained by weighing and mixing 800.0 g of water and 156.6 g of acetonitrile (80/20 in terms of volume ratio), and then 506 mg of triethylamine was added thereto. Subsequently, the volume was adjusted with the above water/acetonitrile (80/20 (v/v)) mixed solvent, and the mixture was stirred until no undissolved matter remained, to prepare a mobile phase. The composition of the solvents in the mobile phases was water/acetonitrile = 80/20 (v/v), and the contents of oxalic acid (OxA) and triethylamine (TEA) in the mobile phases were 10.0 mmol/L and 5.0 mmol/L, respectively. The amount of water contained in oxalic acid dihydrate is so small that it does not affect the solvent composition. 100 μL of the mobile phase was added dropwise onto a stainless steel plate heated to 200°C, but no residue was observed. The same results were obtained in other Examples described below.

Similarly, in the following preparation of mobile phases, solvents were weighed to the order of 0.1 g, additives were weighed to the order of 1 mg, and the concentrations were calculated based on the measured weights.

The density of water was 1.00 g/mL, and the density of acetonitrile was 0.783 g/mL.

Separation and Analysis of Amine

A column packed with a chiral stationary phase including cellulose tris(3, 5-dimethylphenylcarbamate) supported on silica gel (CHIRALPAK IB-N (registered trademark, available from Daicel Corporation), average filler size: 5 μm, length: 250 mm, internal diameter: 4.6 mmφ) was used as a column, and a high-performance liquid chromatograph was used as the liquid chromatograph to separate the amine. In this case, the amine represented by Formula (3) described below ("Pindolol" available from USP), i.e., separation target, was dissolved in a water/acetonitrile (1/1 (v/v)) mixed solvent to a concentration of about 1 mg/mL, and 2 μL of the resulting solution was injected into the column using an autosampler. The mobile phase was fed at a rate of 0.43 mL/min to the column adjusted to a temperature of 30°C.

The details of the amine separation method and the analysis method are described below.

Separation Method and Analysis Method

Using SPD-M20A (available from Shimadzu Corporation, a diode-array UV-Vis detector) as a detector of a high-performance liquid chromatograph (HPLC), the mobile phase was fed to the column at 1.0 mL/min for 1 hour or more, and then 5 μL of a sample liquid obtained by dissolving a sample in the mobile phase at about 1 mg/mL was injected by an autosampler, and the column temperature was set to 30°C at the same flow rate to separate and analyze an amine.

The details of the apparatus used for HPLC and the data processing apparatus are described below. All of the following apparatuses are available from Shimadzu Corporation.

· HPLC apparatus: system controller CBM-20A, pump LC-20AD, autosampler SIL-20AC, column oven SPD-M20A
· Data processing apparatus: LabSolutions Version 5.97

The results are illustrated in FIG. 1.

[Chem. 1]

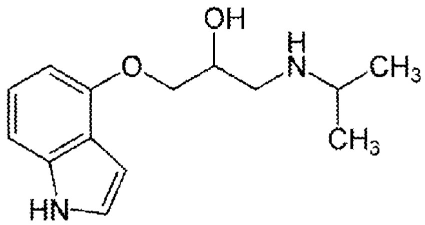

(3)

Comparative Example 1

The separation and analysis of the amine represented by Formula (3) were carried out again in the same manner as in Example 1, except that, after the separation and analysis in Example 1, a water/acetonitrile (80/20 (v/v)) mixed solvent was used as the mobile phase and was passed through the column for one hour or more without sample injection. Since no acid or amine was added to the mobile phases used, the acid content and the amine content in the mobile phases were 0 mmol/L and 0 mmol/L, respectively.
The results are illustrated in FIG. 2.

Comparative Example 2

The same operation as in Example 1 was performed, except that oxalic acid dihydrate was not used, and ammonium hydrogen carbonate (AHC) and diethylamine (DEA) were used instead of triethylamine, thereby preparing a mobile phase wherein the contents of AHC and DEA were 10.0 mmol/L and 15.5 mmol/L, respectively.
The separation and analysis of the amine represented by Formula (3) were carried out in the same manner as in Example 1, except that the above mobile phase was used as a mobile phase, and a guard column described in the note of Table 1 below was inserted before the CHIRALPAK IB-N column (only in this Comparative Example).
The results are illustrated in FIG. 3.

Comparative Example 3

The separation and analysis of the amine represented by Formula (3) were carried out in the same manner as in Example 1, except that, after the separation and analysis in Comparative Example 2, a water/acetonitrile (80/20 (v/v)) mixed solvent was used as the mobile phase and was passed through the column for one hour or more without sample injection. Since no acid or amine was added to the mobile phases used, the acid content and the amine content in the mobile phase were 0 mmol/L and 0 mmol/L, respectively.
The results are illustrated in FIG. 4.

Example 2

The same operation as in Example 1 was performed, except that the solvents were changed from water and acetonitrile to hexane and ethanol (hexane/ethanol = 50/50 (v/v)), thereby preparing a mobile phase wherein the contents of OxA and TEA were 10.0 mmol/L and 5.0 mmol/L, respectively.
The separation and analysis of the amine represented by Formula (3) were carried out in the same manner as in Example 1, except that the above mobile phase was used as a mobile phase.
The results are illustrated in FIG. 5.

Comparative Example 4

The same operation as in Example 2 was performed, except that oxalic acid dihydrate was not used and diethylamine ("DEA" in Table 1) was used instead of triethylamine, thereby preparing a mobile phase having a DEA content of 10.0 mmol/L.
The separation and analysis of the amine represented by Formula (3) were carried out in the same manner as in Example 1, except that the above mobile phase was used as a mobile phase.
The results are illustrated in FIG. 6.

Example 3

The separation and analysis of an amine, i.e., the analysis target were carried out in the same manner as in Example 2, except that a column packed with a chiral stationary phase in which cellulose tris(3-chloro-4-methylphenylcarbamate) was supported on silica gel (CHIRALPAK IM (available from Daicel Corporation, registered trademark), average filler size: 5 μm, length: 250 mm, internal diameter: 4.6 mmφ) was used as a column, and the analysis target was changed to an amine represented by Formula (4) described below.

The results are illustrated in FIG. 7.

[Chem. 2]

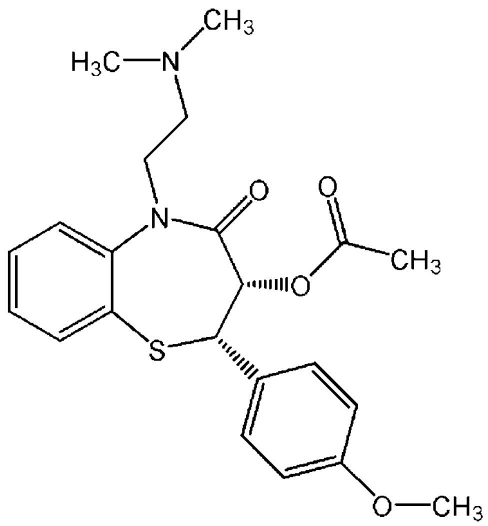

(4)

Comparative Example 5

The separation and analysis of the amine represented by Formula (4) were carried out in the same manner as in Comparative Example 4, except that the column used in Example 3 was used as a column.

The results are illustrated in FIG. 8.

Example 4

The separation and analysis of the amine, i.e., the analysis target were performed in the same manner as in Example 2, except that the analysis target was changed to phenylglycine amide represented by Formula (5) described below. $C_6H_5$-CH($NH_2$)-$CONH_2$ (available from Tokyo Chemical Industry Co., Ltd.) (5)

The results are illustrated in FIG. 9.

Comparative Example 6

The separation and analysis of the amine, i.e., the analysis target were performed in the same manner as in Comparative Example 5, except that phenylglycine amide represented by Formula (5) was used as the analysis target.

The results are illustrated in FIG. 10.

Example 5

The same operation as in Example 3 was performed, except that the solvents were changed from hexane and ethanol to hexane, ethanol, and methanol (hexane/ethanol/methanol = 70/20/19 (v/v/v)), thereby preparing a mobile phase wherein the contents of OxA and TEA were 10.0 mmol/L and 5.0 mmol/L, respectively.

The separation and analysis of the amine represented by Formula (4) were carried out in the same manner as in Example 3, except that the above mobile phase was used as a mobile phase, and a column packed with a chiral stationary phase in which amylose tris(3-chlorophenylcarbamate) was supported on silica gel (CHIRALPAK ID (registered trademark, available from Daicel Corporation), average filler size: 5 μm, length: 250 mm, internal diameter: 4.6 mmφ) was used as a column.

The results are illustrated in FIG. 11.

Comparative Example 7

The same operation as in Example 5 was performed, except that neither oxalic acid dihydrate nor triethylamine was added, to prepare a mobile phase wherein the contents of OxA and TEA were 0 mmol/L and 0 mmol/L, respectively.
The separation and analysis of the amine represented by Formula (4) were carried out in the same manner as in Example 5, except that the above mobile phase was used as a mobile phase.
The results are illustrated in FIG. 12.

Example 6

The separation and analysis of the amine represented by Formula (4) were carried out in the same manner as in Example 5, except that a column packed with a chiral stationary phase in which amylose tris(3, 5-dichlorophenylcarbamate) was supported on silica gel (CHIRALPAK IE (registered trademark, available from Daicel Corporation), average filler size: 5 μm, length: 250 mm, internal diameter: 4.6 mmφ) was used as a column.
The separation and analysis of the amine represented by Formula (4) were carried out in the same manner as in Example 5, except that the above mobile phase was used as a mobile phase.
The results are illustrated in FIG. 13.

Comparative Example 8

The same operation as in Example 6 was performed, except that neither oxalic acid dihydrate nor triethylamine was added, to prepare a mobile phase wherein the contents of OxA and TEA were 0 mmol/L and 0 mmol/L, respectively.
The separation and analysis of the amine represented by Formula (4) were carried out in the same manner as in Example 6, except that the above mobile phase was used as a mobile phase.
The results are illustrated in FIG. 14.
The separation conditions of Examples 1 to 4 and Comparative Examples 1 to 6 are summarized in Table 1 below.

Resolution

The resolution in each of the Examples and Comparative Examples is a USP resolution automatically calculated by a chromatography data analysis program LabSolutions Version 5.97 of Shimadzu Corporation. The results are shown in Table 1.
In the following tables, "AN" represents acetonitrile, "OxA" represents oxalic acid, "TEA" represents triethylamine, "AHC" represents ammonium hydrogen carbonate, and "DEA" represents diethylamine.
The SB/SA described above is shown in Tables 1 to 5 below. Most of oxalic acid is present in the form of a monovalent acid when calculated from the degree of dissociation.

[Table 1]

Table 1

| | Analysis target | Stationary Phase | Mobile Phase | | Resolution |
|---|---|---|---|---|---|
| | | Column | Solvent | Additive | |
| Example 1 | Pindolol | IB-N | Water/AN (v/v = 80/20) | OxA: 10.0 mmol/L TEA: 5.0 mmol/L (SB/SA: 0.5) | 2.5 |
| Comparative Example 1 | Pindolol | IB-N | Water/AN (v/v = 80/20) | None (SB/SA: -) | 0.9 |
| Comparative Example 2 | Pindolol | IB-N (*1) | Water/AN (v/v = 80/20) | AHC: 10.0 mmol/L DEA: 5.0 mmol/L (SB/SA: 0.5) | 3.3 |
| Comparative Example 3 | Pindolol | IB-N | Water/AN (v/v = 80/20) | None (SB/SA: -) | Not measured |

(continued)

| | Analysis target | Stationary Phase | Mobile Phase | | Resolution |
|---|---|---|---|---|---|
| | | Column | Solvent | Additive | |
| Example 2 | Pindolol | IB-N | Hexane/Ethanol (v/v = 50/50) | OxA: 10.0 mmol/L TEA: 5.0 mmol/L (SB/SA: 0.5) | 11.0 |
| Comparative Example 4 | Pindolol | IB-N | Hexane/Ethanol (v/v = 50/50) | DEA: 10.0 mmol/L (SB/SA: -) | 10.1 |
| Example 3 | Dilthiazem | IM | Hexane/Ethanol (v/v = 50/50) | OxA: 10.0 mmol/L TEA: 5.0 mmol/L (SB/SA: 0.5) | 8.2 |
| Comparative Example 5 | Dilthiazem | IM | Hexane/Ethanol (v/v = 50/50) | DEA: 10.0 mmol/L (SB/SA: -) | 3.2 |
| Example 4 | Phenylglycine amide | IM | Hexane/Ethanol (v/v = 50/50) | OxA: 10.0 mmol/L TEA: 5.0 mmol/L (SB/SA: 0.5) | 6.7 |
| Comparative Example 6 | Phenylglycine amide | IM | Hexane/Ethanol (v/v = 50/50) | DEA: 10.0 mmol/L (SB/SA: -) | 0 |
| Example 5 | Dilthiazem | ID | Hexane/Ethanol /Methanol (v/v/v = 70/20/10) | OxA: 10.0 mmol/L TEA: 5.0 mmol/L (SB/SA: 0.5) | 6.5 |
| Comparative Example 7 | Dilthiazem | ID | Hexane/Ethanol /Methanol (v/v/v = 70/20/10) | None (SB/SA: -) | 0.3 |
| Example 6 | Dilthiazem | IE | Hexane/Ethanol /Methanol (v/v/v = 70/20/10) | OxA: 10.0 mmol/L TEA: 5.0 mmol/L (SB/SA: 0.5) | 5.1 |
| Comparative Example 8 | Dilthiazem | IE | Hexane/Ethanol /Methanol (v/v/v = 70/20/10) | None (SB/SA: -) | 0.3 |
| *1) In Comparative Example 2, a guard column having a length of 10 mm and an internal diameter of 3 mmφ and packed with WakoSil 5-APS (spherical silica gel) was inserted before the column described in the table. | | | | | |

By comparing Example 1 with Comparative Examples 1 and 3, Example 5 with Comparative Example 7, and Example 6 with Comparative Example 8, it is understood that, even when the same solvent is used, in a case where nothing is added, generally, peak tailing is severe and the resolution is low, or the resultant chromatogram is unstable based on the pre and post column history (the same mobile phase is used in Comparative Examples 1 and 3, but Example 1 and Comparative Example 2 are sandwiched therebetween, respectively), but stable retention and separation are achieved by the mobile phase according to the embodiment of the present disclosure.

As compared to the mobile phase according to Comparative Example 9 in which only an acid is added, good separation can be achieved in Example 2 in which a partially neutralized mobile phase is used. Specifically, in Comparative Example 9, separation is performed by a mobile phase in which only oxalic acid is added, and the peak shape and the separation are clearly worse than those in Example 2.

In the chromatography of an amine sample, a method of adding a low molecular weight amine to a mobile phase is often employed. Silica gel, which is often used as a chromatography filler or a carrier thereof, has an acidic atomic group called silanol, which is considered to cause significant peak tailing because it forms a salt with a sample. In this case, when an amine is added, the formation of a salt of the sample with silanol is suppressed, and thus the abnormal retention of the sample can be suppressed. In Comparative Examples 4, 5, and 6, diethylamine, which is often used for this purpose, is added. Comparative Examples 4, 5, and 6 correspond to Examples 2, 3, and 4, respectively. It is found that, in Comparative Examples 4 and 5, peak tailing hardly occurs, but the resolution is smaller than that in Examples 2 and 3, respectively.

In the related art, in a mobile phase mainly containing water, a method of suppressing protonation of an amine sample by making the mobile phase alkaline and holding the amine sample as a neutral molecule on a stationary phase is also employed. In Comparative Example 2, one of such conditions is used, and the mobile phase is alkaline. In this case, the peak width is larger than that in Example 1, and the time efficiency of separation is lower. Further, when a mobile phase

which is more basic than a stationary phase containing silica gel is used, it is necessary to prevent deterioration of the column by inserting a guard column (pre-column) containing silica gel, and the same method is employed in the Comparative Example. However, since the peak shape became abnormal in Comparative Example 3 after this analysis, it is found that the history is left in the column.

Experiment I-2

Comparative Example 9

A mobile phase was prepared by performing the same operation as in Example 1, except that the solvent was changed from the mixed solution of water/acetonitrile = 80/20 (v/v) to a mixed solution of water/acetonitrile = 2.5/97.5 (v/v), trifluoroacetic acid (TFA) was used instead of OxA so that the content of TFA in the mobile phase was 10.0 mol/L, and TEA was not used.

The separation and analysis of the amine represented by Formula (3) were carried out in the same manner as in Example 1, except that the above mobile phase was used as a mobile phase.

The results are illustrated in FIG. 15.

Example 7

A mobile phase (TEA content: 5.0 mol/L) was prepared by performing the same operation as in Example 1, except that the solvent was changed from the mixed solution of water/acetonitrile = 50/50 (v/v) to a mixed solution of water/acetonitrile = 2.5/97.5 (v/v), and trifluoroacetic acid (TFA) was used instead of OxA so that the content of TFA in the mobile phase was 10.0 mol/L.

The separation and analysis of the amine represented by Formula (3) were carried out in the same manner as in Example 1, except that the above mobile phase was used as a mobile phase.

The results are illustrated in FIG. 16.

Comparative Example 10

A mobile phase was prepared by performing the same operation as in Comparative Example 9, except that the solvent was changed from the mixed solution of water/acetonitrile = 2.5/97.5 (v/v) to a mixed solution of hexane/ethanol = 50/50 (v/v).

The separation and analysis of the amine represented by Formula (3) were carried out in the same manner as in Example 1, except that the above mobile phase was used as a mobile phase.

The results are illustrated in FIG. 17.

Example 8

A mobile phase was prepared by performing the same operation as in Example 7, except that the solvent was changed from the mixed solution of water/acetonitrile =2.5/97.5 (v/v) to a mixed solution of hexane/ethanol = 50/50 (v/v).

The separation and analysis of the amine represented by Formula (3) were carried out in the same manner as in Example 1, except that the above mobile phase was used as a mobile phase.

The results are illustrated in FIG. 18.

The separation conditions of Examples 7 and 8 and Comparative Examples 9 and 10 are summarized in Table 2 below.

Resolution

The resolution in each of the Examples and Comparative Examples is a USP resolution automatically calculated by a chromatography data analysis program LabSolutions Version 5.97 of Shimadzu Corporation. The results are shown in Table 1.

In the following tables, "TFA" represents trifluoroacetic acid.

[Table 2]

Table 2

| | Analysis target | Stationary Phase | Mobile Phase | | Resolution |
|---|---|---|---|---|---|
| | | Column | Solvent | Additive | |
| Comparative Example 9 | Pindolol | IB-N | Water/AN (v/v = 2.5/97.5) | TFA: 10.0 mmol/L (SB/SA: 0) | 0.5 |
| Example 7 | Pindolol | IB-N | Water/AN (v/v = 2.5/97.5) | TFA: 10.0 mmol/L<br>TEA: 5.0 mmol/L (SB/SA: 0.5) | 3.7 |
| Comparative Example 10 | Pindolol | IB-N | Hexane/Ethanol (v/v = 50/50) | TFA: 10.0 mmol/L (SB/SA: 0) | 3.8 |
| Example 8 | Pindolol | IB-N | Hexane/Ethanol (v/v = 50/50) | TFA: 10.0 mmol/L<br>TEA: 5.0 mmol/L (SB/SA: 0.5) | 14.1 |

By comparing Example 7 with Comparative Example 9 and Example 8 with Comparative Example 10, it is understood that the resolution is improved when SB/SA is 0.05 or more and 0.95 or less.

Experiment I-3

Comparative Example 11

A mobile phase was prepared by performing the same operation as in Example 1, except that acetic acid (AcOH) was used instead of OxA so that the content of AcOH in the mobile phase was 10.0 mol/L, and TEA was not used.
The separation and analysis of the amine represented by Formula (3) were carried out in the same manner as in Example 1, except that the above mobile phase was used as a mobile phase.
The results are illustrated in FIG. 19.

Example 9

A mobile phase (TEA content: 5.0 mol/L) was prepared by the same operation as in Example 1, except that AcOH was used instead of OxA so that the AcOH content in the mobile phase was 10.0 mol/L.
The separation and analysis of the amine represented by Formula (3) were carried out in the same manner as in Example 1, except that the above mobile phase was used as a mobile phase.
The results are illustrated in FIG. 20.

Example 10

A mobile phase was prepared by the same operation as in Example 9, except that ammonium acetate ($NH_4OAc$) was used instead of TEA so that the content of $NH_4OAc$ in the mobile phase was 5.0 mol/L.
The separation and analysis of the amine represented by Formula (3) were carried out in the same manner as in Example 1, except that the above mobile phase was used as a mobile phase.
The results are illustrated in FIG. 21.

Example 11

A mobile phase was prepared by performing the same operation as in Example 9, except that the solvent was changed from the mixed solution of water/acetonitrile = 80/20 (v/v) to a mixed solution of hexane/ethanol = 50/50 (v/v).
The separation and analysis of the amine represented by Formula (3) were carried out in the same manner as in Example 1, except that the above mobile phase was used as the mobile phase.
The results are illustrated in FIG. 22.

Example 12

A mobile phase was prepared by performing the same operation as in Example 10, except that the solvent was changed from the mixed solution of water/acetonitrile = 80/20 (v/v) to a mixed solution of hexane/ethanol = 50/50 (v/v).
The separation and analysis of the amine represented by Formula (3) were carried out in the same manner as in

Example 1, except that the above mobile phase was used as a mobile phase.

The results are illustrated in FIG. 23.

Example 13

The separation and analysis of the amine, i.e., the analysis target were performed in the same manner as in Example 12, except that the analysis target was changed to an amine represented by Formula (6) described below (1-phenyl-1,2,3,4-tetrahydroisoquinoline).

The results are illustrated in FIG. 24.

[Chem. 3]

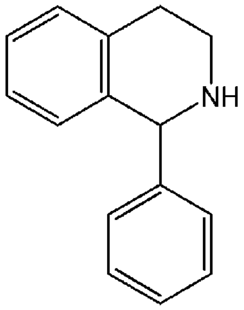

(6)

Example 14

A mobile phase was prepared by performing the same operation as in Example 12, except that AcOH was used so that the content of AcOH in the mobile phase was 10.0 mol/L, and $NH_4OAc$ was used so that the content of $NH_4OAc$ in the mobile phase was 10.0 mol/L.

The separation and analysis of the amine represented by Formula (3) were carried out in the same manner as in Example 1, except that the above mobile phase was used as a mobile phase.

The results are illustrated in FIG. 25.

The separation conditions of Examples 9 to 14 and Comparative Example 11 are summarized in Table 3 below.

Resolution

The resolution in each of the Examples and Comparative Examples is a USP resolution automatically calculated by a chromatography data analysis program LabSolutions Version 5.97 of Shimadzu Corporation. The results are shown in Table 3.

In the following tables, "AcOH" represents acetic acid, "$NH_4OAc$" represents ammonium acetate, and "Ph-β-isoq" represents phenyl-β- isoquinoline.

In Examples 10, 12, 13, and 14, ammonium acetate was added as a base instead of ammonia. Thus, in the mobile phase, acetic acid generated by dissociation of ammonium acetate is present in addition to acetic acid added as an acid. Therefore, when the ratio of acetic acid:ammonium acetate is 1:1 in terms of molar ratio, the ratio of acetic acid:ammonia in the mobile phase is 2:1 in terms of molar ratio, and SB/SA is 0.5.

[Table 3]

Table 3

| | Analysis target | Stationary Phase | Mobile Phase | | Resolution |
|---|---|---|---|---|---|
| | | Column | Solvent | Additive | |
| Comparative Example 11 | Pindolol | IB-N | Water/AN (v/v = 80/20) | AcOH: 10.0 mmol/L (SB/SA: 0) | 1.4 |
| Example 9 | Pindolol | IB-N | Water/AN (v/v = 80/20) | AcOH: 10.0 mmol/L TEA: 5.0 mmol/L (SB/SA: 0.5) | 2.4 |
| Example 10 | Pindolol | IB-N | Water/AN (v/v = 80/20) | AcOH: 5.0 mmol/L $NH_4OAc$: 5.0 mmol/L (SB/SA: 0.5) | 2.3 |
| Example 11 | Pindolol | IB-N | Hexane/Ethanol (v/v = 50/50) | AcOH: 10.0 mmol/L TEA: 5.0 mmol/L (SB/SA: 0.5) | 15.0 |
| Example 12 | Pindolol | IB-N | Hexane/Ethanol (v/v = 50/50) | AcOH: 5.0 mmol/L $NH_4OAc$: 5.0 mmol/L (SB/SA: 0.5) | 14.5 |
| Example 13 | 1-Phenyl-1,2,3,4-tetrahydroisoquinoline | IB-N | Hexane/Ethanol (v/v = 50/50) | AcOH: 5.0 mmol/L $NH_4OAc$: 5.0 mmol/L (SB/SA: 0.5) | 4.0 |
| Example 14 | Pindolol | IB-N | Hexane/Ethanol (v/v = 50/50) | AcOH: 10.0 mmol/L $NH_4OAc$: 10.0 mmol/L (SB/SA: 0.5) | 14.8 |

By comparing Examples 9 to 14 with Comparative Example 11, it is understood that the resolution is improved when SB/SA is 0.05 or more and 0.95 or less.

Experiment I-4

Comparative Example 12

A mobile phase was prepared by performing the same operation as in Example 1, except that the solvent was changed from the mixed solution of water/acetonitrile = 80/20 (v/v) to a mixed solution of hexane/ethanol = 50/50 (v/v), formic acid (FA) was used instead of OxA so that the content of FA in the mobile phase was 10.1 mol/L, and TEA was not used.

The separation and analysis of the amine represented by Formula (3) were carried out in the same manner as in Example 1, except that the above mobile phase was used as a mobile phase.

The results are illustrated in FIG. 26.

Example 15

A mobile phase (TEA content: 5.0 mol/L) was prepared by performing the same operation as in Example 1, except that the solvent was changed from the mixed solution of water/acetonitrile = 80/20 (v/v) to a mixed solution of hexane/ethanol = 50/50 (v/v), and formic acid (FA) was used instead of OxA so that the content of FA in the mobile phase

was 10.0 mol/L.

The separation and analysis of the amine represented by Formula (3) were carried out in the same manner as in Example 1, except that the above mobile phase was used as a mobile phase.

The results are illustrated in FIG. 27.

Comparative Example 13

The separation and analysis of the amine, i.e., the analysis target were performed in the same manner as in Comparative Example 12, except that the analysis target was changed to the amine represented by Formula (6) (phenyl-β-isoquinoline).

The results are illustrated in FIG. 28.

Example 16

The separation and analysis of the amine, i.e., the analysis target were performed in the same manner as in Example 15, except that the analysis target was changed to the amine represented by Formula (6) (phenyl-β-isoquinoline).

The results are illustrated in FIG. 29.

The separation conditions of Examples 15 and 16 and Comparative Examples 12 and 13 are summarized in Table 4 below.

Resolution

The resolution in each of the Examples and Comparative Examples is a USP resolution automatically calculated by a chromatography data analysis program LabSolutions Version 5.97 of Shimadzu Corporation. The results are shown in Table 4.

In each of the following tables, "FA" represents formic acid.

[Table 4]

Table 4

| | Analysis target | Stationary Phase | Mobile Phase | | Resolution |
|---|---|---|---|---|---|
| | | Column | Solvent | Additive | |
| Comparative Example 12 | Pindolol | IB-N | Hexane/Ethanol (v/v = 50/50) | FA: 10.1 mmol/L (SB/SA: 0) | 3.1 |
| Example 15 | Pindolol | IB-N | Hexane/Ethanol (v/v = 50/50) | FA: 10.0 mmol/L<br>TEA: 5.0 mmol/L (SB/SA: 0.5) | 14.6 |
| Comparative Example 13 | Ph-β-isoq | IB-N | Hexane/Ethanol (v/v = 50/50) | FA: 10.1 mmol/L (SB/SA: 0) | 1.4 |
| Example 16 | Ph-β-isoq | IB-N | Hexane/Ethanol (v/v = 50/50) | FA: 10.0 mmol/L<br>TEA: 5.0 mmol/L (SB/SA: 0.5) | 3.5 |

By comparing Example 15 with Comparative Example 12 and Example 16 with Comparative Example 13, it is understood that the resolution is improved when SB/SA is 0.05 or more and 0.95 or less.

Experiment I-5

Comparative Example 14

The same operation as in Example 2 was performed, except that TEA was not added, to prepare a mobile phase having an OxA content of 10.0 mmol/L.

The separation and analysis of the amine represented by Formula (3) were carried out in the same manner as in Example 2, except that the above mobile phase was used as a mobile phase.

The results are illustrated in FIG. 30.

Example 17

A mobile phase was prepared by performing the same operation as in Example 2, except that OxA was used so that the content of OxA in the mobile phase was 2.50 mol/L, and TEA was used so that the content of TEA in the mobile phase was 1.25 mol/L.
The separation and analysis of the amine represented by Formula (3) were carried out in the same manner as in Example 1, except that the above mobile phase was used as a mobile phase.
The results are illustrated in FIG. 31.

Example 18

A mobile phase was prepared by performing the same operation as in Example 2, except that OxA was used so that the content of OxA in the mobile phase was 5.0 mol/L, and TEA was used so that the content of TEA in the mobile phase was 2.5 mol/L.
The separation and analysis of the amine represented by Formula (3) were carried out in the same manner as in Example 1, except that the above mobile phase was used as a mobile phase.
The results are illustrated in FIG. 32.

Example 19

The same operation as in Example 1 was performed, except that the solvent was changed from the mixed solution of water and acetonitrile to a mixed solution of hexane, ethanol, and water (hexane/ethanol/water = 50/50/2 (v/v/v)), thereby preparing a mobile phase wherein the contents of OxA and TEA were 10.0 mmol/L and 5.0 mmol/L, respectively.
The separation and analysis of the amine represented by Formula (3) were carried out in the same manner as in Example 1, except that the above mobile phase was used as a mobile phase.
The results are illustrated in FIG. 33.
The separation conditions for Examples 17 to 19 and Comparative Example 14 are summarized in Table 5 below.

Resolution

The resolution in each of the Examples and Comparative Examples is a USP resolution automatically calculated by a chromatography data analysis program LabSolutions Version 5.97 of Shimadzu Corporation. The results are shown in Table 5.

[Table 5]

Table 5

| | Analysis target | Stationary Phase | Mobile Phase | | Resolution |
|---|---|---|---|---|---|
| | | Column | Solvent | Additive | |
| Comparative Example 14 | Pindolol | IB-N | Hexane/Ethanol (v/v = 50/50) | OxA: 10.0 mmol/L (SB/SA: 0) | 3.0 |
| Example 17 | Pindolol | IB-N | Hexane/Ethanol (v/v = 50/50) | OxA: 2.50 mmol/L TEA: 1.25 mmol/L (SB/SA: 0.5) | 9.0 |
| Example 18 | Pindolol | IB-N | Hexane/Ethanol (v/v = 50/50) | OxA: 5.0 mmol/L TEA: 2.5 mmol/L (SB/SA: 0.5) | 8.9 |

(continued)

| | Analysis target | Stationary Phase | Mobile Phase | | Resolution |
|---|---|---|---|---|---|
| | | Column | Solvent | Additive | |
| Example 19 | Pindolol | IB-N | Hexane/ethanol/water/ AN (v/v/ = 50/50/2) | OxA: 10.0 mmol/L TEA: 5.0 mmol/L (SB/SA: 0.5) | 9.0 |

By comparing Examples 17 and 18 with Comparative Example 14, it is understood that the resolution is improved when SB/SA is 0.05 or more and 0.95 or less.

Experiment II

Example 20

Preparation of Mobile Phase

A mobile phase was prepared in the same manner as in Example 1 described above.

Amine Separation

The separation and analysis of the amine represented by Formula (3) were carried out in the same manner as in Example 1, except that the separation and analysis of the amine were performed by the following methods.

Separation Method and Analysis Method

Using ACQUITY Qda (mass detector, available from Nihon Waters K. K.) as a detector of a high-performance liquid chromatograph (HPLC), a mobile phase was fed to a column at 0.75 mL/min for 1 hour, and then 1 μL of a sample liquid obtained by dissolving a sample in a mobile phase at about 1 to 2 mg/mL (filtered with a filter) was injected by an autosampler and the column temperature was set to room temperature (about 25°C) at the same flow rate to separate and analyze an amine.

The details of the apparatus used for HPLC are described below.

- HPLC apparatus: ACQUITY UPLC H-Class PLUS
- Ionization method: ESI
- Measurement mode: Positive
- Probe temperature: 400°C
- Sourse temperature: 120°C

The results are illustrated in FIG. 34. The vertical axis of the graph in the figure indicates the maximum value of the highest peak as 100%. The same applies to FIGS. 35 to 38 below.

The detected mass m/z (value obtained by dividing the relative mass of the ion by the valence) obtained by the above analysis is shown in Table 6 below.

Example 21

A mobile phase was prepared in the same manner as in Example 1 described above.

The separation and analysis of the amine, i.e., the analysis target were carried out in the same manner as in Example 20, except that the separation and analysis of the amine were performed by the method shown in above Example 20, and the analysis target was changed to the amine represented by Formula (6) (1-phenyl-1,2,3,4-tetrahydroisoquinoline).

The results are illustrated in FIG. 35 and Table 6.

Example 22

A mobile phase was prepared in the same manner as in Example 2 described above.

The separation and analysis of the amine represented by Formula (3) were carried out in the same manner as in Example 2, except that the separation and analysis of the amine were performed by the methods described above in Example 20.

The results are illustrated in FIG. 36 and Table 6.

Example 23

A mobile phase was prepared in the same manner as in Example 3 described above.

The separation and analysis of the amine represented by Formula (3) were carried out in the same manner as in Example 3, except that the separation and analysis of the amine were performed by the methods described above in Example 20.

The results are illustrated in FIG. 37 and Table 6.

Example 24

A mobile phase was prepared in the same manner as in Example 3 described above.

The separation and analysis of the amine were performed in the same manner as in Example 3, except that the methods shown in Example 20 were used for the separation and analysis of an amine and the analysis target was changed to an amine (nicardipine) represented by Formula (7) described below.

The results are illustrated in FIG. 38 and Table 6.

[Chem. 4]

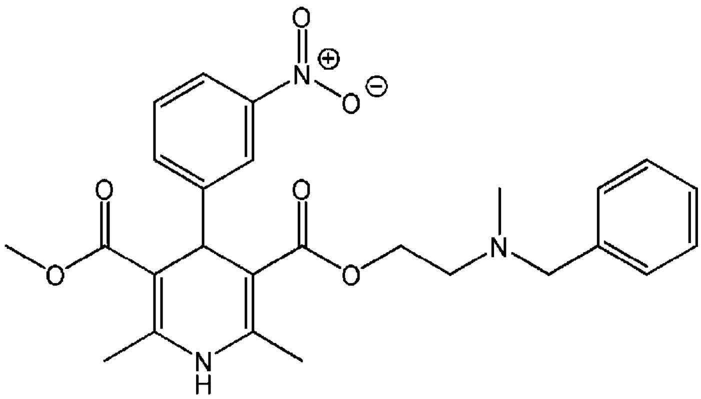

(7)

The SB/SA described above is shown in Table 2 below. In the calculation of SB/SA, the valence of oxalic acid was calculated as 1 since most of oxalic acid is present as a monovalent acid.

[Table 6]

Table 6

| | Analysis target | Stationary Phase | Mobile Phase | | m/z |
|---|---|---|---|---|---|
| | | Column | Solvent | Additive | |
| Example 20 | Pindolol | IB-N | Water/AN (v/v = 80/20) | OxA: 10.0 mmol/L TEA: 5.0 mmol/L (SB/SA: 0.5) | 249 [M+H]+ |
| Example 21 | 1-Phenyl-1,2,3,4-tetrahydroisoquinoline | IB-N | Water/AN (v/v = 80/20) | OxA: 10.0 mmol/L TEA: 5.0 mmol/L (SB/SA: 0.5) | 210 [M+H]+ |
| Example 22 | Pindolol | IB-N | Hexane/Ethanol (v/v = 50/50) | OxA: 10.0 mmol/L TEA: 5.0 mmol/L (SB/SA: 0.5) | 249 [M+H]+ |

(continued)

| | Analysis target | Stationary Phase | Mobile Phase | | m/z |
|---|---|---|---|---|---|
| | | Column | Solvent | Additive | |
| Example 23 | Dilthiazem | IM | Hexane/Ethanol (v/v = 50/50) | OxA: 10.0 mmol/L<br>TEA: 5.0 mmol/L (SB/SA: 0.5) | 415 [M+H]+ |
| Example 24 | Nicardipine | IM | Hexane/Ethanol (v/v = 50/50) | OxA: 10.0 mmol/L<br>TEA: 5.0 mmol/L (SB/SA: 0.5) | 480 [M+H]+ |

As is clear from FIGS. 34 to 38 and Table 6, a good mass chromatogram (chromatogram obtained with the mass detector) was obtained. This indicates that the method according to the embodiment of the present disclosure is not only effective for separation of an amine, particularly, an enantiomer thereof, but also can be suitably used for a detection method of LC-MS. Since LC-MS can distinguish by mass even if a plurality of elution peaks overlap in chromatography, it is a technique that has been widely used in recent years, and the applicability thereof has a great industrial meaning.

Industrial Applicability

From the above, it is understood that the method for separating an amine according to the embodiment of the present disclosure can improve the amine separation performance. It is considered that the method for separating an amine of the present disclosure can be applied to LC-MS by appropriately selecting the components contained in the mobile phase from among components which can avoid or reduce adverse effects on detection using a mass spectrometer.

Therefore, the method for separating an amine can be widely applied to analysis and purification using various liquid chromatography methods, and an expansion of this method in various fields such as organic chemistry, medicine, and pharmacology is anticipated.

## Claims

**1.** A method for separating an amine, the method comprising:

a separating step of separating the amine by chromatography using
a stationary phase containing at least one of an oligosaccharide, a polysaccharide, or a derivative thereof, and
a mobile phase containing: one or more specific acids selected from the group consisting of oxalic acid, acetic acid, formic acid, and trifluoroacetic acid; one or more bases; and a solvent; wherein
SB/SA is 0.05 or more and 0.95 or less, where A represents a value calculated by Formula (1) described below for each of the specific acids contained in the mobile phase, SA represents a total value of each A calculated for the specific acids, B represents a value calculated by Formula (2) described below for each of the bases contained in the mobile phase, and SB represents a total value of each B calculated for the bases;

A = valence of specific acid × molar concentration of specific acid (mol/L), Formula (1):

and

Formula (2): B = valence of base × molar concentration of base (mol/L).

**2.** The method for separating the amine according to claim 1, further comprising an analyzing step of analyzing the amine separated in the separating step, wherein
in the analyzing step, analysis using at least a mass spectrometer is performed.

**3.** The method for separating the amine according to claim 1 or 2, wherein the base is one or more selected from the group consisting of ammonia, a primary amine, a secondary amine, and a tertiary amine.

**4.** The method for separating the amine according to claim 3, wherein the base is one or more selected from the group consisting of ammonia, ethylamine, n-propylamine, 2-propylamine, dimethylamine, diethylamine, trimethylamine, triethylamine, pyrrolidine, and piperidine.

**5.** The method for separating the amine according to claim 1 or 2, wherein the mobile phase contains at least oxalic acid as the specific acid.

**6.** The method for separating the amine according to claim 1 or 2, wherein the at least one of the oligosaccharide, the polysaccharide, or the derivative thereof has an optically active site.

**7.** The method for separating the amine according to claim 1 or 2, wherein the solvent is one or more selected from the group consisting of water, acetonitrile, ethanol, methanol, 2-propanol, hexane, heptane, THF, and liquid carbon dioxide.

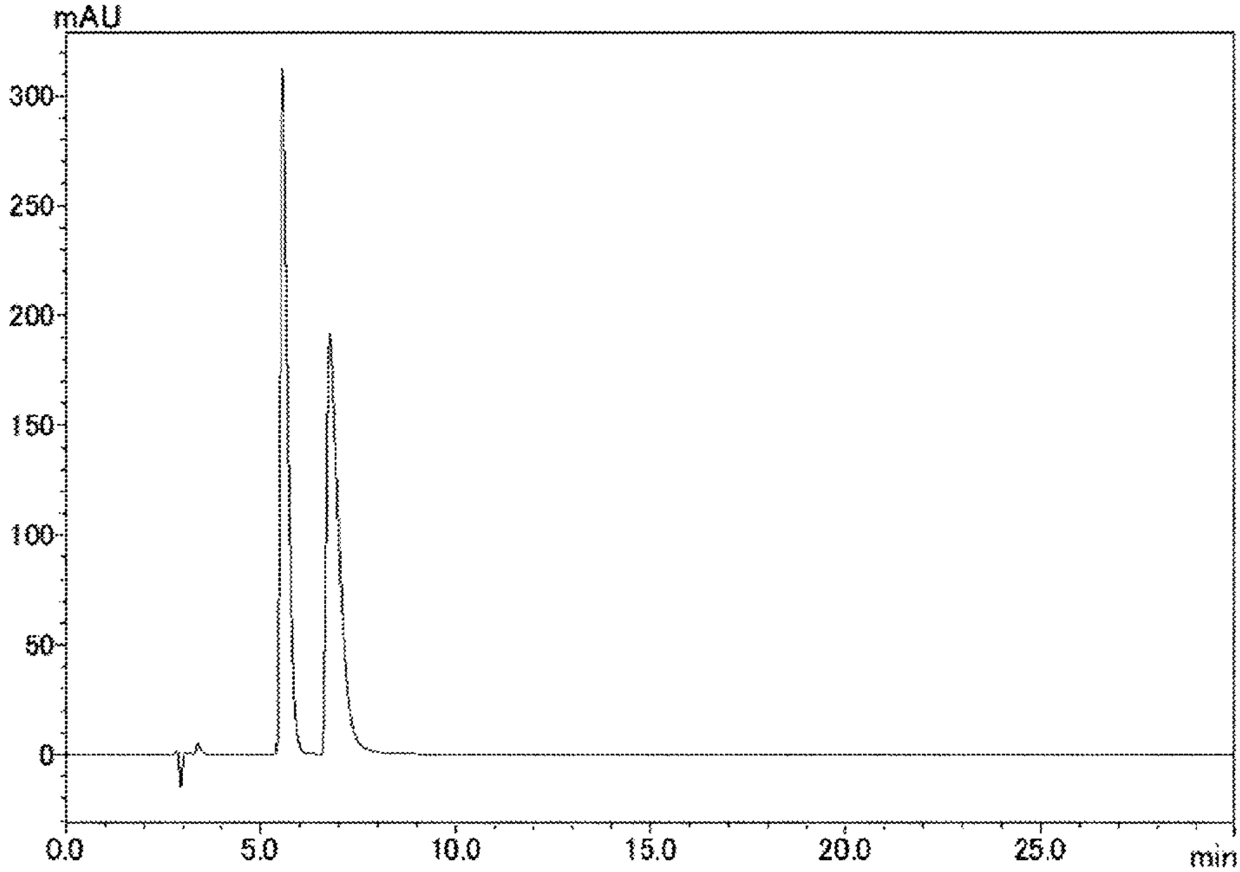


FIG. 1

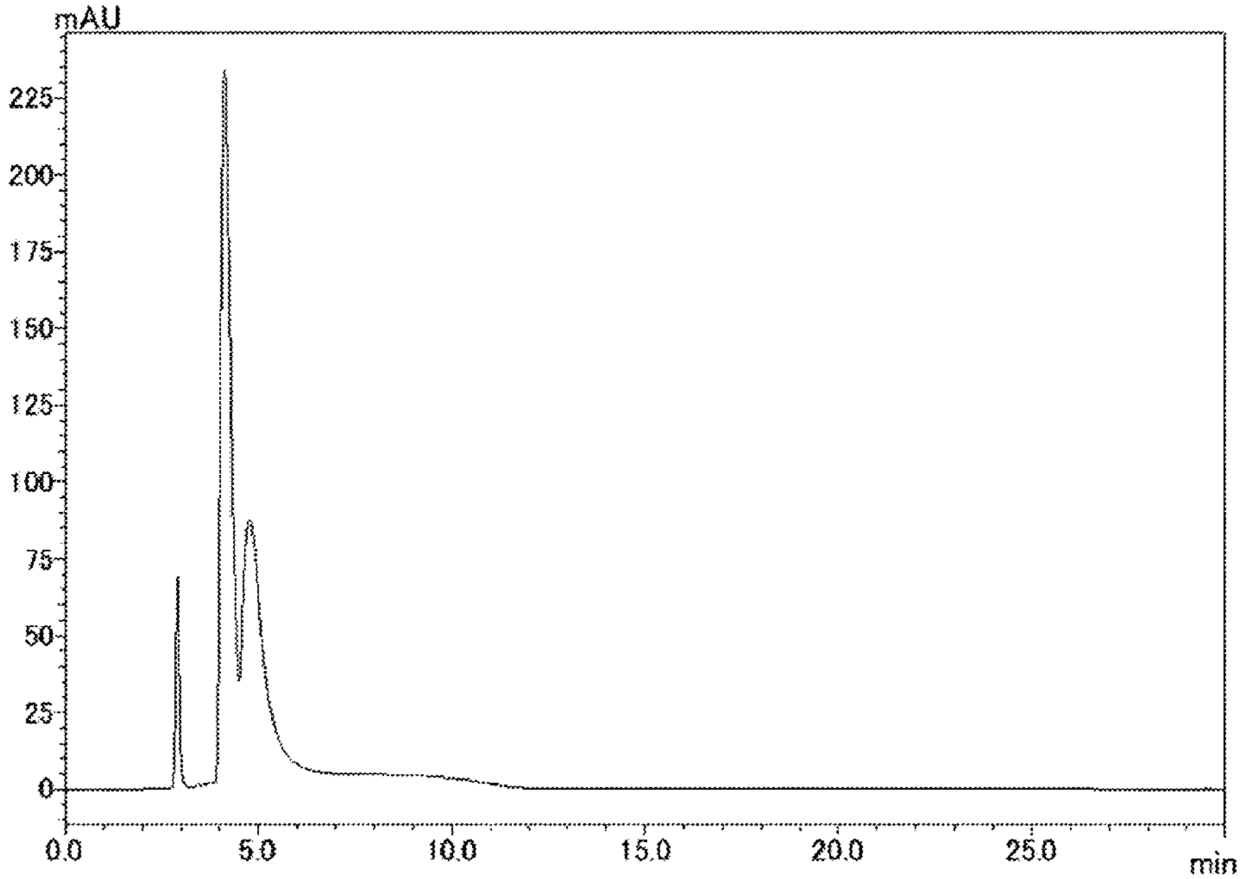


FIG. 2

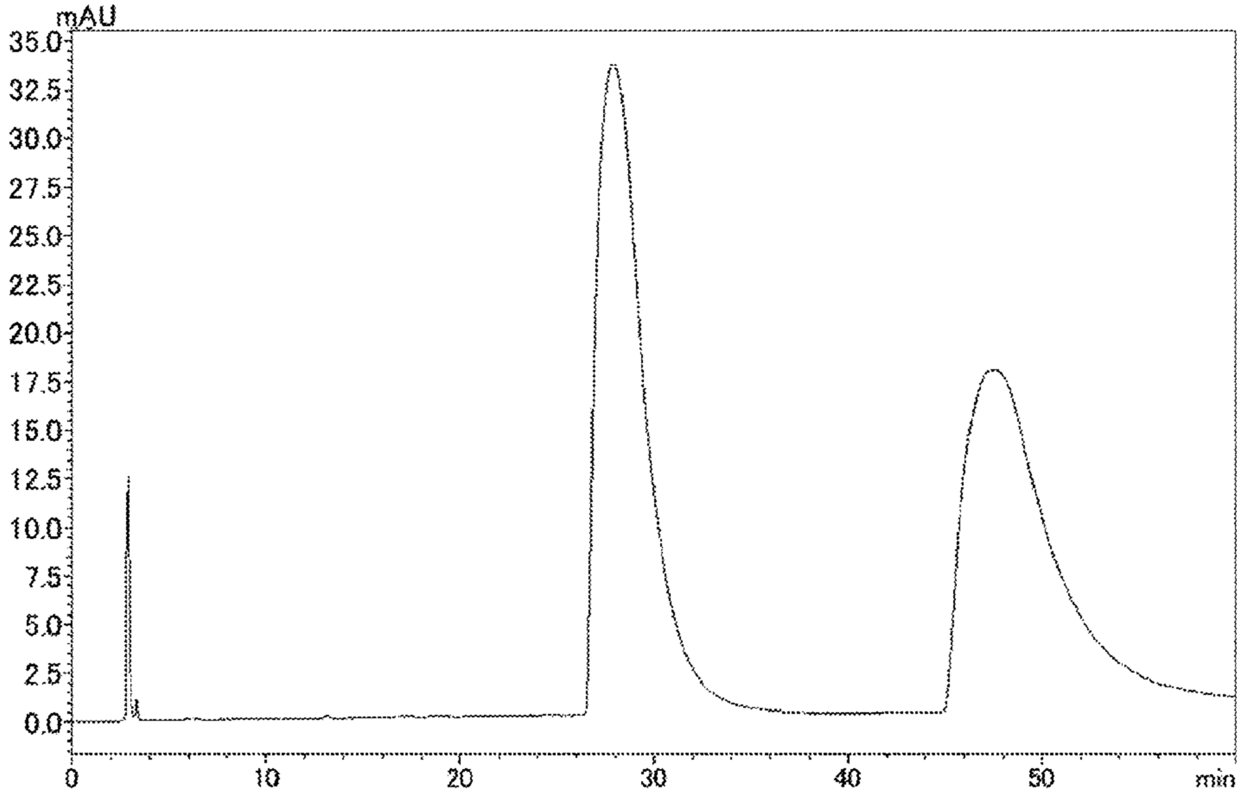
mAU
35.0
32.5
30.0
27.5
25.0
22.5
20.0
17.5
15.0
12.5
10.0
7.5
5.0
2.5
0.0
0
10
20
30
40
50
min

FIG. 3

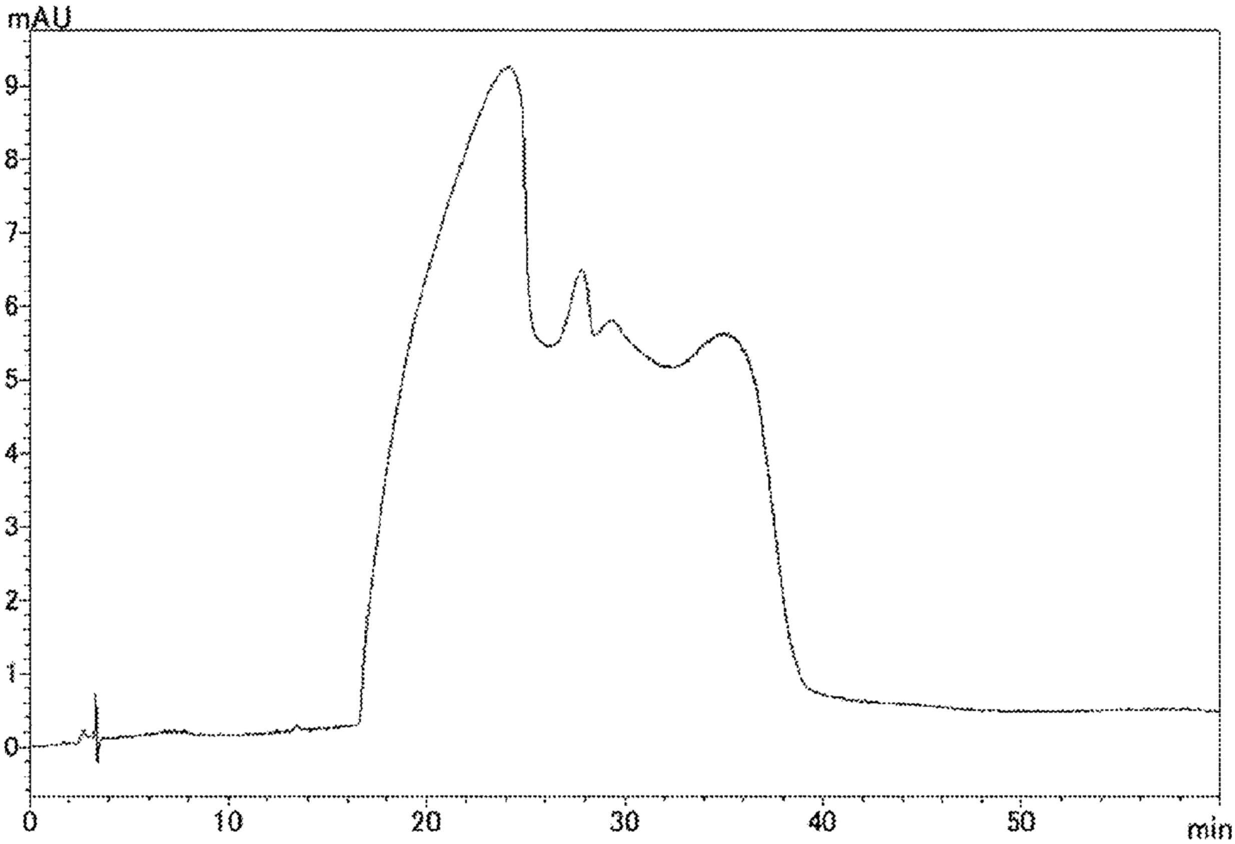


FIG. 4

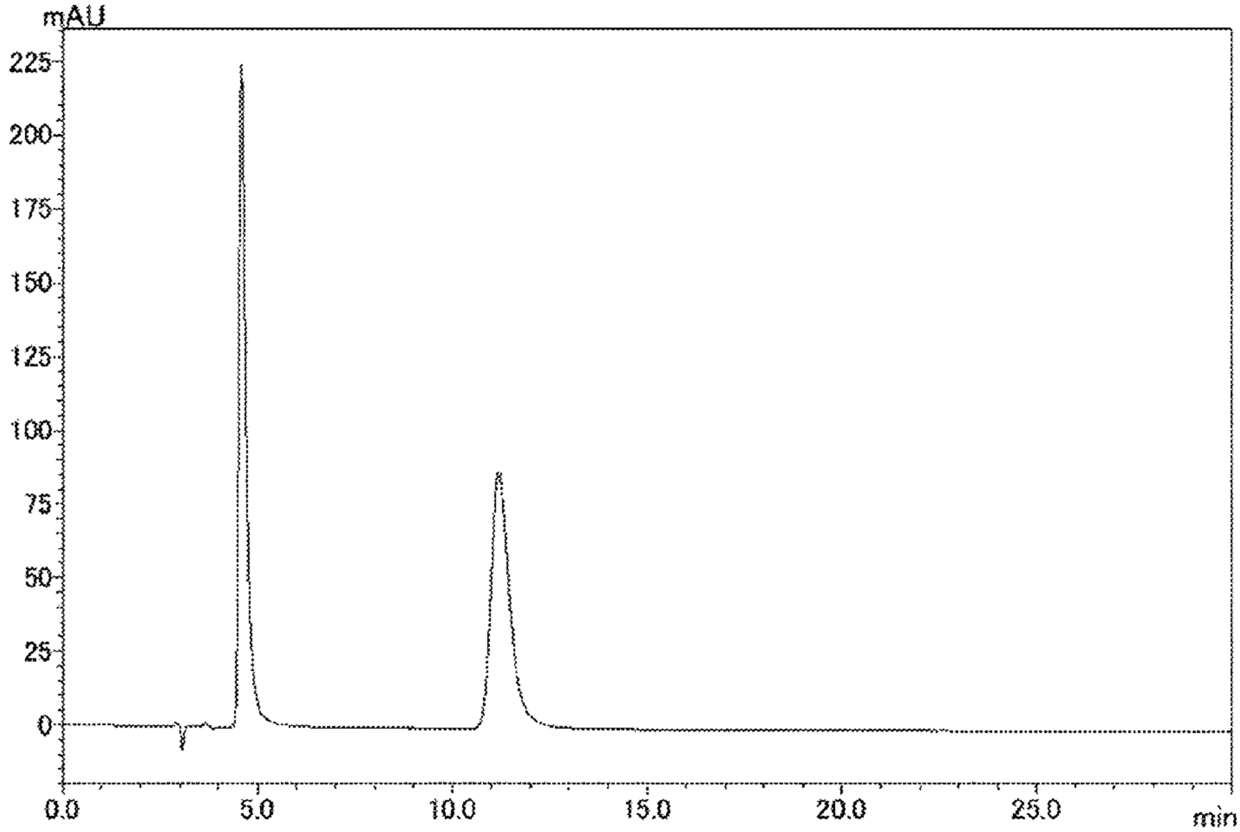


FIG. 5

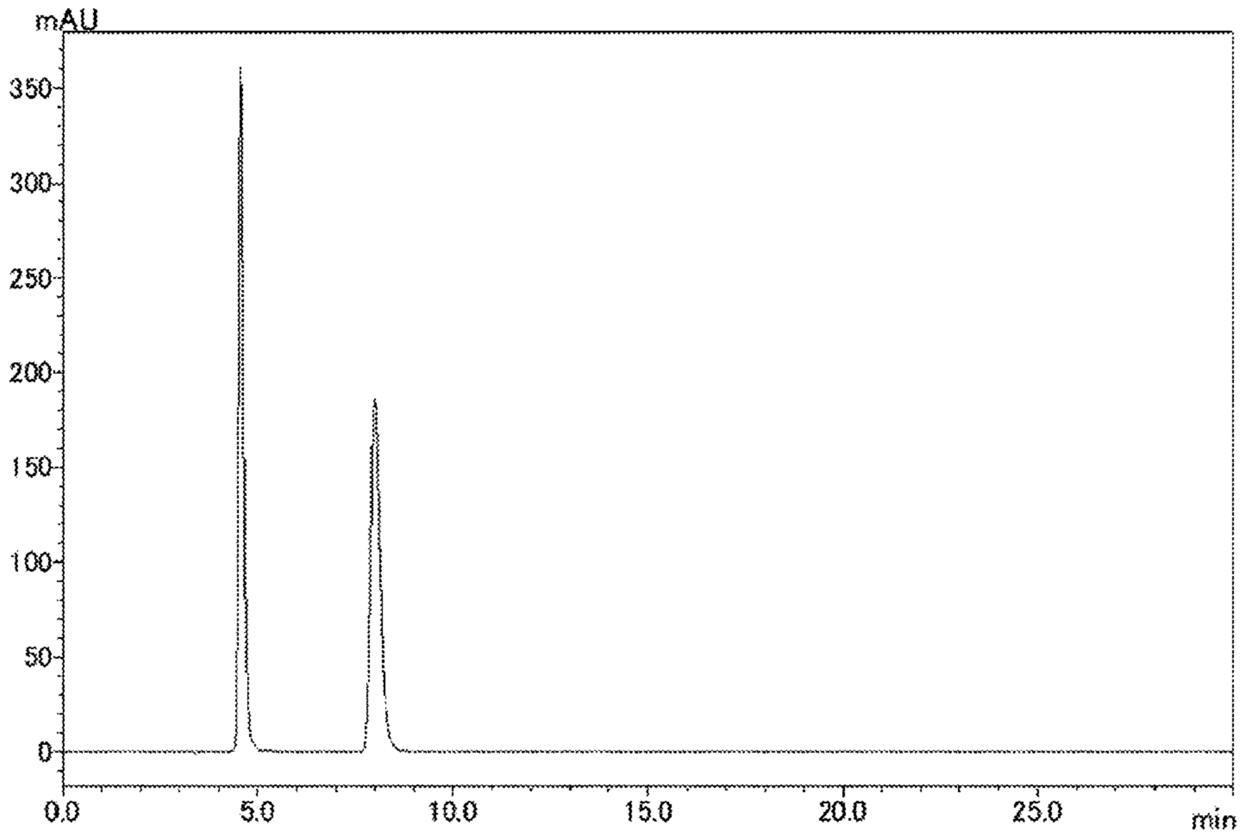


FIG. 6

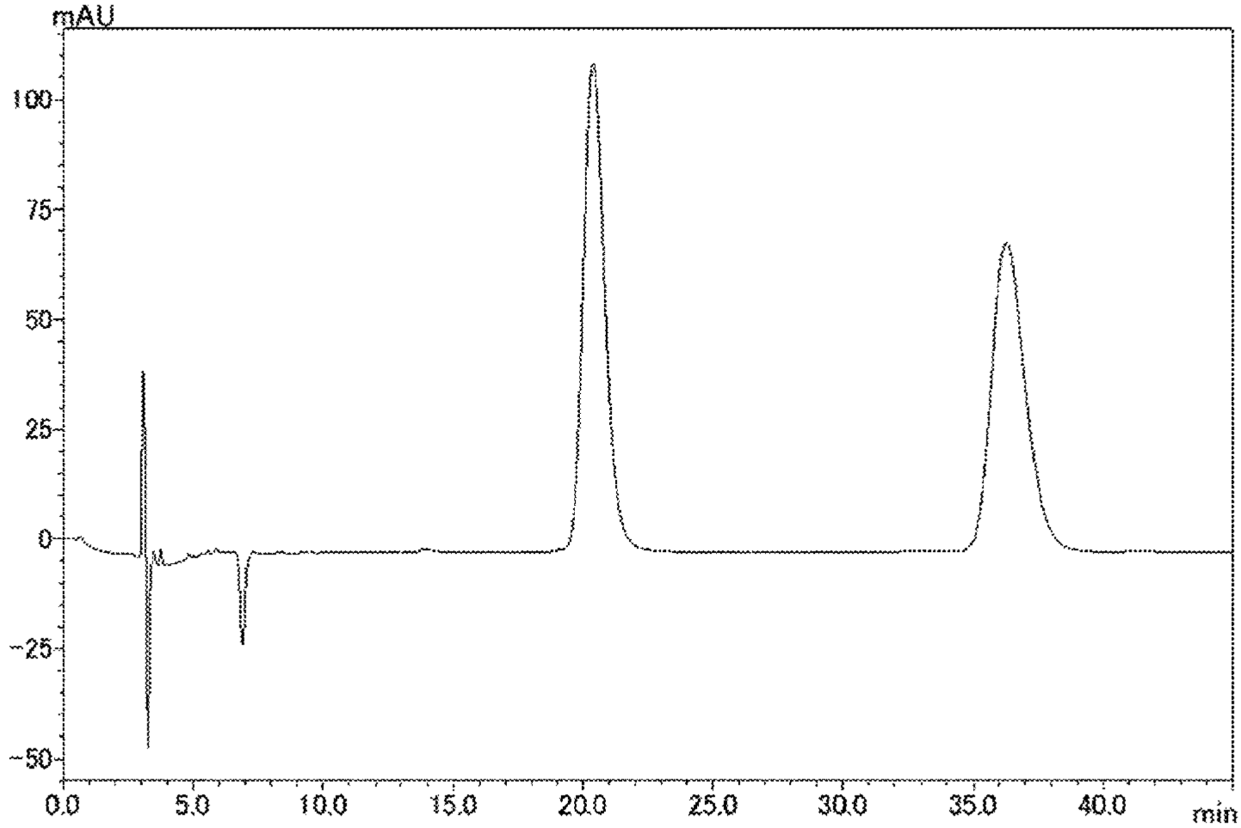


FIG. 7

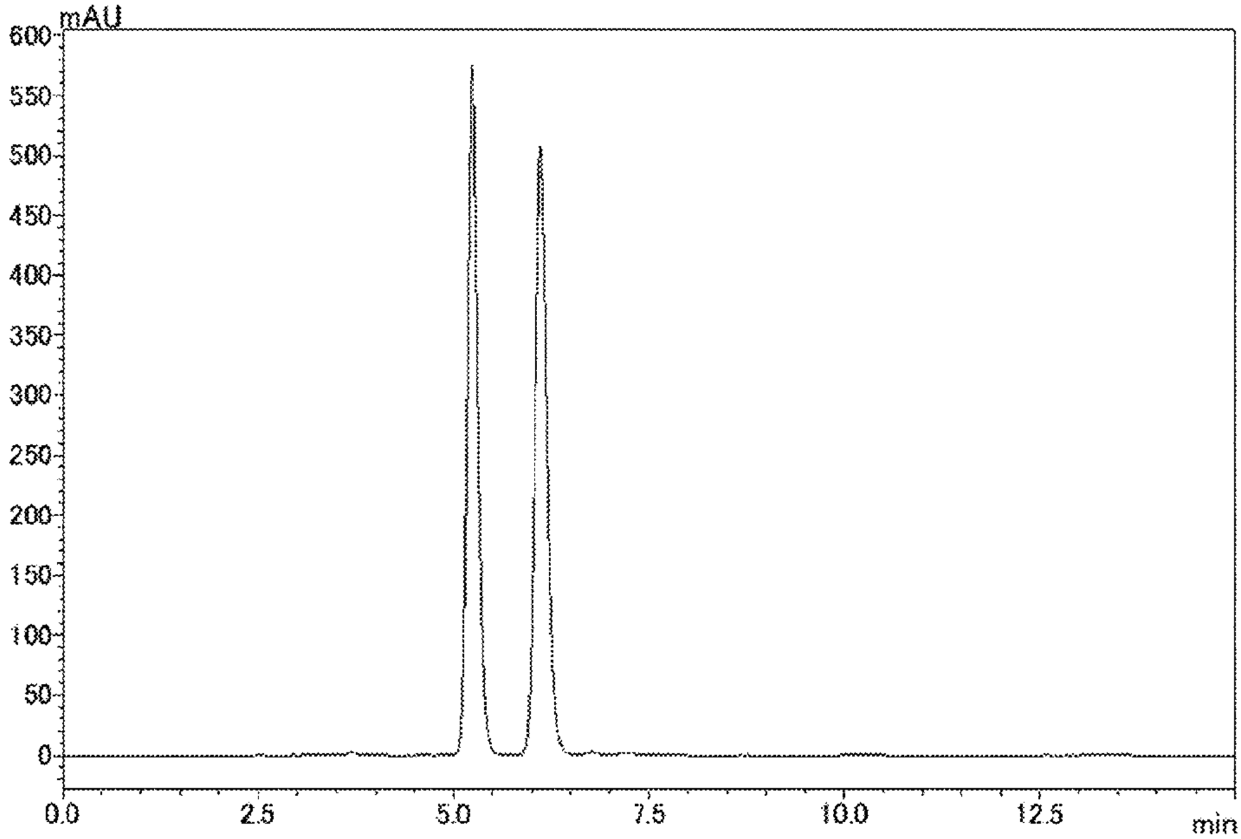
mAU
600
550
500
450
400
350
300
250
200
150
100
50
0
0.0
2.5
5.0
7.5
10.0
12.5
min

FIG. 8

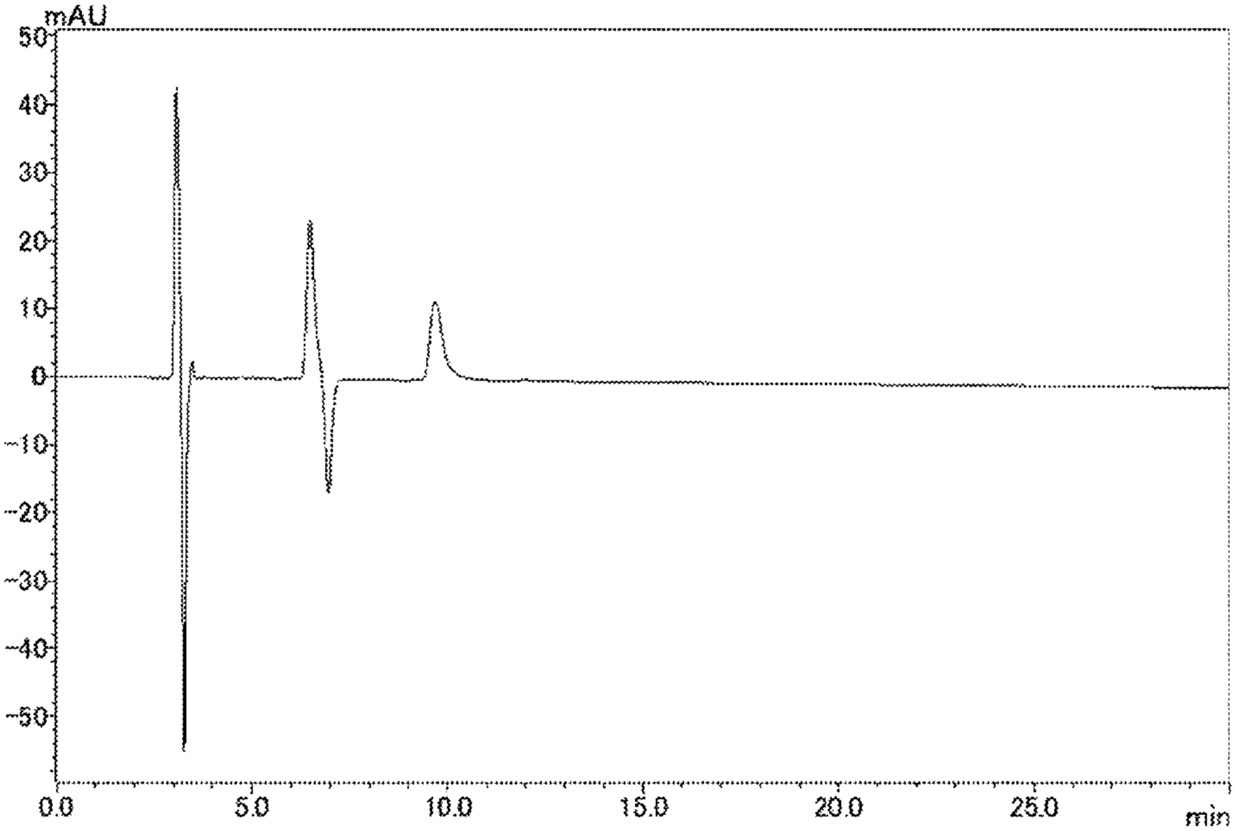


FIG. 9

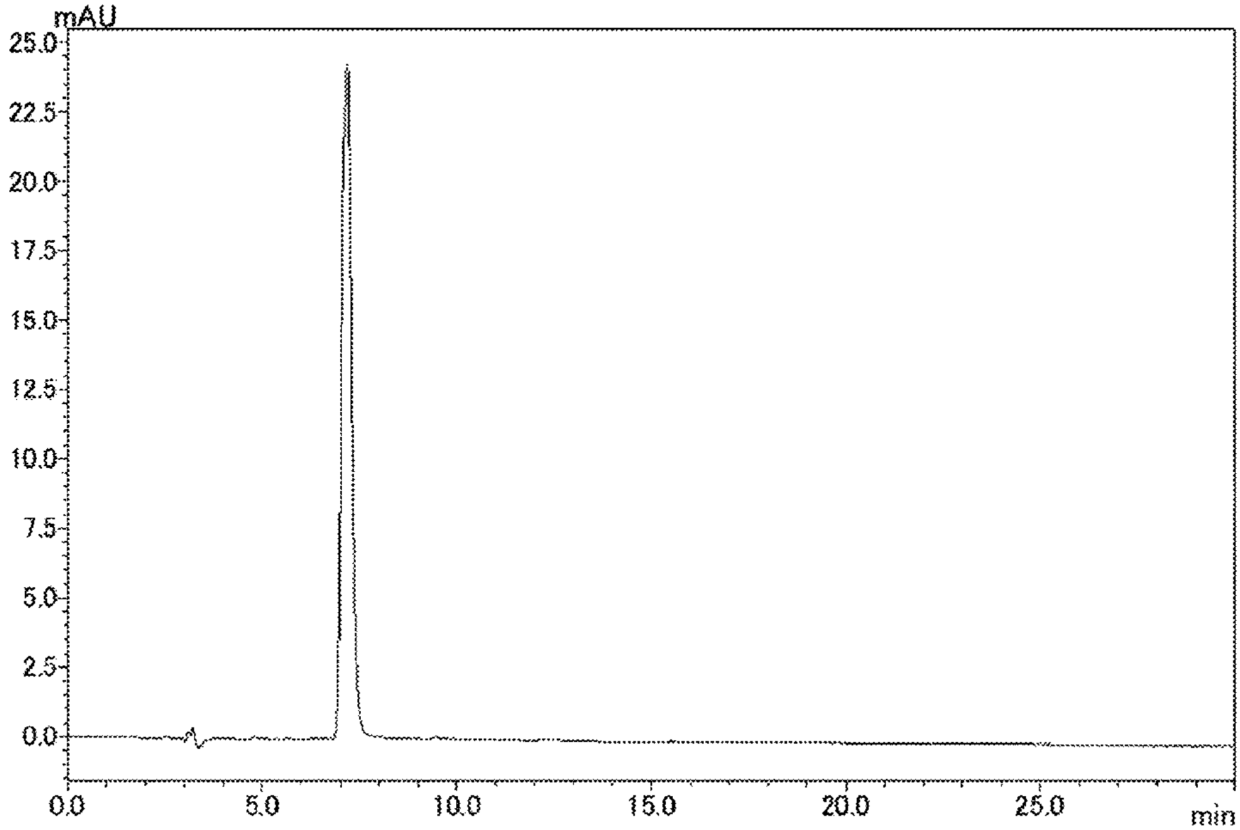
mAU
25.0
22.5
20.0
17.5
15.0
12.5
10.0
7.5
5.0
2.5
0.0
0.0
5.0
10.0
15.0
20.0
25.0
min

FIG. 10

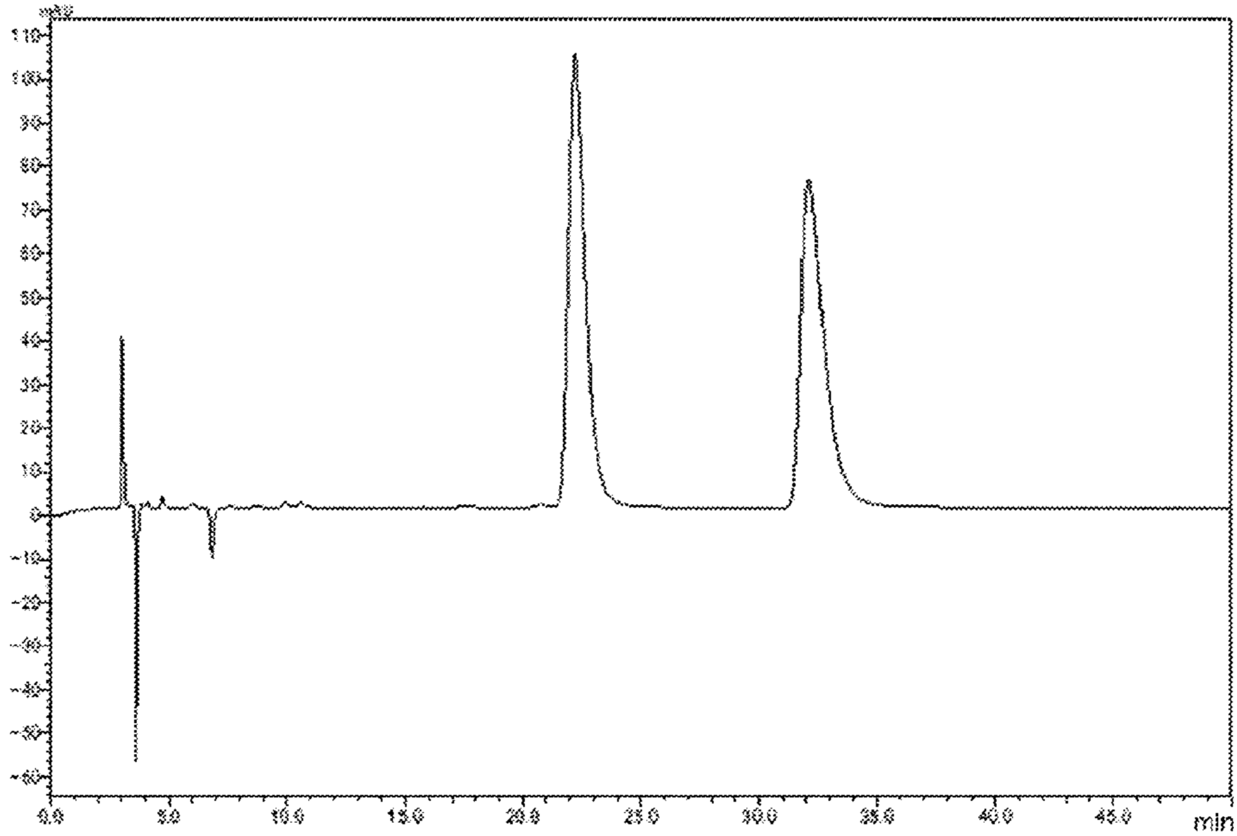
mV
110
100
90
80
70
60
50
40
30
20
10
0
-10
-20
-30
-40
-50
-60
0.0
5.0
10.0
15.0
20.0
25.0
30.0
35.0
40.0
45.0
min

FIG. 11

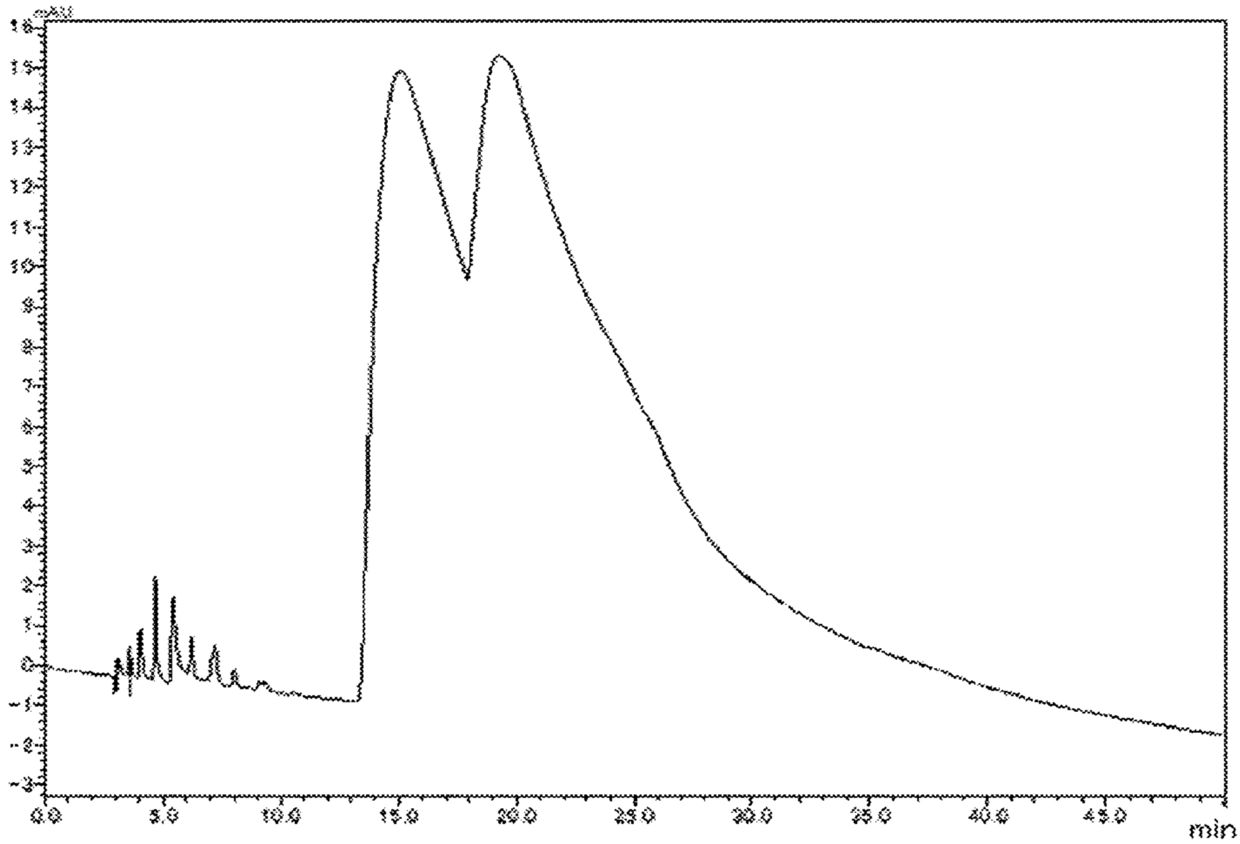


FIG. 12

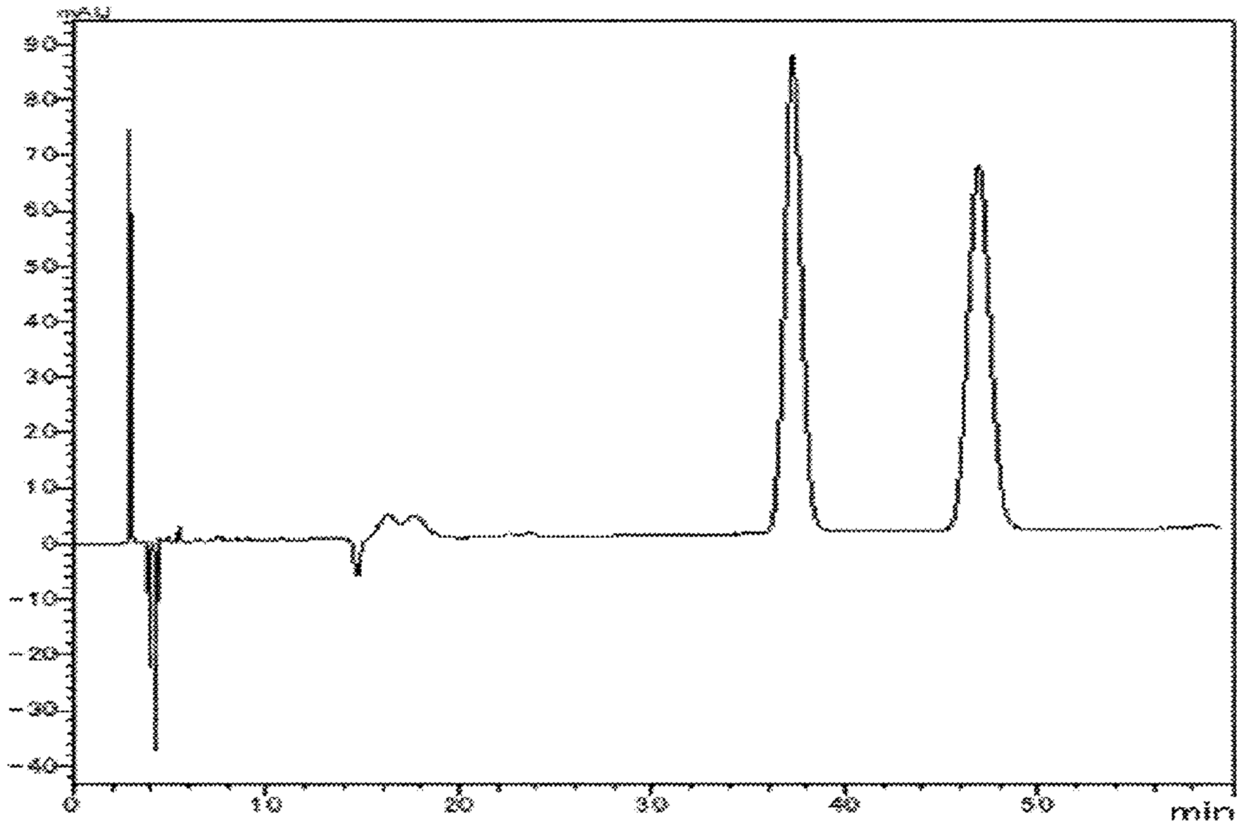


FIG. 13

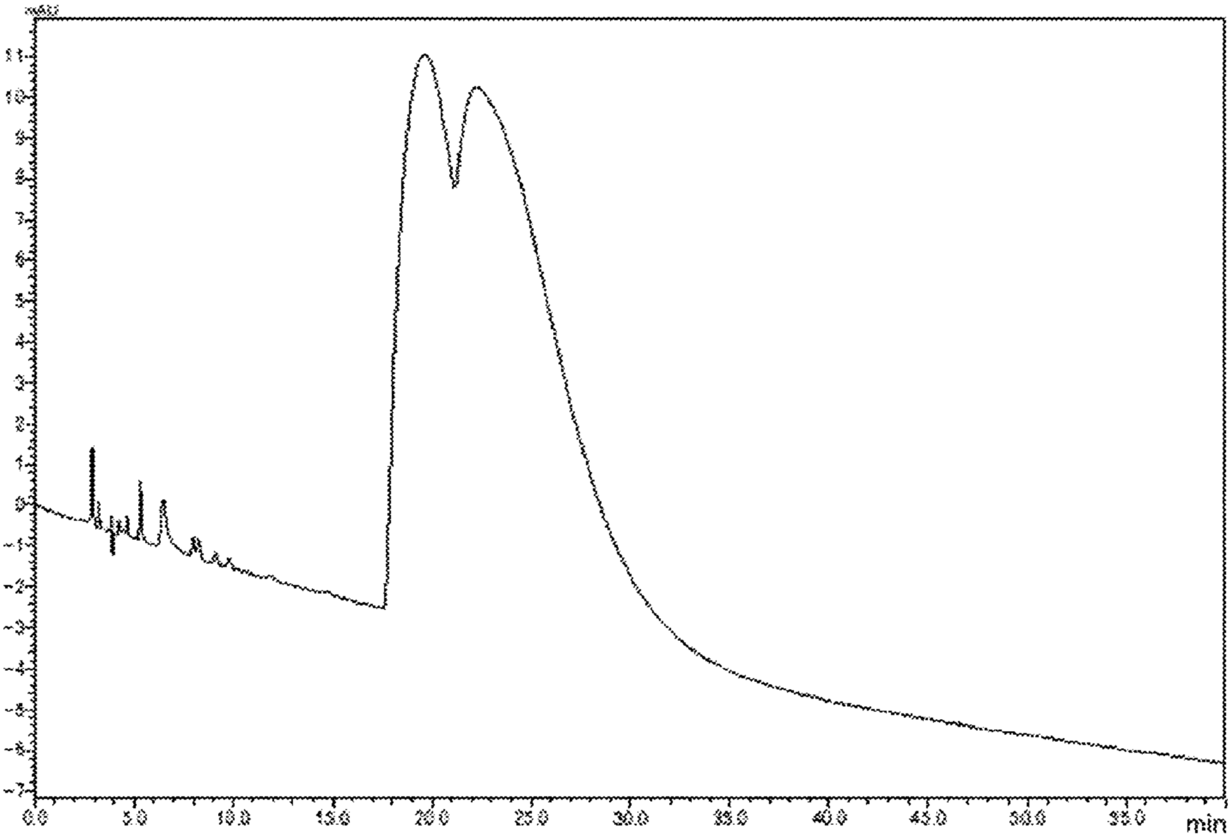
mAU
11
10
9
8
7
6
5
4
3
2
1
0
-1
-2
-3
-4
-5
-6
-7
0.0
5.0
10.0
15.0
20.0
25.0
30.0
35.0
40.0
45.0
50.0
55.0
min

FIG. 14

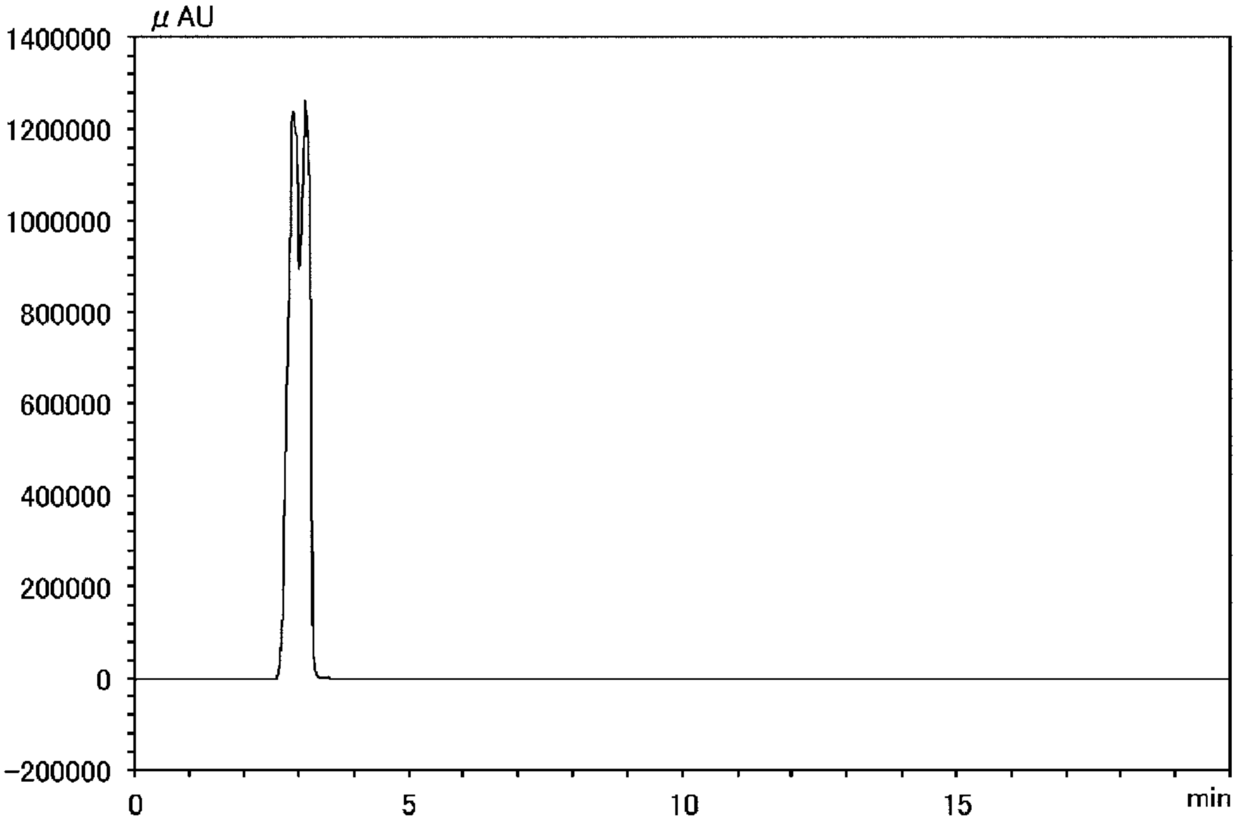
μ AU
1400000
1200000
1000000
800000
600000
400000
200000
0
−200000
0
5
10
15
min

FIG. 15

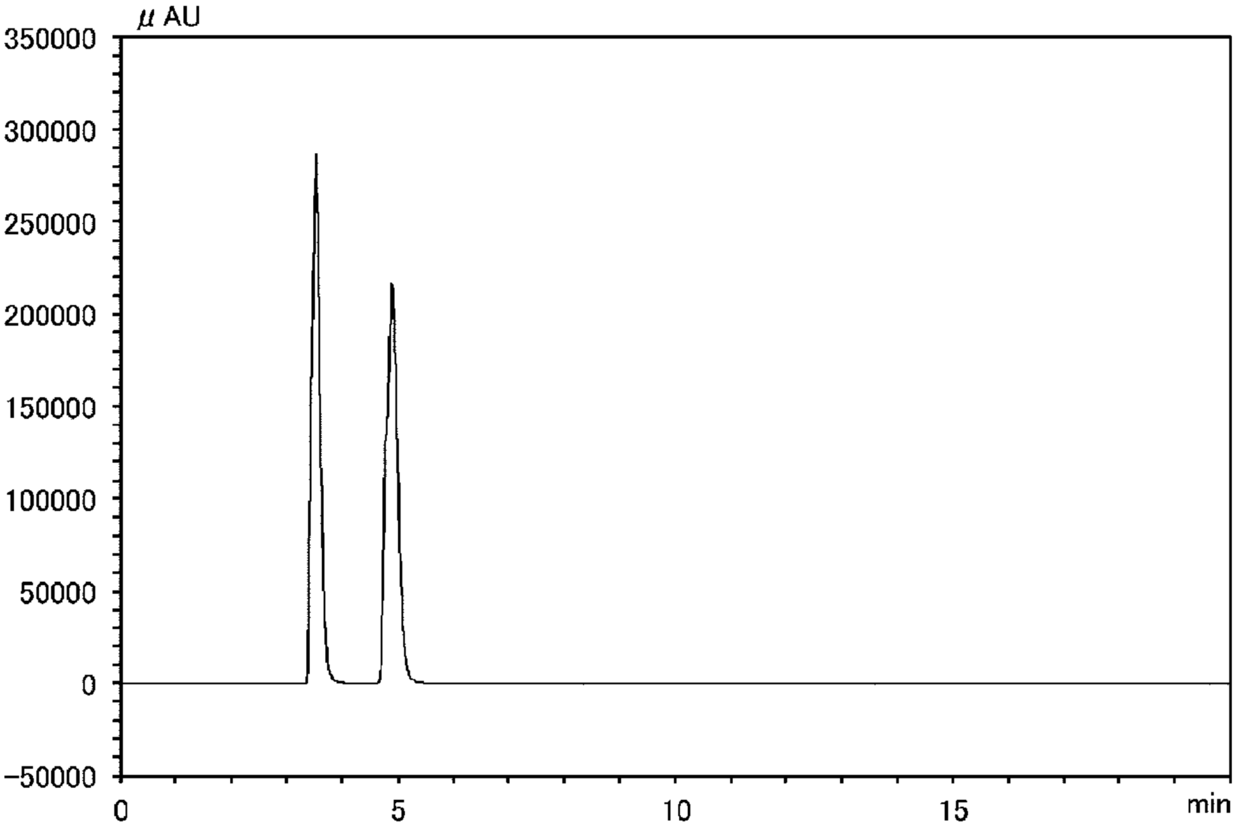
μ AU
350000
300000
250000
200000
150000
100000
50000
0
−50000
0
5
10
15
min

FIG. 16

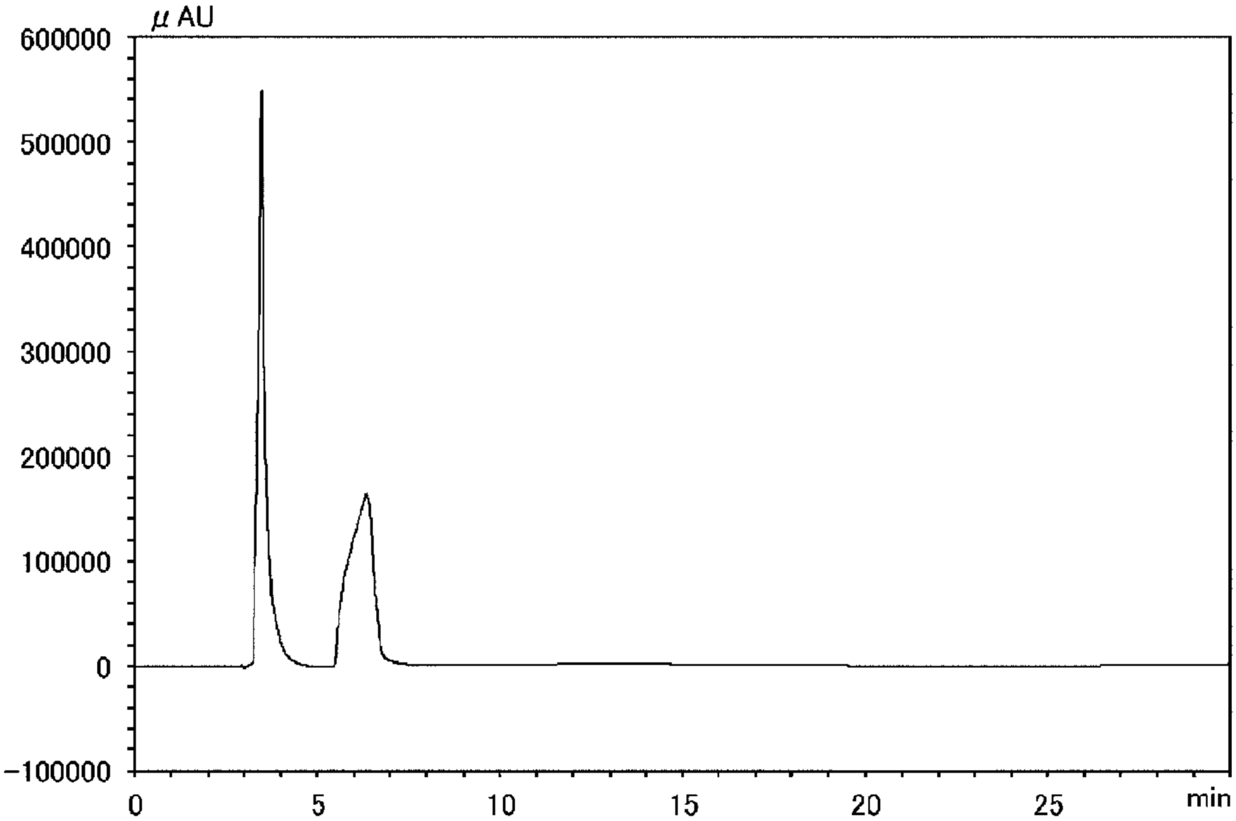
μ AU
600000
500000
400000
300000
200000
100000
0
−100000
0
5
10
15
20
25
min

FIG. 17

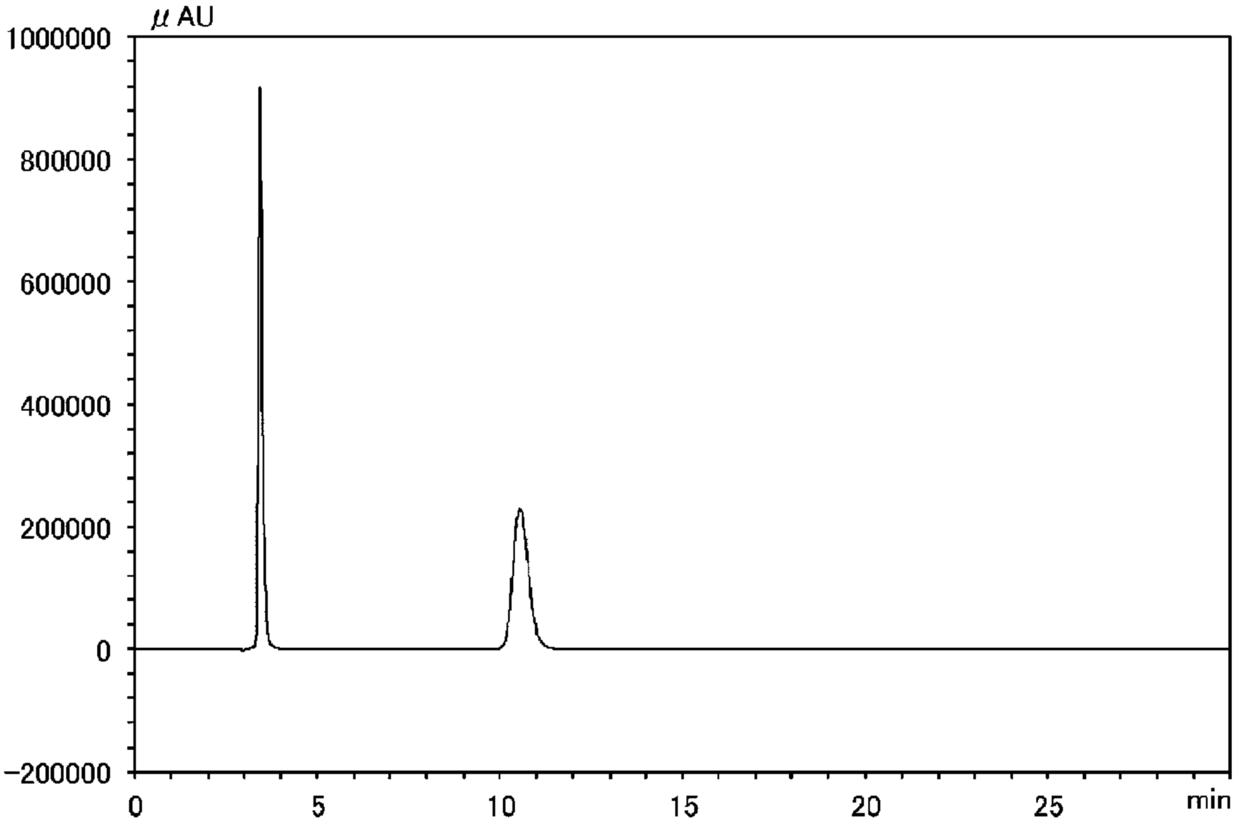
μ AU
1000000
800000
600000
400000
200000
0
−200000
0
5
10
15
20
25
min

FIG. 18

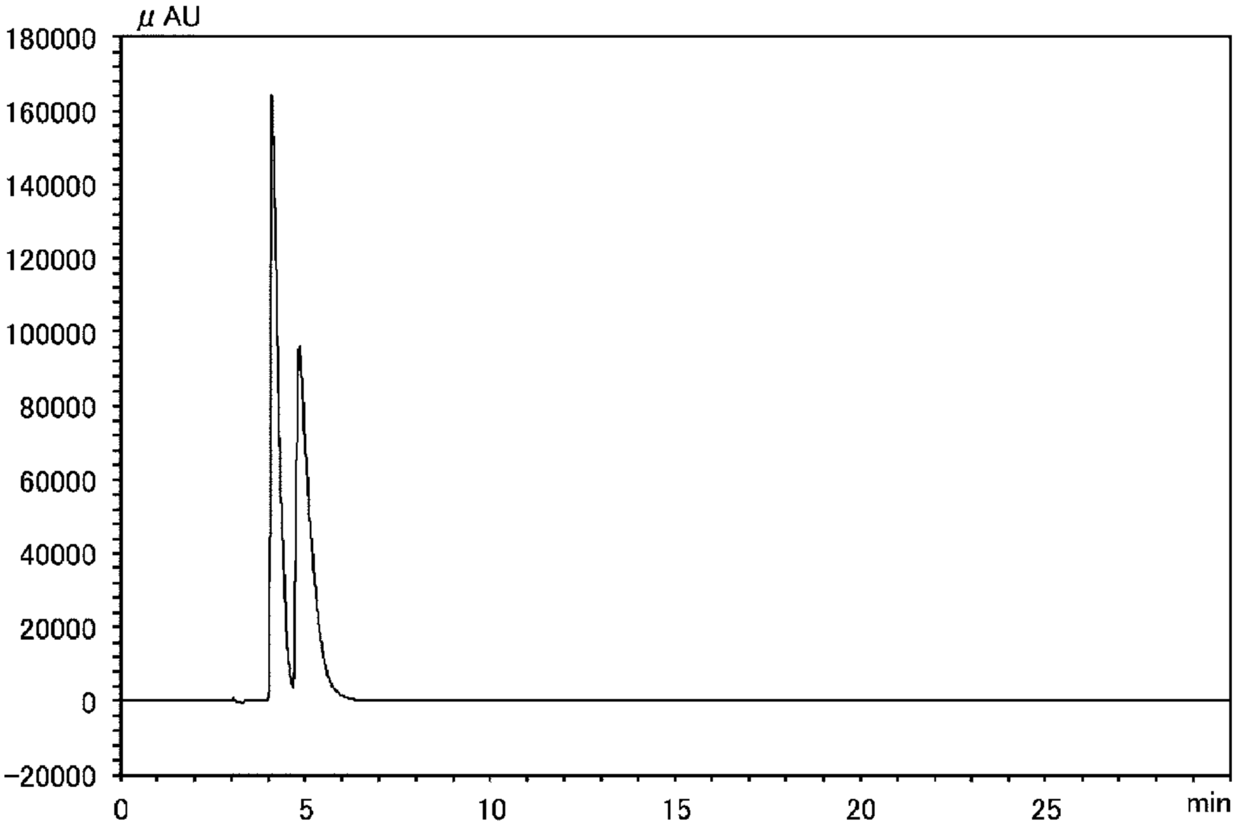
μ AU
180000
160000
140000
120000
100000
80000
60000
40000
20000
0
−20000
0
5
10
15
20
25
min

FIG. 19

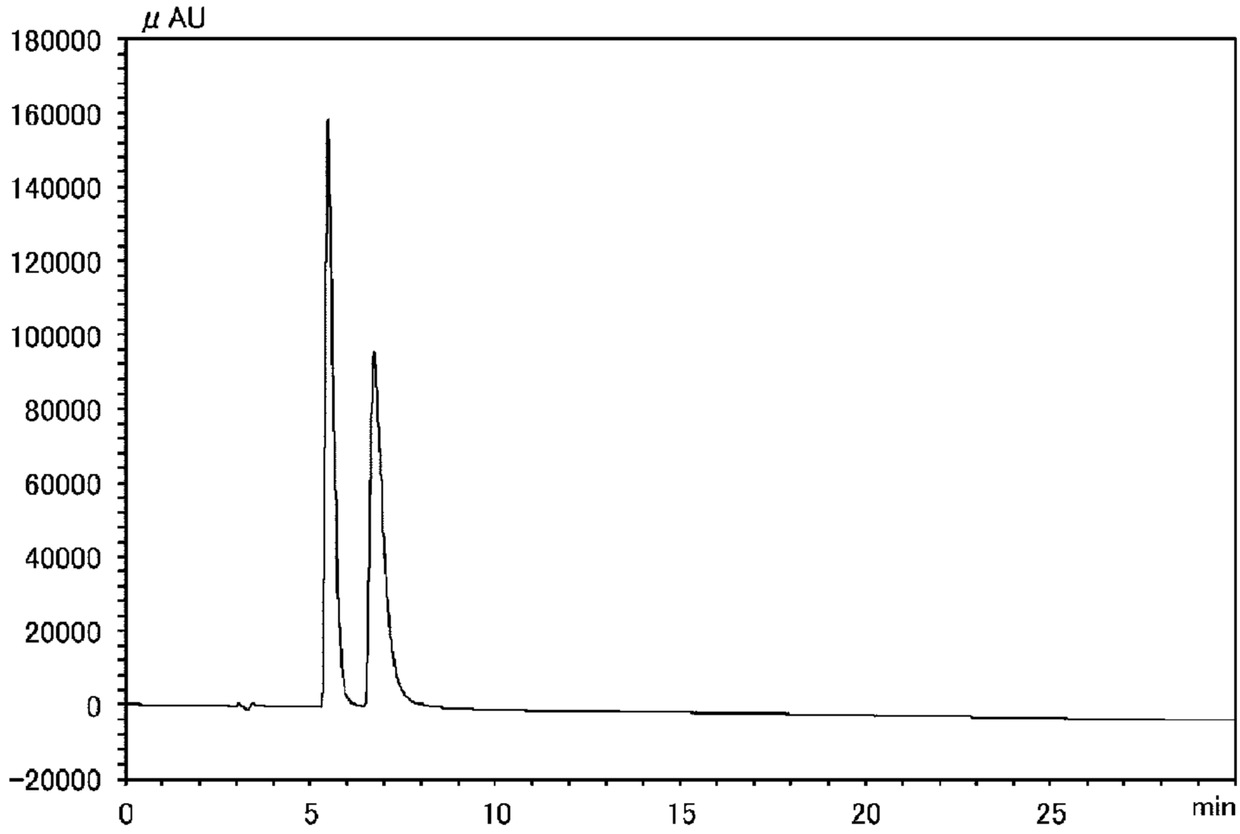
μ AU
180000
160000
140000
120000
100000
80000
60000
40000
20000
0
-20000
0
5
10
15
20
25
min

FIG. 20

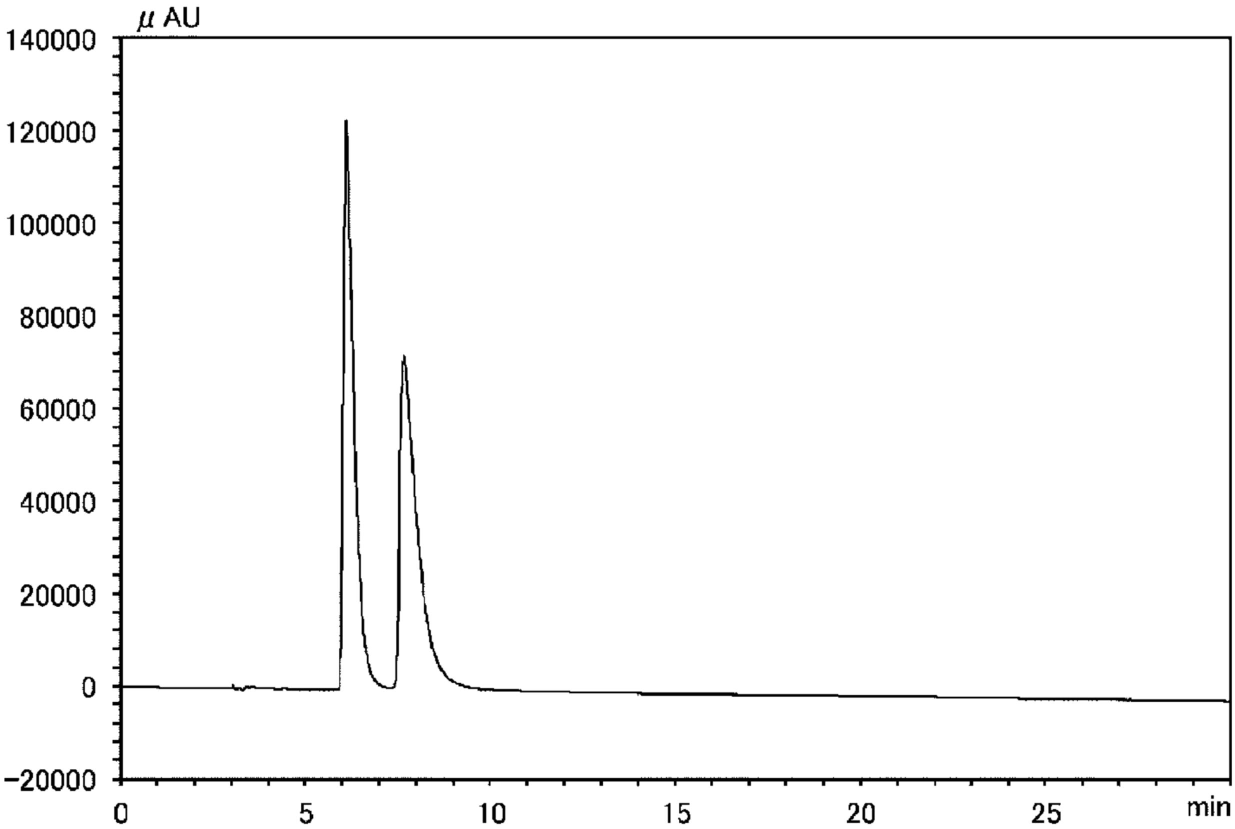
μ AU
140000
120000
100000
80000
60000
40000
20000
0
−20000
0
5
10
15
20
25
min

FIG. 21

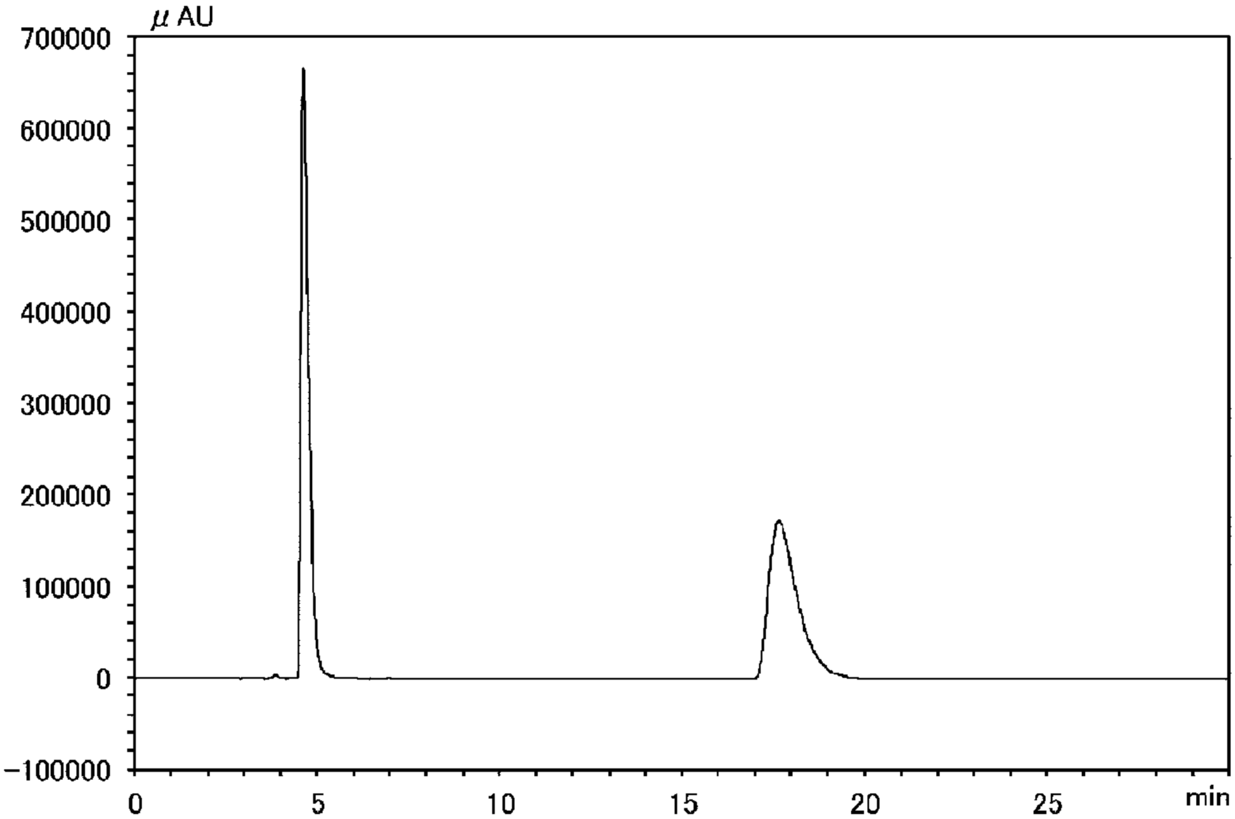
μ AU
700000
600000
500000
400000
300000
200000
100000
0
−100000
0
5
10
15
20
25
min

FIG. 22

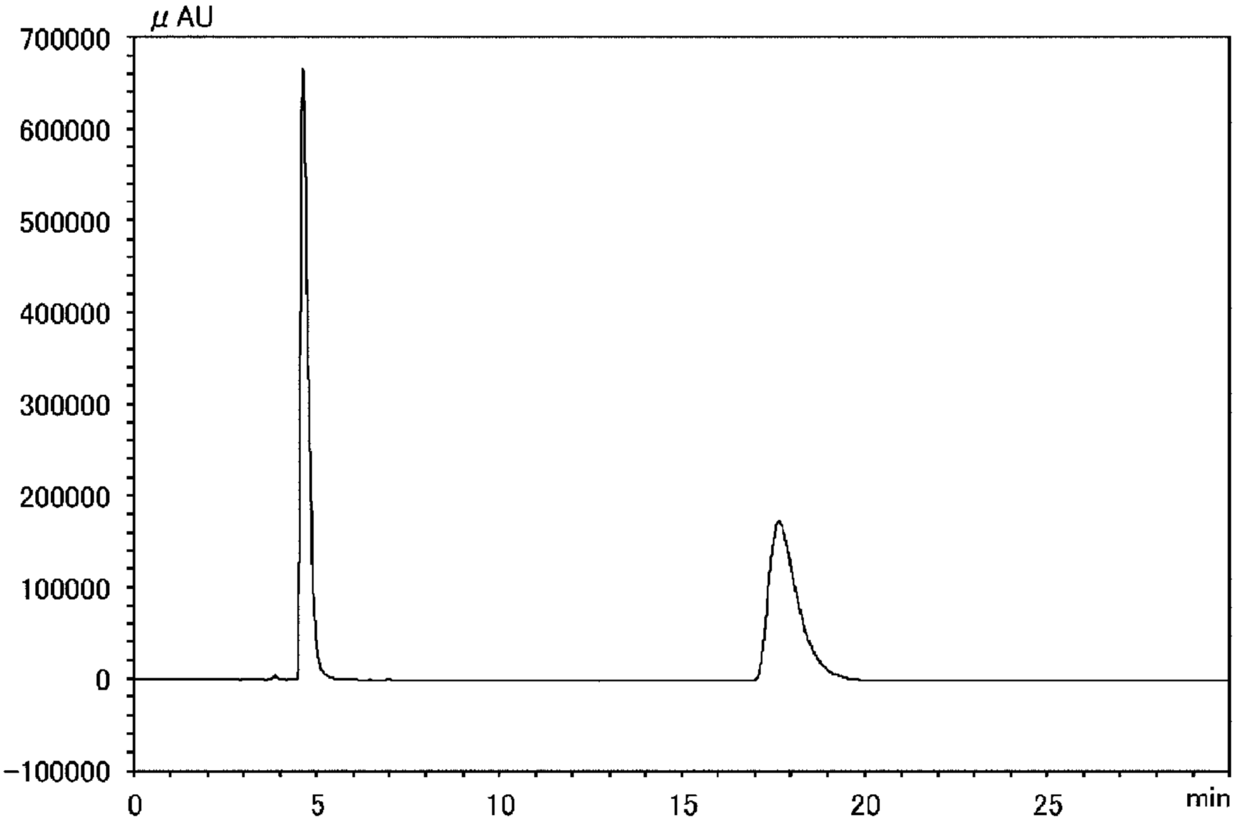
μ AU
700000
600000
500000
400000
300000
200000
100000
0
−100000
0
5
10
15
20
25
min

FIG. 23

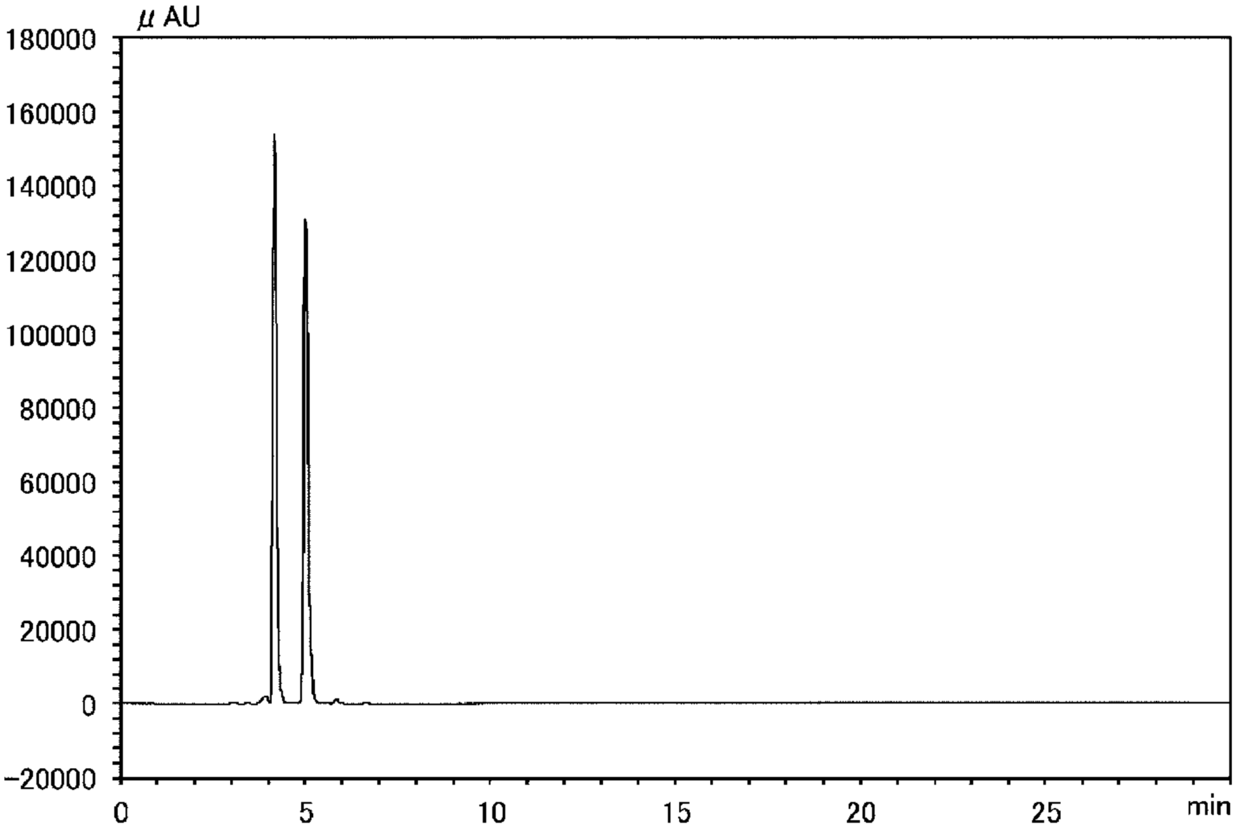
μ AU
180000
160000
140000
120000
100000
80000
60000
40000
20000
0
−20000
0
5
10
15
20
25
min

FIG. 24

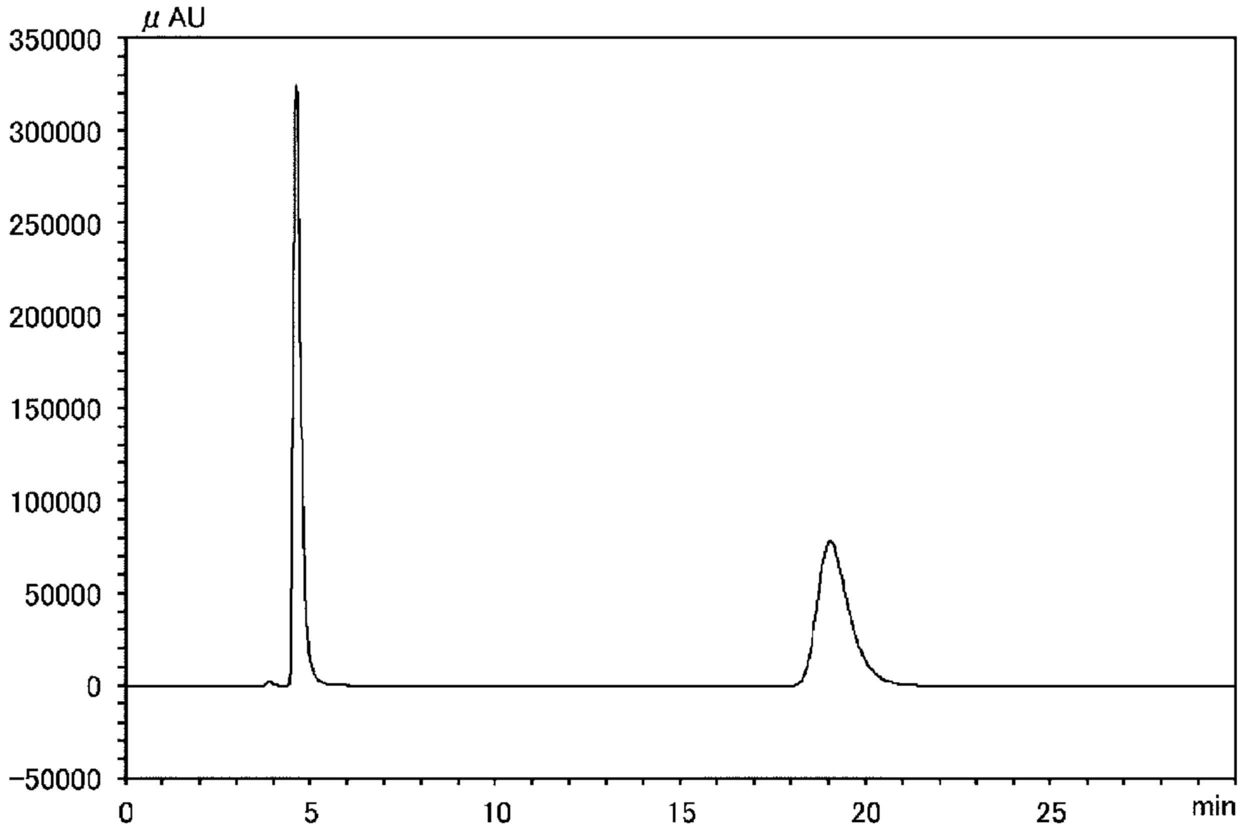
μ AU
350000
300000
250000
200000
150000
100000
50000
0
−50000
0
5
10
15
20
25
min

FIG. 25

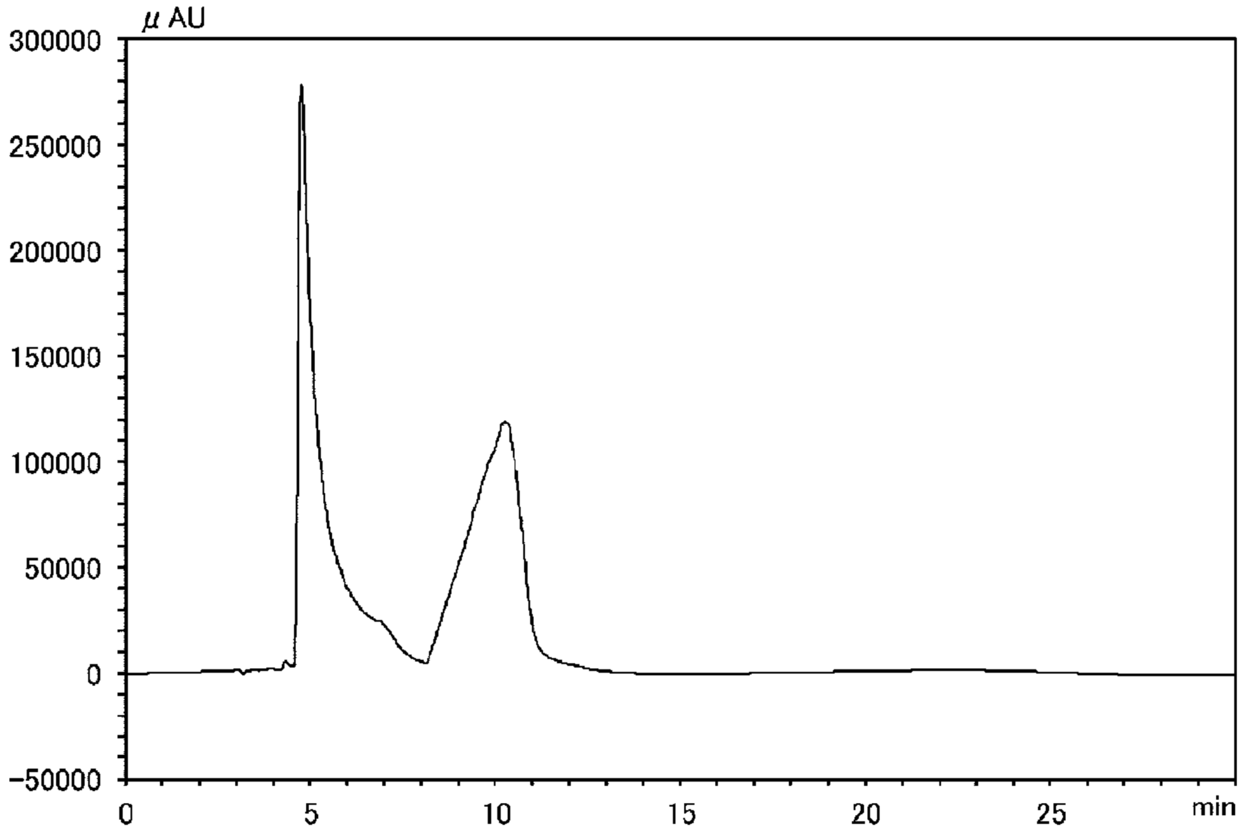
μ AU
300000
250000
200000
150000
100000
50000
0
−50000
0
5
10
15
20
25
min

FIG. 26

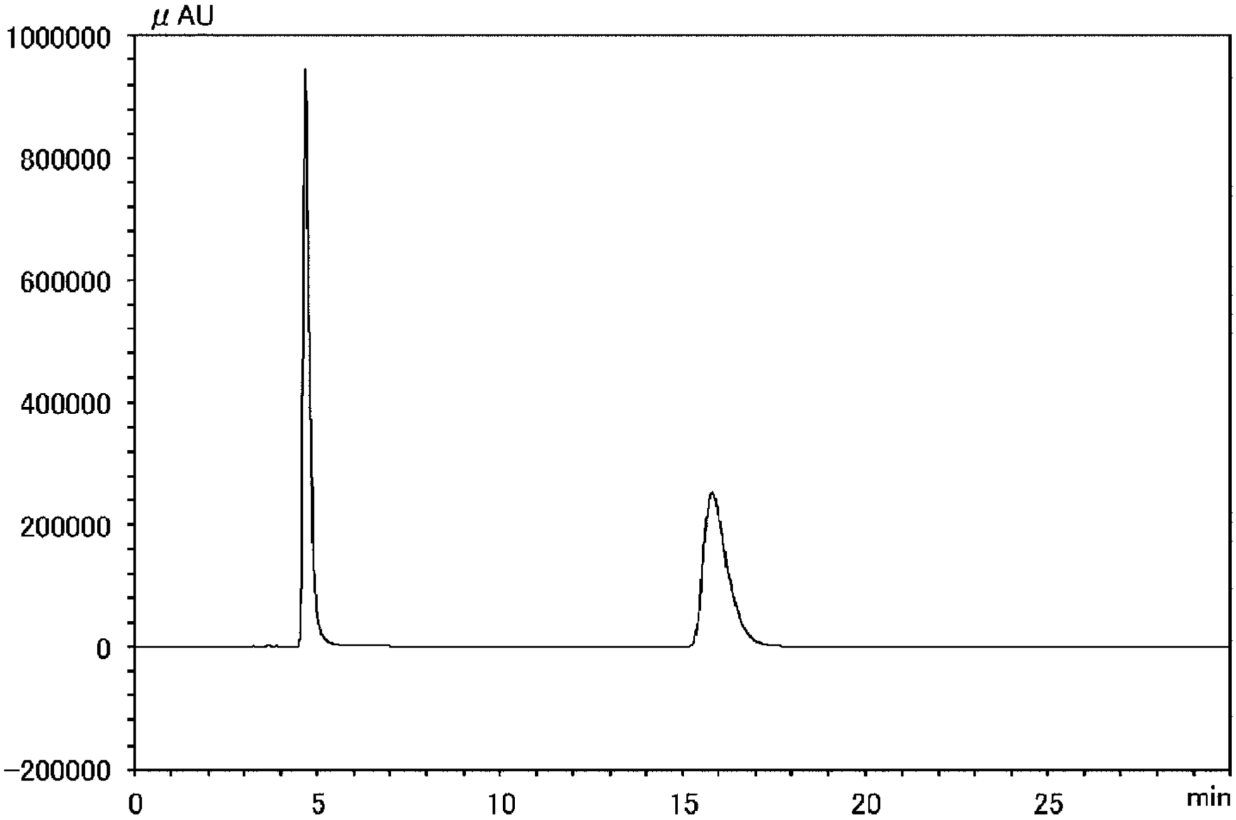
μ AU
1000000
800000
600000
400000
200000
0
−200000
0
5
10
15
20
25
min

FIG. 27

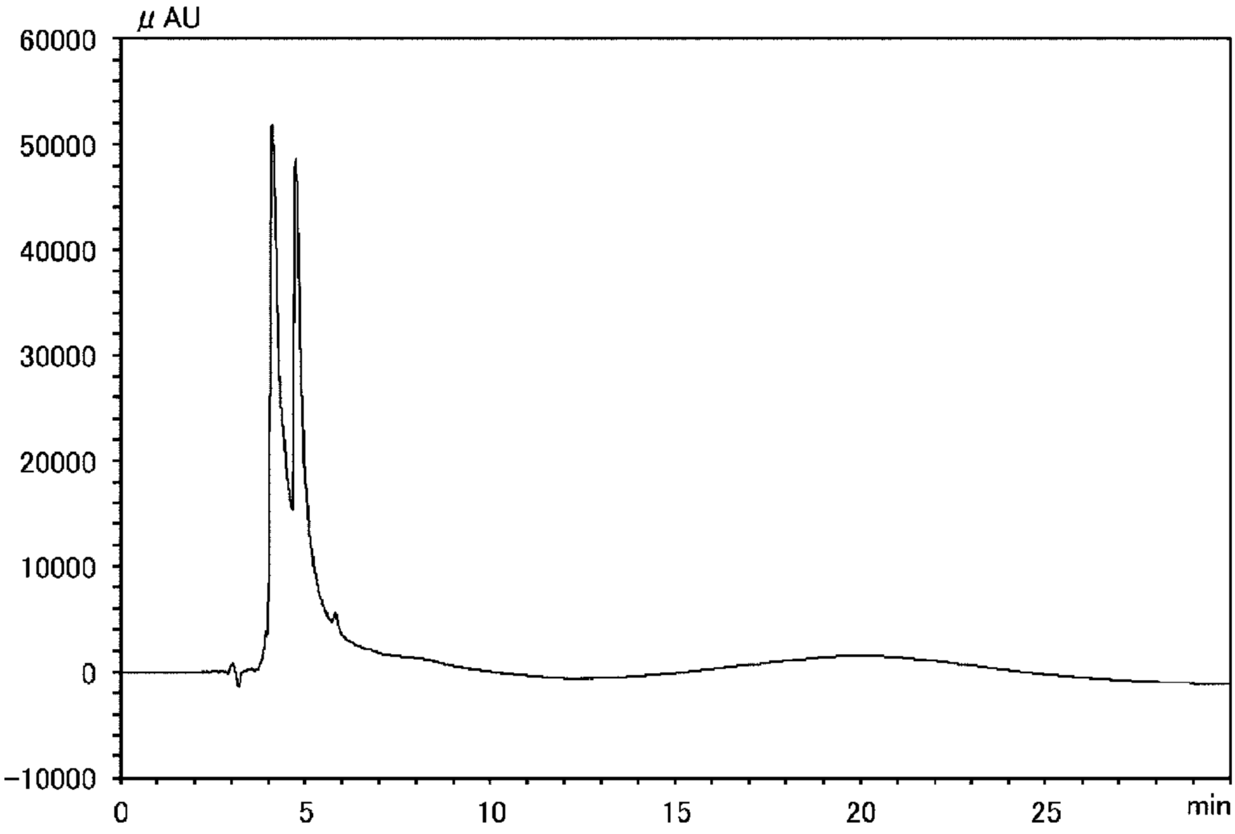
μ AU
60000
50000
40000
30000
20000
10000
0
−10000
0
5
10
15
20
25
min

FIG. 28

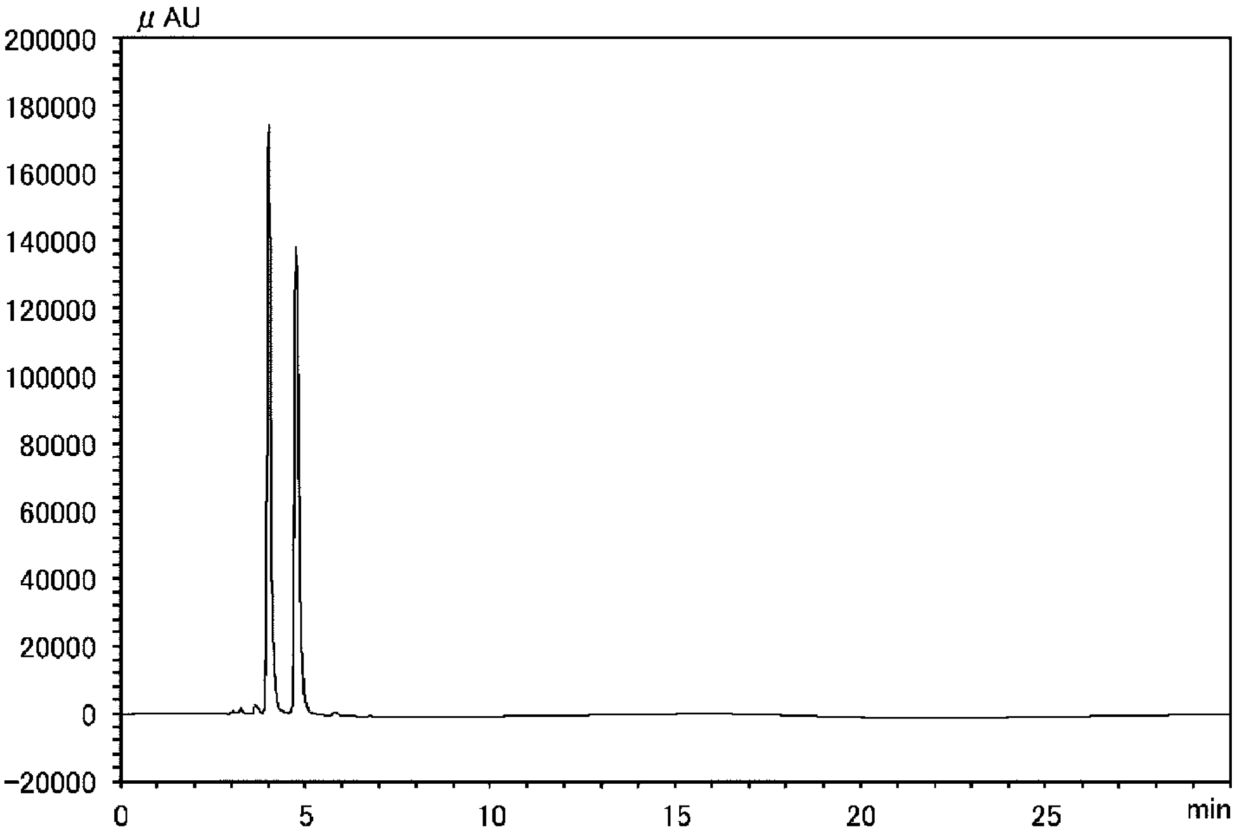
μ AU
200000
180000
160000
140000
120000
100000
80000
60000
40000
20000
0
-20000
0
5
10
15
20
25
min

FIG. 29

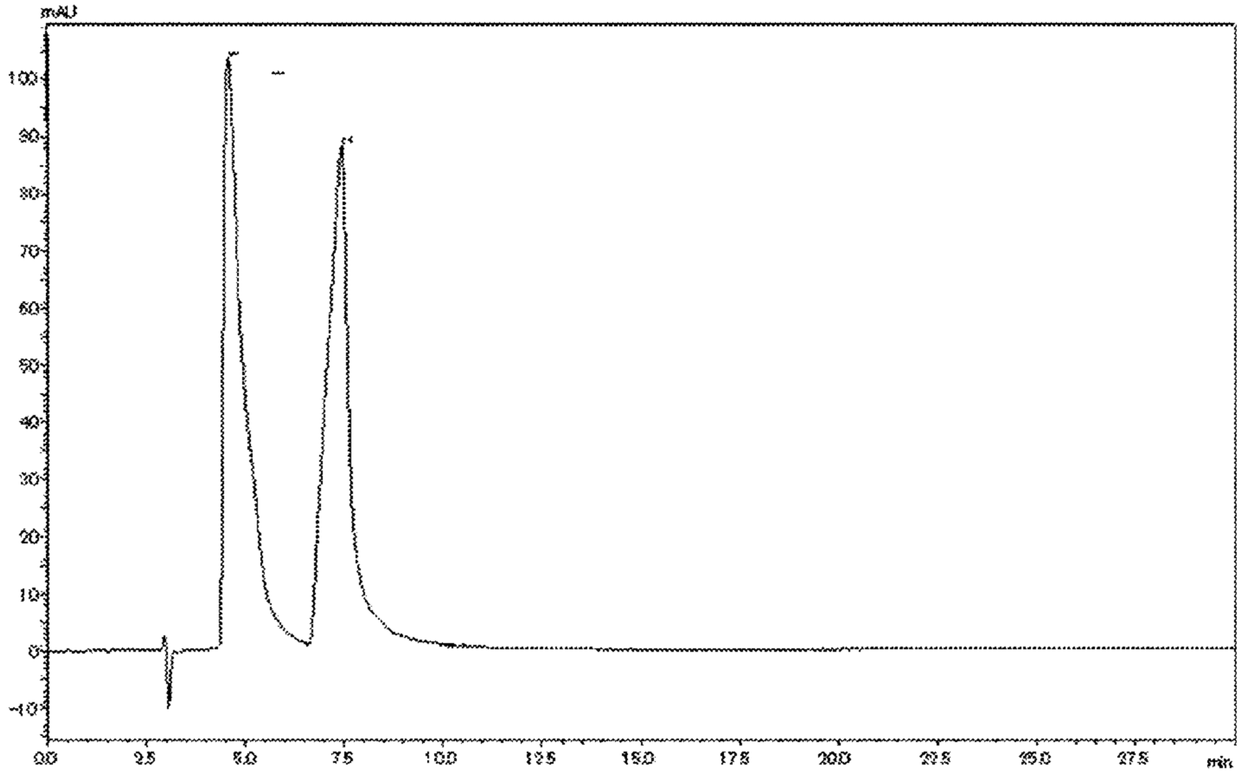
mAU
100
90
80
70
60
50
40
30
20
10
0
-10
0.0
2.5
5.0
7.5
10.0
12.5
15.0
17.5
20.0
22.5
25.0
27.5
min

FIG. 30

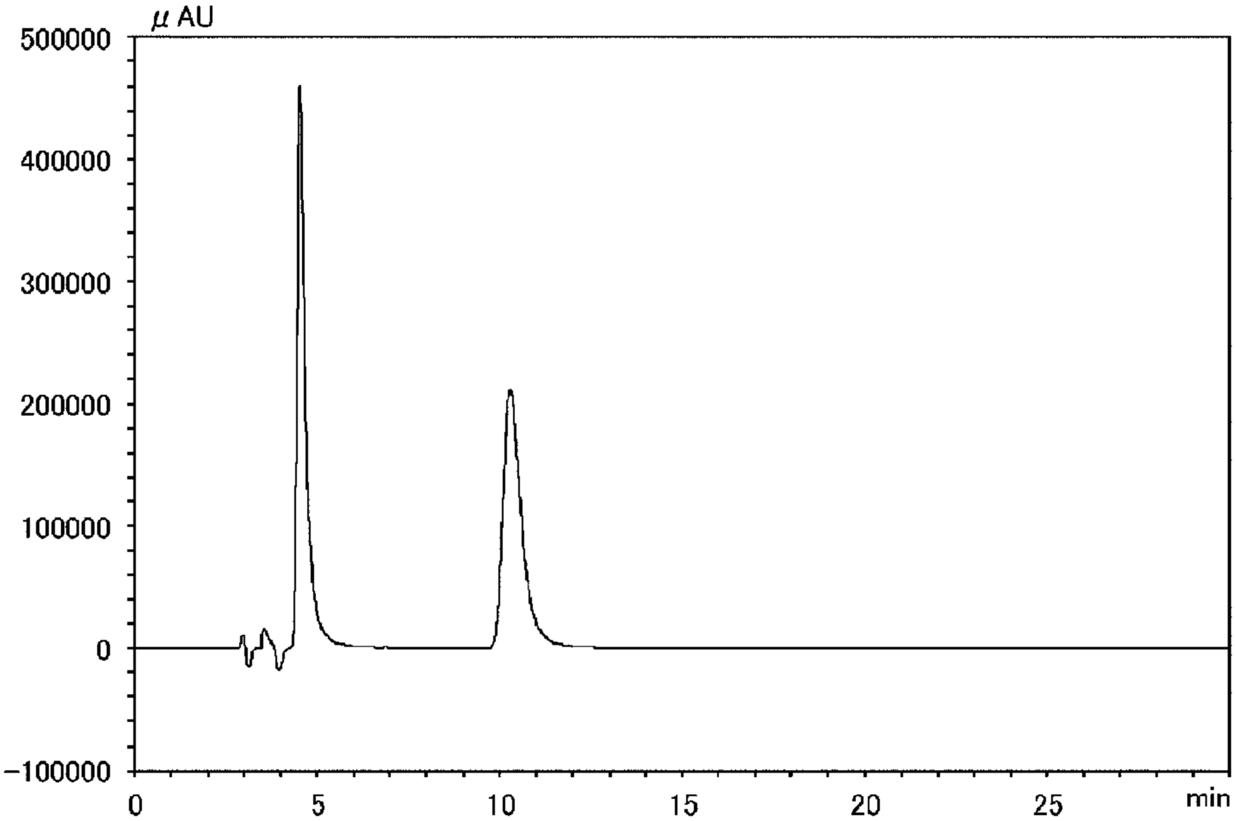
μ AU
500000
400000
300000
200000
100000
0
−100000
0
5
10
15
20
25
min

FIG. 31

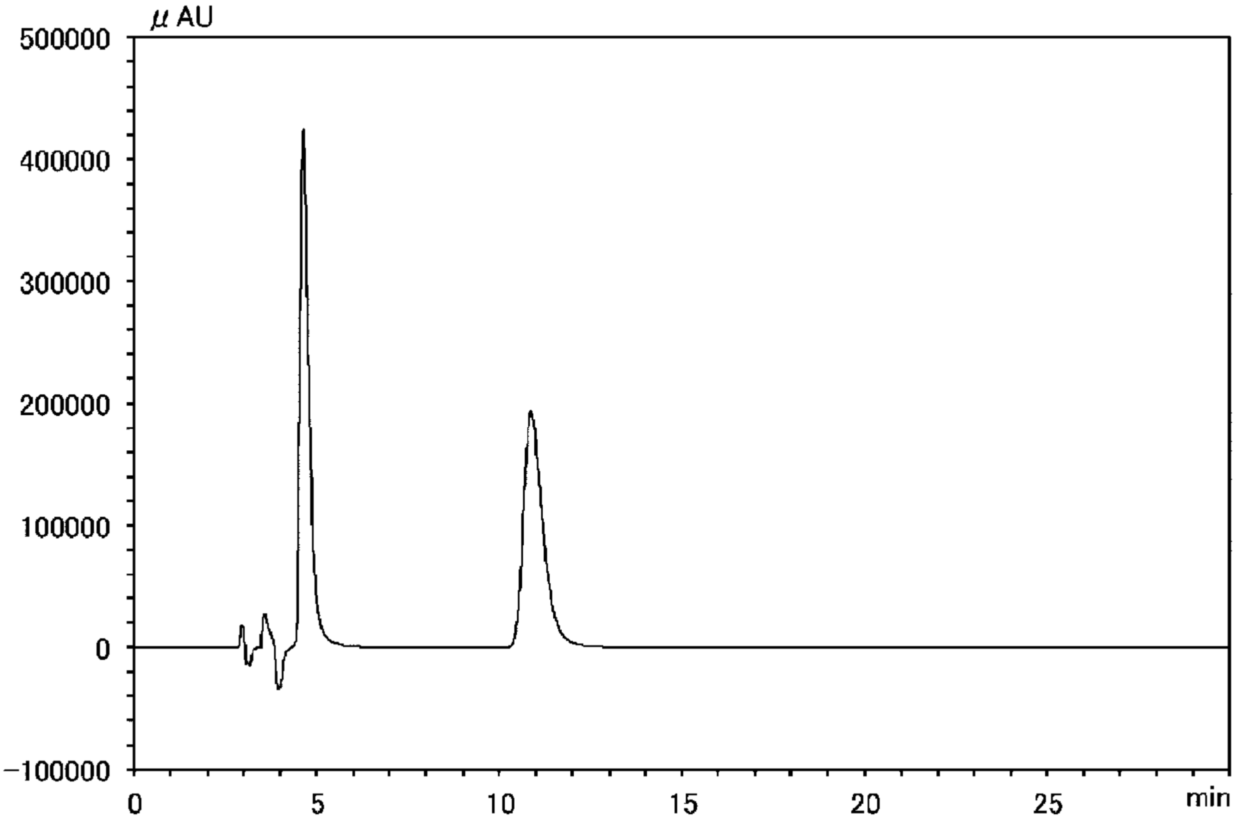
μ AU
500000
400000
300000
200000
100000
0
−100000
0
5
10
15
20
25
min

FIG. 32

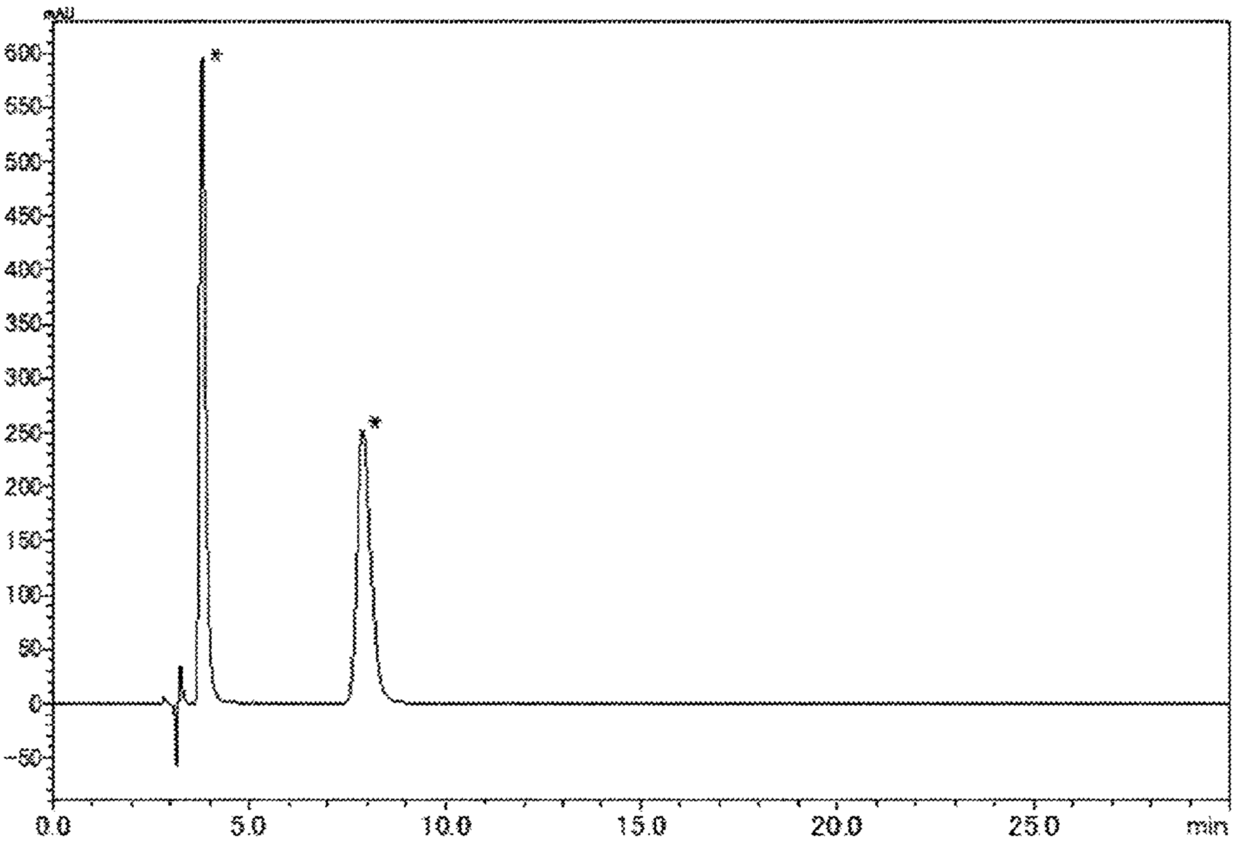
mAU
600
550
500
450
400
350
300
250
200
150
100
50
0
-50
0.0
5.0
10.0
15.0
20.0
25.0
min

FIG. 33

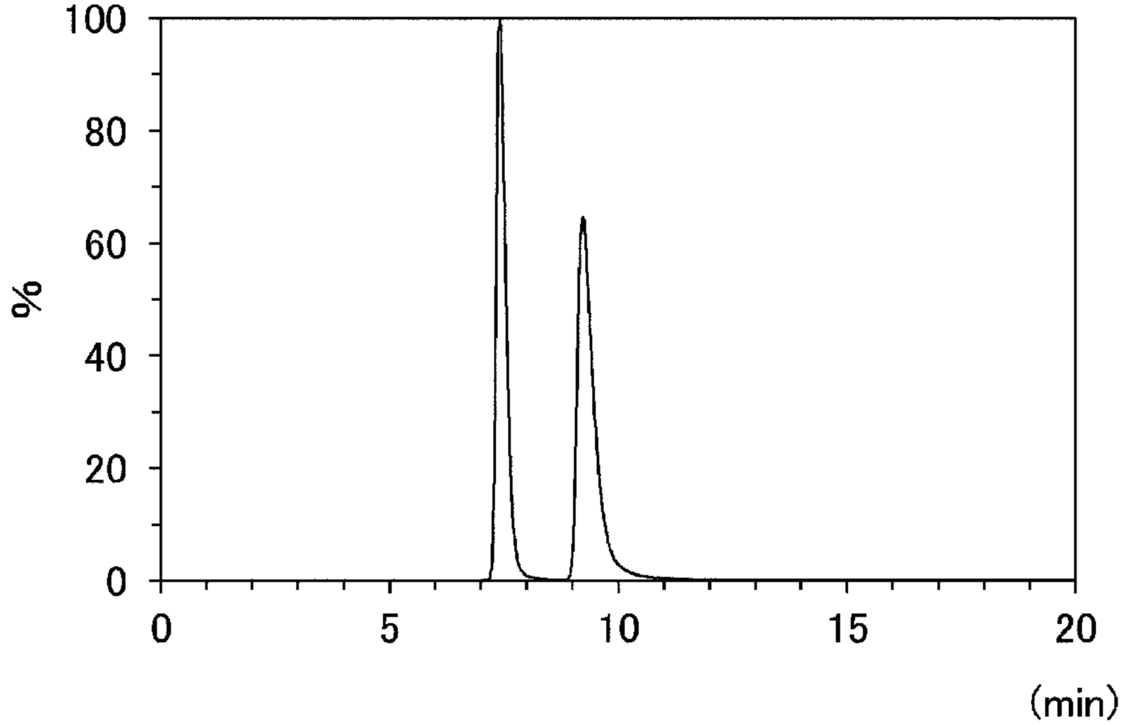


FIG. 34

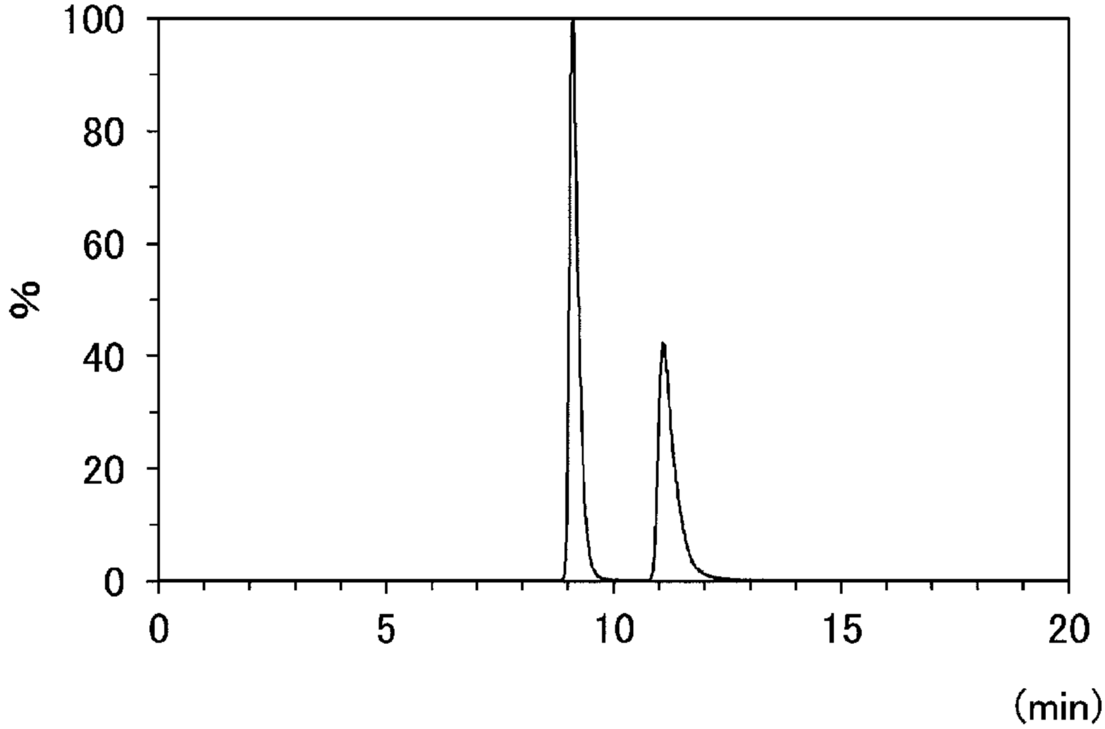


FIG. 35

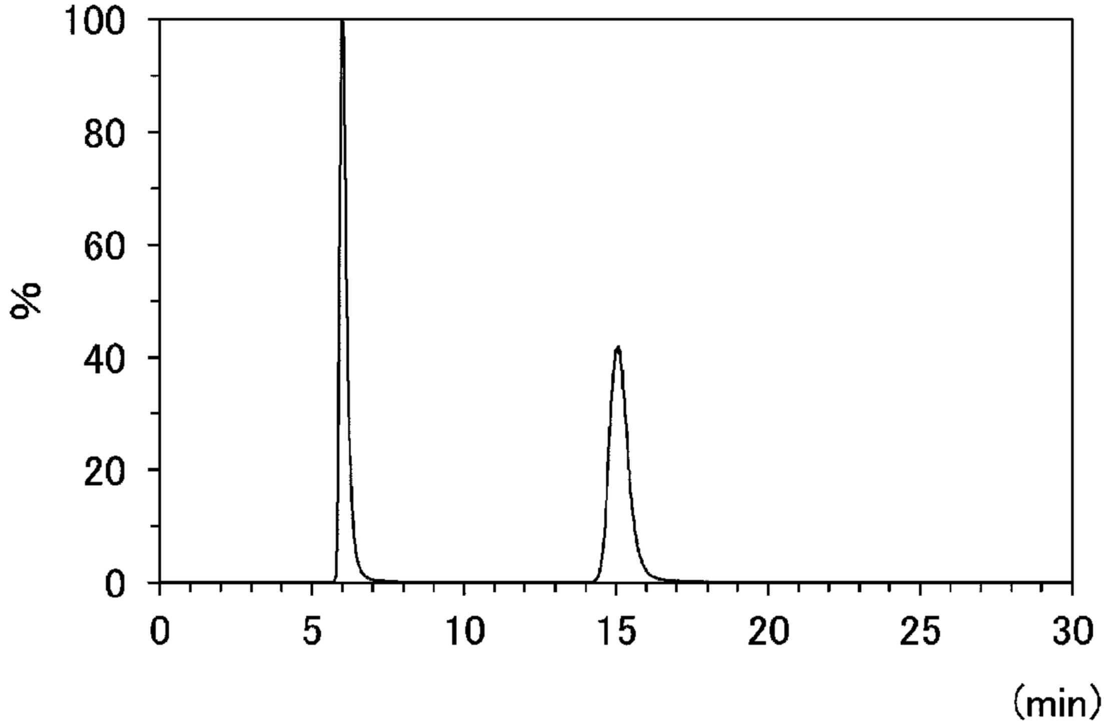


FIG. 36

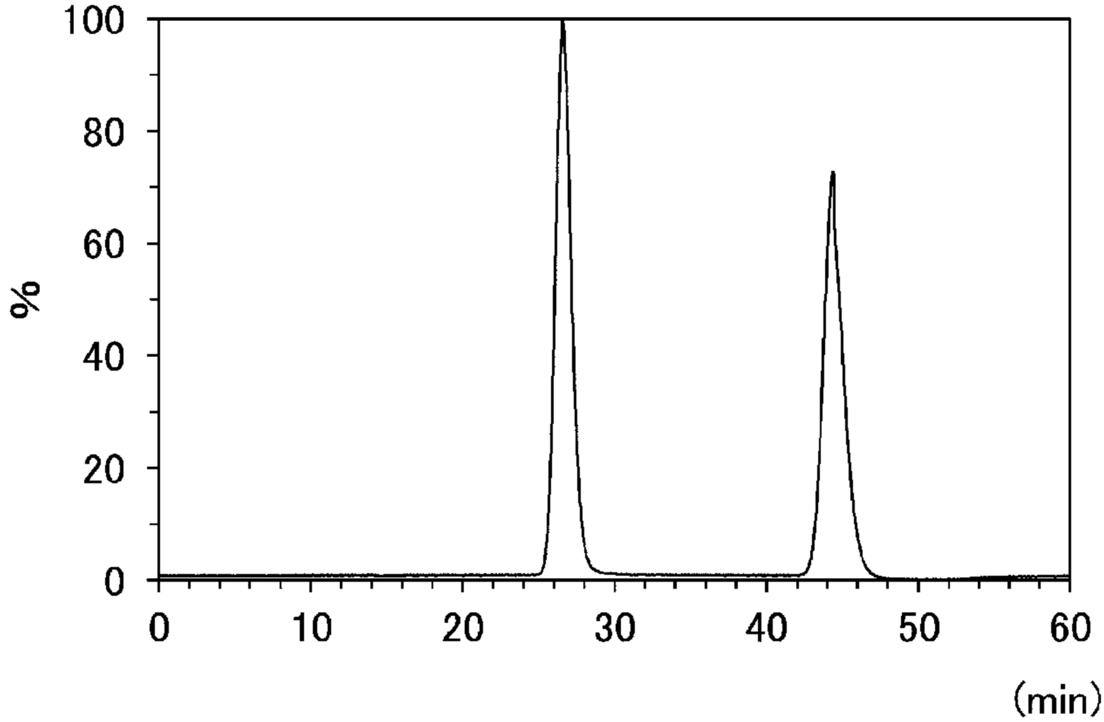


FIG. 37

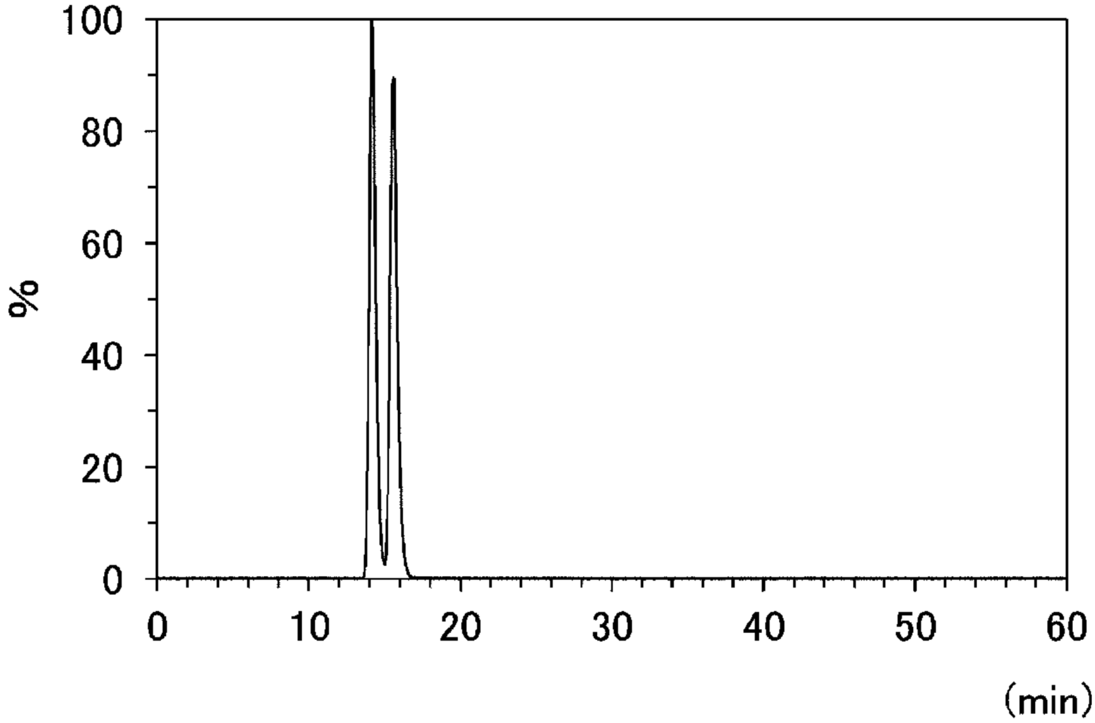


FIG. 38

**INTERNATIONAL SEARCH REPORT**

International application No. **PCT/JP2024/021733**

**A. CLASSIFICATION OF SUBJECT MATTER**

***G01N 30/26***(2006.01)i; ***B01J 20/281***(2006.01)i; ***B01J 20/283***(2006.01)i; ***B01J 20/29***(2006.01)i; ***G01N 30/88***(2006.01)i
FI: G01N30/26 A; B01J20/281 X; B01J20/283; B01J20/29; G01N30/88 C

According to International Patent Classification (IPC) or to both national classification and IPC

**B. FIELDS SEARCHED**

Minimum documentation searched (classification system followed by classification symbols)

G01N30/26; B01J20/281; B01J20/283; B01J20/29; G01N30/88

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); Scopus

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2014-29313 A (MITSUBISHI CHEMICAL CORPORATION) 13 February 2014 (2014-02-13)<br>paragraphs [0001]-[0004], [0006], [0125], [0132]-[0136], fig. 1 | 1, 3-4, 6-7<br><br>2 |
| X<br><br>Y | TASCHWER, M. et al., Development of an enantioseparation method for novel psychoactive drugs by HPLC using a Lux Cellulose-2 column in polar organic phase mode, Forensic Science International, 2017, vol. 270, pp. 232-240, doi: 10.1016/j.forsciint.2016.10.011<br>abstract, page 233, left column, paragraph 11, right column, paragraphs 5 and 8, page 234, left column, paragraph 2, page 237, left column, paragraph 3, tables 1, 3B, 3D | 1, 3-4, 6-7<br><br>2 |
| Y | JP 2015-87261 A (UNIV. OSAKA PREFECTURE) 07 May 2015 (2015-05-07)<br>paragraphs [0019], [0023] | 2 |
| Y | JP 2006-133159 A (DAICEL CHEM.) 25 May 2006 (2006-05-25)<br>claim 3, paragraph [0049] | 2 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 August 2024** | **27 August 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/021733**

**C. DOCUMENTS CONSIDERED TO BE RELEVANT**

| Category* | Citation of document, with indication, where appropriate, of the relevant passages | Relevant to claim No. |
|---|---|---|
| Y | JP 2019-196948 A (NISSHIN OILLIO GROUP LTD.) 14 November 2019 (2019-11-14) paragraphs [0014], [0017] | 2 |
| A | JP 2016-524166 A (SCINOPHARM TAIWAN LTD.) 12 August 2016 (2016-08-12) paragraph [0024] | 1-7 |
| A | JP 2010-505110 A (COUNCIL SCIENT IND. RES.) 18 February 2010 (2010-02-18) entire text, all drawings | 1-7 |
| P, A | JP 2023-161874 A (DAICEL CORP.) 08 November 2023 (2023-11-08) entire text, all drawings | 1-7 |

Form PCT/ISA/210 (second sheet) (July 2022)

**INTERNATIONAL SEARCH REPORT**
**Information on patent family members**

International application No.
**PCT/JP2024/021733**

| Patent document cited in search report | Publication date (day/month/year) | Patent family member(s) | Publication date (day/month/year) |
|---|---|---|---|
| JP 2014-29313 A | 13 February 2014 | US 2014/0021136 A1<br>paragraphs [0001]-[0005], [0009], [0191]-[0206], [0213]-[0217], fig. 1 | |
| JP 2015-87261 A | 07 May 2015 | (Family: none) | |
| JP 2006-133159 A | 25 May 2006 | (Family: none) | |
| JP 2019-196948 A | 14 November 2019 | (Family: none) | |
| JP 2016-524166 A | 12 August 2016 | WO 2015/005928 A1<br>paragraph [0035]<br>CN 105431733 A<br>KR 10-2016-0030963 A | |
| JP 2010-505110 A | 18 February 2010 | US 2010/0286425 A1<br>entire text, all drawings<br>US 2013/0317244 A1<br>WO 2008/038300 A1<br>KR 10-2009-0083895 A<br>CN 101568380 A | |
| JP 2023-161874 A | 08 November 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **A. ISHIKAWA ; T. SHIBATA**. Cellulosic Chiral Stationary Phase Under Reversed-Phase Condition. *Journal of Liquid Chromatography*, 1993, vol. 16, 859-878
- **R. WILLIAMS**. pKa Data Compiled. American Chemical Society